# EUROPEAN PATENT SPECIFICATION

(11) **EP 1 924 653 B1**
(45) Date of publication and mention of the grant of the patent: **09.12.2015**
(21) Application number: 06802556.8
(22) Date of filing: 25.08.2006
(51) Int. Cl.: C09D 5/08, C09F 7/12, C08K 3/22, C08K 3/34, C08K 9/04

(54) **COATING COMPOSITIONS EXHIBITING CORROSION RESISTANCE PROPERTIES, RELATED COATED SUBSTRATES, AND METHODS**
BESCHICHTUNGSZUSAMMENSETZUNGEN MIT KORROSIONSSCHUTZEIGENSCHAFTEN, DAMIT BESCHICHTETE SUBSTRATE UND ENTSPRECHENDE VERFAHREN
COMPOSITIONS DE REVETEMENT PRESENTANT DES PROPRIETES DE RESISTANCE A LA CORROSION, SUBSTRATS REVETUS ASSOCIES ET PROCEDES

(30) Priority: 26.08.2005 US 213136; 20.03.2006 US 384970
(43) Date of publication of application: 28.05.2008
(60) Divisional application: 12003913.6
(73) Proprietor: PPG Industries Ohio, Inc., Cleveland, OH 44111 (US)
(72) Inventor: MILLERO, Edward, R., Gibsonia, Pennsylvania 15044 (US); SCHNEIDER, John, R., Glenshaw, Pennsylvania 15116 (US); HUNG, Cheng-Hung, Wexford, Pennsylvania 15090 (US); VANIER, Noel, R., Wexford, Pennsylvania 15090 (US); RAGUNATHAN, Kaliappa, G., Gibsonia, Pennsylvania 15044 (US)
(74) Representative: f & e patent
(86) International application number: PCT/US2006/033706
(87) International publication number: WO 2007/025297

(56) References cited:
- EP-A2- 0 787 830
- WO-A-02/062907
- WO-A-03/070837
- WO-A1-2004/009717
- DE-A1- 10 308 237
- GB-A- 2 403 214
- US-A- 5 597 512
- US-A- 5 869 140
- US-A1- 2003 158 316
- US-A1- 2005 137 291
- US-B1- 6 395 084
- HAIXING Z ET AL: "An Alternative to Anodization: Sol-Gel Solutions for Metal Finishing" METAL FINISHING, ELSEVIER, NEW YORK, NY, US, vol. 96, no. 12, December 1998 (1998-12), pages 35-36,38, XP004145116 ISSN: 0026-0576
- SALMON R ET AL: "PREPARATION OF COLLOIDAL MAGNESIUM-ALUMINUM-SILICATES BY HYDROLYSIS OF A MIXED ALKOXIDE*" CERAMICS INTERNATIONAL, ELSEVIER, AMSTERDAM, NL, vol. 16, no. 3, January 1990 (1990-01), pages 157-163, XP000133406 ISSN: 0272-8842
- CARDOSO W S ET AL: "Synthesis and acidic properties of the SiO2/SnO2 mixed oxides obtained by the sol-gel process. Evaluation of immobilized copper hexacyanoferrate as an electrochemical probe" SOLID STATE IONICS, NORTH HOLLAND PUB. COMPANY. AMSTERDAM, NL, vol. 167, no. 1-2, 12 February 2004 (2004-02-12), pages 165-173, XP004496482 ISSN: 0167-2738

## Description

### FIELD OF THE INVENTION

The present invention relates to coating compositions that comprise corrosion resisting particles such that the coating compositions exhibit corrosion resistance properties. The present invention also relates to substrates at least partially coated with a coating deposited from such a composition and multi-component composite coatings, wherein at least one coating layer is deposited from such a coating composition.

### BACKGROUND OF THE INVENTION

Coating systems that are deposited onto a substrate and cured, such as "color-plus-clear" and "monocrat" coating systems, can be subject to damage from the environment. For example, corrosion of a coated metallic substrate can occur as the substrate is exposed to oxygen and water present in the atmosphere. As a result, a "primer" coating layer is often used to protect the substrate from corrosion. The primer layer is often applied directly to a bare or pretreated metallic substrate. In some cases, particularly where the primer layer is to be applied over a bare metallic substrate, the primer layer is deposited from a composition that includes a material, such as an acid, such as phosphoric acid, which enhances the adhesion of the primer layer to the substrate. Such primers are sometimes known as "etch primers".

As indicated, in some cases metallic substrates are "pretreated" before a primer coating layer is applied (if such a primer coating is used). Such "pretreatments" often involve the application of a phosphate conversion coating, followed by a rinse, prior to the application of a protective or decorative coating. The pretreatment often acts to passivate the metal substrate and promotes corrosion resistance.

Historically, corrosion resistant "primer" coatings and metal pretreatments have utilized chromium compounds and/or other heavy metals, such as lead, to achieve a desired level of corrosion resistance and adhesion to subsequently applied coatings. For example, metal pretreatments often utilize phosphate conversion coating compositions that contain heavy metals, such as nickel, and post-rinses that contain chrome. In addition, the compositions used to produce a corrosion resistant "primer" coating often contain chromium compounds. An example of such a primer composition is disclosed in United States Patent No. 4,069,187. The use of chromium and/or other heavy metals, however, results in the production of waste streams that pose environmental concerns and disposal issues.

More recently, efforts have been made to reduce or eliminate the use of chromium and/or other heavy metals. As a result, coating compositions have been developed that contain other materials added to inhibit corrosion. These materials have included, for example, zinc phosphate, iron phosphate, zinc molybdate, and calcium molybdate particles, among others, and typically comprise particles having a particle size of approximately a micron or larger. The corrosion resistance capability of such compositions, however, has been inferior to their chrome containing counterparts. WO 2004009717 discloses Chromate-free primer compositions. EP0787830 teaches chromium-free anti-corrosive coating compositions.

As a result, it would be desirable to provide coating compositions that are substantially free of chromium and/or other heavy metals, wherein the compositions can, in at least some cases, exhibit corrosion resistance properties superior to a similar non-chrome containing composition. In addition, it would be desirable to provide methods for treating metal substrates, including bare metal substrates, to improve the corrosion resistance of such substrates, wherein the method does not involve the use of chromium and/or other heavy metals.

### SUMMARY OF THE INVENTION

In certain respects, the present invention is directed to primer and/or pretreatment coating compositions, such as etch-primers, comprising: (a) an adhesion promoting component; and (b) corrosion resisting particles as defined in the appended claims.

In some respects, the present invention is directed to methods for improving the corrosion resistance properties of a primer and/or pretreatment coating composition, such as an etch-primer.

The present invention is directed to coating compositions, such as metal substrate primer and/or pretreatment coating compositions, that comprise (a) an adhesion promoting component, and (b) corrosion resisting particles having a calculated equivalent spherical diameter of no more than 200 nanometers and comprising a plurality of inorganic oxides as specified in the claims. In certain embodiments, at least one inorganic oxide comprises zinc, cerium, yttrium, manganese, magnesium, molybdenum, lithium, aluminum, or calcium.

In some respects, the present invention is directed to coating compositions, such as metal substrate primer and/or pretreatment coating compositions, that comprise (a) an adhesion promoting component, and (b) corrosion resisting particles having an average primary particle size of no more than 100 nanometers and comprising a plurality of inorganic oxides. In certain embodiments, at least one inorganic oxide comprises zinc, cerium, yttrium, manganese, magnesium, molybdenum, lithium, aluminum, or calcium.

The present invention also relates to methods for enhancing the corrosion resistance of a metal substrate. Such methods comprise coating at least a portion of a bare metal substrate with a primer and/or pretreatment coating composition that comprises (a) an adhesion promoting component, and (b) corrosion resisting particles as specified in the claims.

### BRIEF DESCRIPTION OF THE DRAWINGS

FIG. 1 is a flowchart depicted the steps of certain methods for making ultrafine solid particles in accordance with certain embodiments of the present invention;
FIG. 2 is a schematic view of an apparatus for producing ultrafine solid particles in accordance with certain embodiments of the present invention; and
FIG. 3 is a detailed perspective view of a plurality of quench stream injection ports in accordance with certain embodiments of the present invention.

### DETAILED DESCRIPTION OF EMBODIMENTS OF THE INVENTION

For purposes of the following detailed description, it is to be understood that the invention may assume various alternative variations and step sequences, except where expressly specified to the contrary. Each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. For example, and without limitation, this application refers to coating compositions that, in certain embodiments, comprise a "film-forming resin." Such references to "a film-forming resin" is meant to encompass coating compositions comprising one film-forming resin as well as coating compositions that comprise a mixture of two or more film-forming resins. In addition, in this application, the use of "or" means "and/or" unless specifically stated otherwise, even though "and/or" may be explicitly used in certain instances.

In certain embodiments, the present invention is directed to coating compositions that are substantially free of chromium containing material. In other embodiments, the coating compositions of the present invention are completely free of such a material. As used herein, the term "substantially free" means that the material being discussed is present in the composition, if at all, as an incidental impurity. In other words, the material does not affect the properties of the composition. This means that, in certain embodiments of the present invention, the coating composition contains less than 2 weight percent of chromium containing material or, in some cases, less than 0.05 weight percent of chromium containing material, wherein such weight percents are based on the total weight of the composition. As used herein, the term "completely free" means that the material is not present in the composition at all. Thus, certain embodiments of the coating compositions of the present invention contain no chromium-containing material. As used herein, the term "chromium containing material" refers to materials that include a chromium trioxide group, CrO₃. Non-limiting examples of such materials include chromic acid, chromium trioxide, chromic acid anhydride, dichromate salts, such as ammonium dichromate, sodium dichromate, potassium dichromate, and calcium, barium, magnesium, zinc, cadmium, and strontium dichromate.

Certain embodiments of the coating compositions of the present invention are substantially free of other undesirable materials, including heavy metals, such as lead and nickel. In certain embodiments, the coating compositions of the present invention are completely free of such materials.

As indicated, the coating compositions of the present invention comprise "corrosion resisting particles." As used herein, the term "corrosion resisting particles" refers to particles which, when included in a coating composition that is deposited upon a substrate, act to provide a coating that resists or, in some cases, even prevents, the alteration or degradation of the substrate, such as by a chemical or electrochemical oxidizing process, including rust in iron containing substrates and degradative oxides in aluminum substrates.

In certain embodiments, the present disclosure is directed to coating compositions that comprise corrosion resisting particles comprising an inorganic oxide, in some embodiments a plurality of inorganic oxides, such as, for example, zinc oxide (ZnO), magnesium oxide (MgO), cerium oxide (CeO₂), molybdenum oxide (MoO₃), and/or silicon dioxide (SiO₂), among others. As used herein, the term "plurality" means two or more. Therefore, certain embodiments of coating compositions of the present invention comprise corrosion resisting particles comprising two, three, four, or more than four inorganic oxides. In certain embodiments, these inorganic oxides are present in such particles, for example, in the form of a homogeneous mixture or a solid-state solution of the plurality of oxides.

In certain embodiments of the coating compositions of the present disclosure, the corrosion resisting particles comprising an inorganic oxide, or, in certain embodiments, a plurality thereof, comprise an oxide of zinc, cerium, yttrium, manganese, magnesium, molybdenum, lithium, aluminum, magnesium, tin, or calcium. In certain embodiments, the particles comprise an oxide of magnesium, zinc, cerium, or calcium. In certain embodiments, the particles also comprise an oxide of boron, phosphorous, silicon, zirconium, iron, or titanium. In certain embodiments, the particles comprise silicon dioxide (hereinafter identified as "silica").

In certain embodiments, the corrosion resisting particles that are included within certain embodiments of the coating compositions of the present invention comprise a plurality of inorganic oxides selected from (i) particles comprising an oxide of cerium, zinc, and silicon; (ii) particles comprising an oxide of calcium, zinc and silicon; (iii) particles comprising an oxide of phosphorous, zinc and silicon; (iv) particles comprising an oxide of yttrium, zinc, and silicon; (v) particles comprising an oxide of molybdenum, zinc, and silicon; (vi) particles comprising an oxide of boron, zinc, and silicon; (vii) particles comprising an oxide of cerium, aluminum, and silicon, (viii) particles comprising oxides of magnesium or tin and silicon, and (ix) particles comprising an oxide of cerium, boron, and silicon, or a mixture of two or more of particles (i) to (ix).

In certain embodiments, the corrosion resisting particles included in the coating compositions of the present invention are substantially free, or, in some cases, completely free of an oxide of zirconium. In certain embodiments, this means that the corrosion resisting particles contain less than 1 percent by weight zirconium oxide or, in some cases, less than 0.05 percent by weight zirconium oxide, wherein such wight percents are based on the total weight of the particle.

In certain embodiments of the coating compositions of the present invention, the corrosion resisting particles comprise 10 to 25 percent by weight zinc oxide, 0.5 to 25 percent by weight cerium oxide, and 50 to 89.5 percent by weight silica, wherein the percents by weight are based on the total weight of the particle. In certain embodiments, such particles are substantially free, or, in some cases, completely free of zirconium.

In other embodiments of the coating compositions of the present invention, the corrosion resisting particles comprise 10 to 25 percent by weight zinc oxide, 0.5 to 25 percent by weight calcium oxide, and 50 to 89.5 percent by weight silica, wherein the percents by weight are based on the total weight of the particle. In certain embodiments, such particles are substantially free, or, in some cases, completely free of zirconium.

In still other embodiments of the coating compositions of the present invention, the corrosion resisting particles comprise 10 to 25 percent by weight zinc oxide, 0.5 to 25 percent by weight yttrium oxide, and 50 to 89.5 percent by weight silica, wherein the percents by weight are based on the total weight of the particle. In certain embodiments, such particles are substantially free, or, in some cases, completely free of zirconium.

In yet other embodiments of the coating compositions of the present invention, the corrosion resisting particles comprise 10 to 25 percent by weight zinc oxide, 0.5 to 50 percent by weight phosphorous oxide, and 25 to 89.5 percent by weight silica, wherein the percents by weight are based on the total weight of the particle. In certain embodiments, such particles are substantially free, or, in some cases, completely free of zirconium.

In some embodiments of the coating compositions of the present invention, the corrosion resisting particles comprise 10 to 25 percent by weight zinc oxide, 0.5 to 50 percent by weight boron oxide, and 25 to 89.5 percent by weight silica, wherein the percents by weight are based on the total weight of the particle. In certain embodiments, such particles are substantially free, or, in some cases, completely free of zirconium.

In certain embodiments of the coating compositions of the present invention, the corrosion resisting particles comprise 10 to 25 percent by weight zinc oxide, 0.5 to 50 percent by weight molybdenum oxide, and 25 to 89.5 percent by weight silica, wherein the percents by weight are based on the total weight of the particle. In certain embodiments, such particles are substantially free, or, in some cases, completely free of zirconium.

In other embodiments of the coating compositions of the present invention, the corrosion resisting particles comprise 0.5 to 25 percent by weight cerium oxide, 0.5 to 50 percent by weight boron oxide, and 25 to 99 percent by weight silica, wherein the percents by weight are based on the total weight of the particle. In certain embodiments, such particles are substantially free, or, in some cases, completely free of zirconium.

In still other embodiments of the coating compositions of the present invention, the corrosion resisting particles comprise 0.5 to 25 percent by weight cerium oxide, 0.5 to 50 percent by weight aluminum oxide, and 25 to 99 percent by weight silica, wherein the percents by weight are based on the total weight of the particle. In certain embodiments, such particles are substantially free, or, in some cases, completely free of zirconium.

In yet other embodiments of the coating compositions of the present invention, the corrosion resisting particles comprise 0.5 to 25 percent by weight cerium oxide, 0.5 to 25 percent by weight zinc oxide, 0.5 to 25 percent by weight boron oxide, and 25 to 98.5 percent by weight silica, wherein the percents by weight are based on the total weight of the particle. In certain embodiments, such particles are substantially free, or, in some cases, completely free of zirconium.

In certain embodiments of the coating compositions of the present invention, the corrosion resisting particles comprise 0.5 to 25 percent by weight yttrium oxide, 0.5 to 25 percent by weight phosphorous oxide, 0.5 to 25 percent by weight zinc oxide, and 25 to 98.5 percent by weight silica, wherein the percents by weight are based on the total weight of the particle. In certain embodiments, such particles are substantially free, or, in some cases, completely free of zirconium.

In certain embodiments of the coating compositions of the present invention, the corrosion resisting particles comprise 0.5 to 75 percent by weight magnesium or tin oxide, and 25 to 99.5 percent by weight silica, wherein the percents by weight are based on the total weight of the particle. In certain embodiments, such particles are substantially free, or, in some cases, completely free of zirconium.

In some embodiments of the coating compositions of the present invention, the corrosion resisting particles comprise 0.5 to 5 percent by weight yttrium oxide, 0.5 to 5 percent by weight molybdenum oxide, 0.5 to 25 percent by weight zinc oxide, 0.5 to 5 percent by weight cerium oxide and 60 to 98 percent by weight silica, wherein the percents by weight are based on the total weight of the particles. In certain embodiments, such particles are substantially free, or, in some cases, completely free of zirconium.

Certain embodiments of the coating compositions of the present invention comprise ultrafine corrosion resisting particles comprising an inorganic oxide, or in some embodiments, a plurality of inorganic oxides. As used herein, the term "ultrafine" refers to particles that have a B.E.T. specific surface area of at least 10 square meters per gram, such as 30 to 500 square meters per gram, or, in some cases, 80 to 250 square meters per gram. As used herein, the term "B.E.T. specific surface area" refers to a specific surface area determined by nitrogen adsorption according to the ASTMD 3663-78 standard based on the Brunauer-Emmett-Teller method described in the periodical "The Journal of the American Chemical Society", 60, 309 (1938).

The coating compositions of the present invention comprise corrosion resisting particles having a calculated equivalent spherical diameter of no more than 200 nanometers, such as no more than 100 nanometers, or, in certain embodiments, 5 to 50 nanometers. As will be understood by those skilled in the art, a calculated equivalent spherical diameter can be determined from the B.E.T. specific surface area according to the following equation: $Diameter \left(nanometers\right) = 6000 / \left[BET\left({m}^{2}/g\right)*ρ\left(grams/{cm}^{3}\right)\right]$

Certain embodiments of the coating compositions of the present invention comprise corrosion resisting particles having an average primary particle size of no more than 100 nanometers, such as no more than 50 nanometers, or, in certain embodiments, no more than 20 nanometers, as determined by visually examining a micrograph of a transmission electron microscopy ("TEM") image, measuring the diameter of the particles in the image, and calculating the average primary particle size of the measured particles based on magnification of the TEM image. One of ordinary skill in the art will understand how to prepare such a TEM image and determine the primary particle size based on the magnification and the Examples contained herein illustrate a suitable method for preparing a TEM image. The primary particle size of a particle refers to the smallest diameter sphere that will completely enclose the particle. As used herein, the term "primary particle size" refers to the size of an individual particle as opposed to an agglomeration of two or more individual particles.

In certain embodiments, the corrosion resisting particles have an affinity for the medium of the composition sufficient to keep the particles suspended therein. In these embodiments, the affinity of the particles for the medium is greater than the affinity of the particles for each other, thereby reducing or eliminating agglomeration of the particles within the medium.

The shape (or morphology) of the corrosion resisting particles can vary. For example, generally spherical morphologies can be used, as well as particles that are cubic, platy, or acicular (elongated or fibrous).

The ultrafine corrosion resisting particles that are included in certain embodiments of the coating compositions of the present invention may be prepared by various methods, including gas phase synthesis processes, such as, for example, flame pyrolysis, hot walled reactor, chemical vapor synthesis, among other methods. In certain embodiments, however, such particles are prepared by reacting together one or more organometallic and/or metal oxide precursors in a fast quench plasma system. In certain embodiments, the particles may be formed in such a system by: (a) introducing materials into a plasma chamber; (b) rapidly heating the materials by means of a plasma to yield a gaseous product stream; (c) passing the gaseous product stream through a restrictive convergent-divergent nozzle to effect rapid cooling and/or utilizing an alternative cooling method, such as a cool surface or quenching stream, and (d) condensing the gaseous product stream to yield ultrafine solid particles. Certain suitable fast quench plasma systems and methods for their use are described in United States Patent Nos. 5,749,937, 5,935,293, and RE37,853 E. One particular process of preparing ultrafine corrosion resisting particles suitable for use in certain embodiments of the coating compositions of the present invention comprises: (a) introducing one or more organometallic precursors and/or inorganic oxide precursors into one axial end of a plasma chamber; (b) rapidly heating the precursor stream by means of a plasma as the precursor stream flows through the plasma chamber, yielding a gaseous product stream; (c) passing the gaseous product stream through a restrictive convergent-divergent nozzle arranged coaxially within the end of the reaction chamber; and (d) subsequently cooling and slowing the velocity of the desired end product exiting from the nozzle, yielding ultrafine solid particles.

The precursor stream may be introduced to the plasma chamber as a solid, liquid, gas, or a mixture thereof. Suitable liquid precursors that may be used as part of the precursor stream include organometallics, such as, for example, cerium-2 ethylhexanoate, zinc-2 ethylhexanoate, tetraethoxysilane, calcium methoxide, triethylphosphate, lithium 2,4 pentanedionate, yttrium butoxide, molybdenum oxide bis(2,4-pentanedionate), trimethoxyboroxine, aluminum sec-butoxide, among other materials, including mixtures thereof. Suitable solid precursors that may be used as part of the precursor stream include solid silica powder (such as silica fume, fumed silica, silica sand, and/or precipitated silica), cerium acetate, cerium oxide, magnesium oxide, tin oxide, zinc oxide, and other oxides, among other materials, including mixtures thereof.

In certain embodiments, the ultrafine corrosion resisting particles that are included in certain embodiments of the coating compositions of the present invention are prepared by a method comprising: (a) introducing a solid precursor into a plasma chamber; (b) heating the precursor by means of a plasma to a selected reaction temperature as the precursor flows through the plasma chamber, yielding a gaseous product stream; (c) contacting the gaseous product stream with a plurality of quench streams injected into the plasma chamber through a plurality of quench gas injection ports, wherein the quench streams are injected at flow rates and injection angles that result in the impingement of the quench streams with each other within the gaseous product stream, thereby producing ultrafine solid particles; and (d) passing the ultrafine solid particles through a converging member.

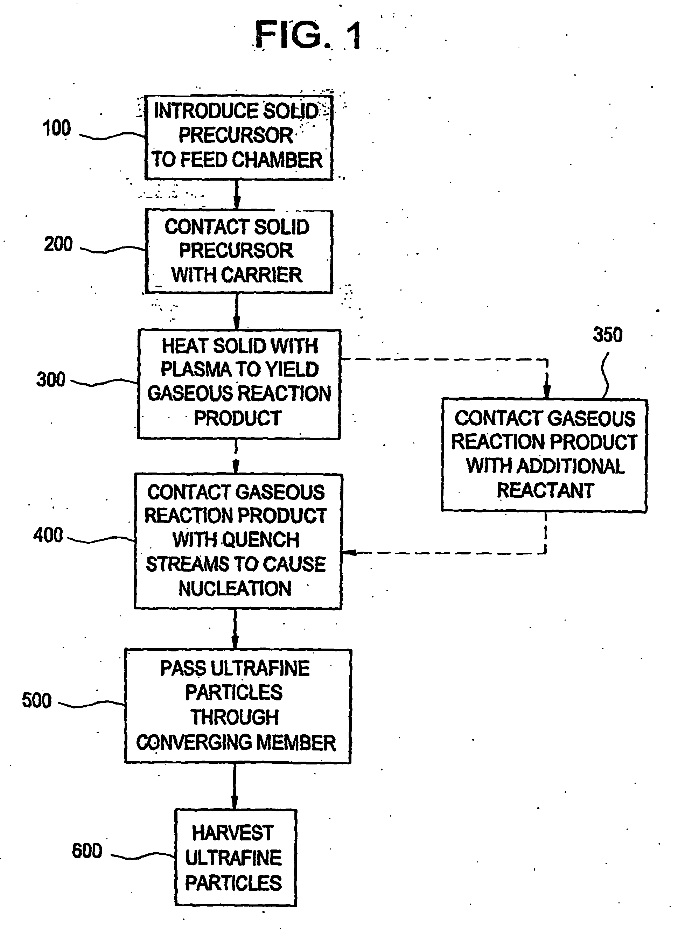

Referring now to Fig. 1, there is seen a flow diagram depicting certain embodiments of the methods for making ultrafine corrosion resisting particles in accordance with the present invention. As is apparent, in certain embodiments, at step 100, a solid precursor is introduced into a feed chamber. Then, as is apparent from Fig. 1 at step 200, in certain embodiments, the solid precursor is contacted with a carrier. The carrier may be a gas that acts to suspend the solid precursor in the gas, thereby producing a gas-stream suspension of the solid precursor. Suitable carrier gasses include, but are not limited to, argon, helium, nitrogen, oxygen, air, hydrogen, or a combination thereof.

Next, in certain embodiments, the solid precursor is heated, at step 300, by means of a plasma as the solid precursor flows through the plasma chamber, yielding a gaseous product stream. In certain embodiments, the precursor is heated to a temperature ranging from 2,500° to 20,000°C, such as 1,700° to 8,000°C.

In certain embodiments, the gaseous product stream may be contacted with a reactant, such as a hydrogen-containing material, that may be injected into the plasma chamber, as indicated at step 350. The particular material used as the reactant is not limited and may include, for example, air, water vapor, hydrogen gas, ammonia, and/or hydrocarbons, depending on the desired properties of the resulting ultrafine solid particles.

As is apparent from Fig. 1, in certain embodiments, after the gaseous product stream is produced, it is, at step 400, contacted with a plurality of quench streams that are injected into the plasma chamber through a plurality of quench stream injection ports, wherein the quench streams are injected at flow rates and injection angles that result in impingement of the quench streams with each other within the gaseous product stream. The material used in the quench streams is not limited, so long as it adequately cools the gaseous product stream to cause formation of ultrafine solid particles. Materials suitable for use in the quench streams include, but are not limited to, hydrogen gas, carbon dioxide, air, water vapor, ammonia, mono, di and polybasic alcohols, silicon-containing materials (such as hexamethyldisilazane), carboxylic acids and/or hydrocarbons.

The particular flow rates and injection angles of the various quench streams are not limited, so long as they impinge with each other within the gaseous product stream to result in the rapid cooling of the gaseous product stream to produce ultrafine solid particles. This differentiates the present invention from certain fast quench plasma systems that utilize Joule-Thompson adiabatic and isoentropic expansion through, for example, the use of a converging-diverging nozzle or a "virtual" converging diverging nozzle, to form ultrafine particles. In the present invention, the gaseous product stream is contacted with the quench streams to produce ultrafine solid particles before passing those particles through a converging member, such as, for example, a converging-diverging nozzle, which the inventors have surprisingly discovered aids in, *inter alia,* reducing the fouling or clogging of the plasma chamber, thereby enabling the production of ultrafine solid particles from solid reactants without frequent disruptions in the production process for cleaning of the plasma system. In the present invention, the quench streams primarily cool the gaseous product stream through dilution, rather than adiabatic expansion, thereby causing a rapid quenching of the gaseous product stream and the formation of ultrafine solid particles prior to passing the particles into and through a converging member, such as a converging-diverging nozzle, as described bellow.

Referring again to Fig. 1, it is seen that, after contacting the gaseous product stream with the quench streams to cause production of ultrafine solid particles, the particles are, at step 500, passed through a converging member, wherein the plasma system is designed to minimize the fouling thereof. In certain embodiments, the converging member comprises a converging-diverging (De Laval) nozzle. In these embodiments, while the convergent-divergent nozzle may act to cool the product stream to some degree, the quench streams perform much of the cooling so that a substantial amount of ultrafine solid particles are formed upstream of the convergent-divergent nozzle. In these embodiments, the convergent-divergent nozzle may primarily act as a choke position that permits operation of the plasma chamber at higher pressures, thereby increasing the residence time of the materials therein. The combination of quench stream dilution cooling with a convergent-divergent nozzle appears to provide a commercially viable method of producing ultrafine solid particles from solid precursors, since, for example, (i) a solid precursor can be used effectively without heating the feed material to a gaseous or liquid state before injection into the plasma, and (ii) fouling of the plasma system can be minimized, or eliminated, thereby reducing or eliminating disruptions in the production process for cleaning of the plasma system.

As is seen in Fig. 1, in certain embodiments of the methods of the present invention, after the ultrafine solid particles are passed through a converging member, they are harvested at step 600. Any suitable means may be used to separate the ultrafine solid particles from the gas flow, such as, for example, a bag filter or cyclone separator.

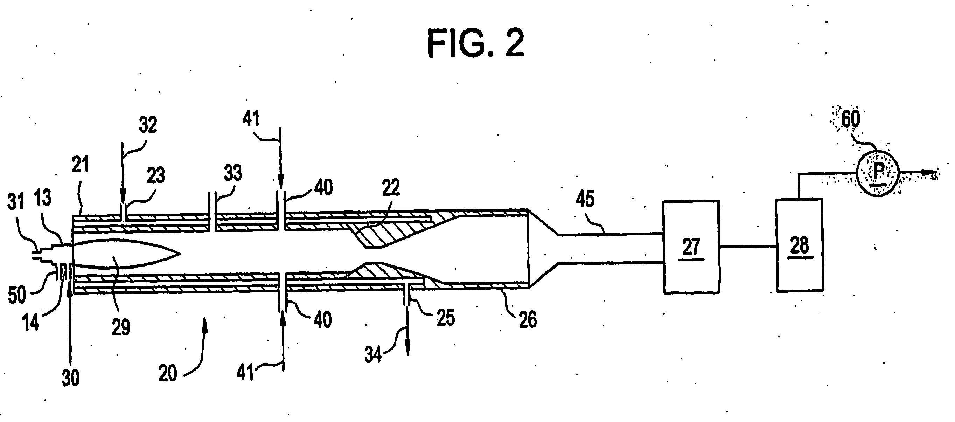

Now referring to Fig. 2, there is depicted a schematic diagram of an apparatus for producing ultrafine solid particles in accordance with certain embodiments of the present invention. As is apparent, a plasma chamber 20 is provided that includes a solid particle feed inlet 50. Also provided is at least one carrier gas feed inlet 14, through which a carrier gas flows in the direction of arrow 30 into the plasma chamber 20. As previously indicated, the carrier gas acts to suspend the solid reactant in the gas, thereby producing a gas-stream suspension of the solid reactant which flows towards plasma 29. Numerals 23 and 25 designate cooling inlet and outlet respectively, which may be present for a double-walled plasma chamber 20. In these embodiments, coolant flow is indicated by arrows 32 and 34.

In the embodiment depicted by Fig. 2, a plasma torch 21 is provided. Torch 21 vaporizes the incoming gas-stream suspension of solid reactant within the resulting plasma 29 as the stream is delivered through the inlet of the plasma chamber 20, thereby producing a gaseous product stream. As is seen in Fig. 2, the solid particles are, in certain embodiments, injected downstream of the location where the arc attaches to the annular anode 13 of the plasma generator or torch.

A plasma is a high temperature luminous gas which is at least partially (1 to 100%) ionized. A plasma is made up of gas atoms, gas ions, and electrons. A thermal plasma can be created by passing a gas through an electric arc. The electric arc will rapidly heat the gas to very high temperatures within microseconds of passing through the arc. The plasma is often luminous at temperatures above 9000 K.

A plasma can be produced with any of a variety of gases. This can give excellent control over any chemical reactions taking place in the plasma as the gas may be inert, such as argon, helium, or neon, reductive, such as hydrogen, methane, ammonia, and carbon monoxide, or oxidative, such as oxygen, nitrogen, and carbon dioxide. Air, oxygen, and/or oxygen/argon gas mixtures are often used to produce ultrafine solid particles in accordance with the present invention. In Fig. 2, the plasma gas feed inlet is depicted at 31.

As the gaseous product stream exits the plasma 29 it proceeds towards the outlet of the plasma chamber 20. As is apparent, an additional reactant, as described earlier, can be injected into the reaction chamber prior to the injection of the quench streams. A supply inlet for the reactant is shown in Fig. 2 at 33.

As is seen in Fig. 2, in certain embodiments of the present invention, the gaseous product stream is contacted with a plurality of quench streams which enter the plasma chamber 20 in the direction of arrows 41 through a plurality of quench gas injection ports 40 located along the circumference of the plasma chamber 20. As previously indicated, the particular flow rate and injection angle of the quench streams is not limited so long as they result in impingement of the quench streams 41 with each other within the gaseous reaction product stream, in some cases at or near the center of the gaseous product stream, to result in the rapid cooling of the gaseous product stream to produce ultrafine solid particles. This results in a quenching of the gaseous product stream through dilution to form ultrafine solid particles.

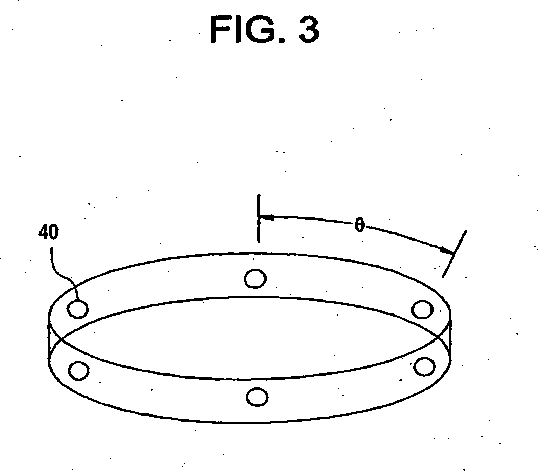

Referring now to Fig. 3, there is depicted a perspective view of a plurality of quench gas injection ports 40 in accordance with certain embodiments of the present invention. In this particular embodiment, six (6) quench gas injection ports are depicted, wherein each port disposed at an angle "θ" apart from each other along the circumference of the reactor chamber 20. It will be appreciated that "θ" may have the same or a different value from port to port. In certain embodiments of the present invention, at least four (4) quench stream injection ports 40 are provided, in some cases at least six (6) quench stream injection ports are present or, in other embodiments, twelve (12) or more quench stream injection ports are present. In certain embodiments, each angle "θ" has a value of no more than 90°. In certain embodiments, the quench streams are injected into the plasma chamber normal (90° angle) to the flow of the gaseous reaction product. In some cases, however, positive or negative deviations from the 90° angle by as much as 30° may be used.

In certain methods of the present invention, contacting the gaseous product stream with the quench streams results in the formation of ultrafine solid particles, which are then passed into and through a converging member. As used herein, the term "converging member" refers to a device that restricts passage of a flow therethrough, thereby controlling the residence time of the flow in the plasma chamber due to pressure differential upstream and downstream of the converging member.

In certain embodiments, the converging member comprises a convergent-divergent (De Laval) nozzle, such as that which is depicted in Fig. 2, which is positioned within the outlet of the reactor chamber 20. The converging or upstream section of the nozzle, i.e., the converging member, restricts gas passage and controls the residence time of the materials within the plasma chamber 20. It is believed that the contraction that occurs in the cross sectional size of the gaseous stream as it passes through the converging portion of nozzle 22 changes the motion of at least some of the flow from random directions, including rotational and vibrational motions, to a straight line motion parallel to the reaction chamber axis. In certain embodiments, the dimensions of the plasma chamber 20 and the material are selected to achieve sonic velocity within the restricted nozzle throat.

As the confined stream of flow enters the diverging or downstream portion of the nozzle 22, it is subjected to an ultra fast decrease in pressure as a result of a gradual increase in volume along the conical walls of the nozzle exit By proper selection of nozzle dimensions, the plasma chamber 20 can be operated at atmospheric pressure, or slightly less than atmospheric pressure, or, in some cases, at a pressurized condition, to achieve the desired residence time, while the chamber 26 downstream of the nozzle 22 is maintained at a vacuum pressure by operation of a vacuum producing device, such as a vacuum pump 60. Following passage through nozzle 22, the ultrafine solid particles may then enter a cool down chamber 26.

As is apparent from Fig. 2, in certain embodiments of the present invention, the ultrafine solid particles may flow from cool down chamber 26 to a collection station 27 via a cooling section 45, which may comprise, for example, a jacketed cooling tube. In certain embodiments, the collection station 27 comprises a bag filter or other collection means. A downstream scrubber 28 may be used if desired to condense and collect material within the flow prior to the flow entering vacuum pump 60.

In certain embodiments, the residence times for materials within the plasma chamber 20 are on the order of milliseconds. The solid precursor may be injected under pressure (such as greater than 1 to 100 atmospheres) through a small orifice to achieve sufficient velocity to penetrate and mix with the plasma. In addition, in many cases the injected stream of solid precursor is injected normal (90° angle) to the flow of the plasma gases. In some cases, positive or negative deviations from the 90° angle by as much as 30° may be desired.

The high temperature of the plasma rapidly vaporizes the solid precursor. There can be a substantial difference in temperature gradients and gaseous flow patterns along the length of the plasma chamber 20. It is believed that, at the plasma arc inlet, flow is turbulent and there is a high temperature gradient; from temperatures of about 20,000 K at the axis of the chamber to about 375 K at the chamber walls. At the nozzle throat, it is believed, the flow is laminar and there is a very low temperature gradient across its restricted open area.

The plasma chamber is often constructed of water cooled stainless steel, nickel, titanium, copper, aluminum, or other suitable materials. The plasma chamber can also be constructed of ceramic materials to withstand a vigorous chemical and thermal environment.

The plasma chamber walls may be internally heated by a combination of radiation, convection, and conduction. In certain embodiments, cooling of the plasma chamber walls prevents unwanted melting and/or corrosion at their surfaces. The system used to control such cooling should maintain the walls at as high a temperature as can be permitted by the selected wall material, which often is inert to the materials within the plasma chamber at the expected wall temperatures. This is true also with regard to the nozzle walls, which may be subjected to heat by convection and conduction.

The length of the plasma chamber is often determined experimentally by first using an elongated tube within which the user can locate the target threshold temperature. The plasma chamber can then be designed long enough so that precursors have sufficient residence time at the high temperature to reach an equilibrium state and complete the formation of the desired end products.

The inside diameter of the plasma chamber 20 may be determined by the fluid properties of the plasma and moving gaseous stream. It should be sufficiently great to permit necessary gaseous flow, but not so large that recirculating eddys or stagnant zones are formed along the walls of the chamber. Such detrimental flow patterns can cool the gases prematurely and precipitate unwanted products. In many cases, the inside diameter of the plasma chamber 20 is more than 100% of the plasma diameter at the inlet end of the plasma chamber.

In certain embodiments, the converging section of the nozzle has a high aspect ratio change in diameter that maintains smooth transitions to a first steep angle (such as > 45°) and then to lesser angles (such as < 45°degree.) leading into the nozzle throat. The purpose of the nozzle throat is often to compress the gases and achieve sonic velocities in the flow. The velocities achieved in the nozzle throat and in the downstream diverging section of the nozzle are controlled by the pressure differential between the plasma chamber and the section downstream of the diverging section of the nozzle. Negative pressure can be applied downstream or positive pressure applied upstream for this purpose. A converging-diverging nozzle of the type suitable for use in the present invention is described in United States Patent No. RE37,853 at col. 9, line 65 to col. 11, line 32.

It has been surprisingly discovered that the methods and apparatus for making ultrafine solid particles of the present invention, which utilize quench gas dilution cooling in combination with a converging member, such as a converging-diverging nozzle, has several benefits. First, such a combination allows for the use of sufficient residence times of solid material within the plasma system that make the use of solid precursors practical. Second, because ultrafine solid particles are formed prior to the flow reaching the converging member, fouling of the plasma chamber is reduced or, in some cases, even eliminated, since the amount of material sticking to the interior surface of the converging member is reduced or, in some cases, eliminated. Third, this combination allows for the collection of ultrafine solid particles at a single collection point, such as a filter bag, with a minimal amount of such particles being deposited within the cooling chamber or cooling section described earlier.

In certain embodiments of the coating compositions of the present invention, the corrosion resisting particles comprise an inorganic oxide network comprising one or more inorganic materials. As used herein, the term "inorganic oxide network comprising one or more inorganic materials" refers to a molecular chain comprising one, or, in some cases, two or more different inorganic materials chemically connected to each other through one or more oxygen atoms. Such a network may be formed from hydrolysis of metal salts, examples of which include, but are not limited to, Ce³⁺, Ce⁴⁺, Zn²⁺, Mg²⁺, Y³⁺, Ca²⁺, Mn⁷⁺, and Mo⁶⁺. In certain embodiments, the inorganic oxide network comprises zinc, cerium, yttrium, manganese, magnesium, or calcium. In certain embodiments, the inorganic oxide network also comprises silicon, phosphorous, and/or boron. In certain embodiments, the inorganic oxide network comprises cerium, zinc, zirconium, and/or manganese, as well as silicon. In certain embodiments, the inorganic oxide network comprises 0.5 to 30 percent by weight cerium and 0.5 to 20 percent by weight zinc, with the weight percents being based on the total weight of the material.

In certain embodiments, the inorganic oxide network comprises silicon resulting from the hydrolysis of an organosilane, such as silanes comprising two, three, four, or more alkoxy groups. Specific examples.of suitable organosilanes include methyltrimethoxysilane, methyltriethoxysilane, methyltrimethoxysilane, methyltriacetoxysilane, methyltripropoxysilane, methyltributoxysilane, ethyltrimethoxysilane, ethyltriethoxysilane, γ-meth-acryloxypropyltrimethoxysilane, γ-aminopropyltrimethoxysilane, γ-aminopropyltriethoxysilane, γ-mercaptopropyltrimethoxysilane, chloromethyltrimethoxysilane, chloromethytriethoxysilane, dimethyldiethoxysilane, γ-chloropropylmethyldimethoxysilane, γ-chloropropylmethyldiethoxysilane, tetramethoxysilane, tetraethoxysilane, tetra-n-propoxysilane, tetra-n-butoxysilane, glycidoxymethyltriethoxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxy-propyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropylmethyldimethoxysilane, γ-glycidoxy-propyldimethylethoxysilane, hydrolyzates thereof, oligomers thereof and mixtures of such silane monomers. In certain embodiments, the inorganic oxide network comprises silicon resulting from a silicate, such as potassium silicate, sodium silicate, and/or ammonium silicate.

In certain embodiments, the inorganic oxide network is formed by combining one, or in some cases, two or more metal salts, such as metal acetates, chlorides, sulfates, and/or nitrates, with water to produce a hydrolyzed species comprising a polyvalent metal ion. The hydrolyzed species is then reacted with a suitable silicon compound (or phosphorous or boron as the case may be) to produce an inorganic oxide network comprising one or more inorganic materials. The resulting solid material may then be filtered, washed, and dried. The resulting dried powder may, if desired, be calcined at a temperature of, for example, 200 to 1,000°F 93,3 to 537,8 °C. The Examples herein illustrate suitable methods for making such corrosion resisting particles.

In certain embodiments, the corrosion resisting particles comprising an inorganic oxide network, as described above, are ultrafine particles.

In certain embodiments of the coating compositions of the present invention, the corrosion resisting particles comprise a clay. In certain embodiments, such clays are treated with a lanthanide and/or transition metal salt. Suitable clays include, for example, layer structured Laponite® (a hydrous sodium lithium magnesium silicate modified with tetra sodium pyrophosphate commercially available from Southern Clay Products, Inc.) and bentonite (an aluminum phyllosilicate generally impure clay consisting mostly of montmorillonite, (Na,Ca)_{0.33}(Al,Mg)₂Si₄O₁₀(OH)₂·nH₂O).

Such corrosion resisting particles may be produced by adding a clay, such as the layer structured Laponite® referenced above, to a stirred dilute solution of a metal salt (up to 50% by weight metal), such as, for example, cerium acetate or zinc acetate, in water and filtering off the resulting solid precipitate. The solid precipitate may, if desired, be washed, such as with water and/or acetone, and dried.

In certain embodiments, the present invention is directed to coating compositions that comprise corrosion resisting particles comprising an inorganic oxide in combination with a pH buffering agent, such as, for example, a borate. As used herein, the term "pH buffering agent" is meant to refer to a material that adjusts the pH of the inorganic oxide to a level higher than the pH would be in the absence of the material. In certain embodiments, such corrosion resisting particles comprise a mixed metal oxide that includes borate (B₂O₃), and one or more oxides of zinc, barium, cerium, yttrium, magnesium, molybdenum, lithium, aluminum, or calcium. In certain embodiments, such a mixed oxide is deposited on and/or within a support.

As used herein, the term "support" refers to a material upon which or in which another material is carried. In certain embodiments, the corrosion resisting particles comprise an inorganic oxide, a borate, and a silica support, such as fumed silica, commercially available under the tradename Aerosil® from Degussa, or precipitated silica, such as Hi-Sil® T600 from PPG Industries, Pittsburgh, Pennsylvania. In certain embodiments, the support has an average primary particle size of no more than 20 nanometers. In certain embodiments, such corrosion resisting particles provide desirable protection against both edge corrosion and scribe-corrosion on the surface of a substrate that is exposed to anodic dissolution.

Specific non-limiting examples of suitable corrosion resisting particles comprising a mixed metal oxide including borate comprise CaO·B₂O₃, BaO·B₂O₃, ZnO·B₂O₃, and/or MgO·B₂O₃. Such corrosion resisting pigments can be produced, for example, by precipitating the such materials on the support. Such precipitation may be conducted by, for example, combining boric acid and one or more precursor materials comprising zinc, barium, cerium, yttrium, magnesium, molybdenum, lithium, aluminum, or calcium, with a slurry of water and silica, evaporating the water, and then calcining the resulting material to produce the corrosion resisting particles, which may then be milled to a desired particle size.

In certain embodiments, such particles may also comprise additional materials, such as phosphates, silicates, hydroxy-phosphates, and/or hydroxy-silicates of a metal, such as zinc or aluminum.

One or more of the previously described corrosion resisting particles are present in the coating compositions of the present invention in an amount of 3 to 50 percent by volume, such as 8 to 30 percent by volume, or, in certain embodiments, 10 to 18 percent by volume, wherein the volume percents are based on the total volume of the coating composition.

In certain embodiments, the coating compositions of the present invention comprise corrosion resisting particles comprising chemically modified particles having an average primary particle size of no more than 500 nanometers, in some cases, no more than 200 nanometers, and, in yet other cases, no more than 100 nanometers. Examples of such particles are described in United States Patent No. 6,790,904 at col. 3, line 43 to col. 8, line 46; United States Patent Application Publication No. 2003/0229157 A1 at [0021] to [0048]; United States Patent No. 6,835,458 at col. 4, line 54 to col. 7, line 58; and United States Patent No. 6,593,417 at col. 23, line 48 to col. 24, line 32. Suitable chemically modified particles are also commercially available, such as those available under the tradename NANOBYK-3650, from Byk-Chemie.

While such chemically modified particles are known in the art for providing mar and/or scratch resistance properties to coating compositions into which they are incorporated, the present inventors have surprisingly discovered that they also impart corrosion resistance properties to metal substrate primer compositions, such as etch-primers, and/or pretreatment coating compositions when such compositions are applied to a bare metal substrate. In fact, the inventors have discovered that, even when such chemically-modified particles are included in a coating composition in relatively small amounts, i.e., particle to film-forming binder weight ratios of less than 0.2, the coating composition, when deposited onto at least a portion of a bare metal substrate selected from cold rolled steel, electrogalvanized steel and aluminum and cured, sometimes produces a substrate that exhibits corrosion resistance properties similar to, or, in some cases, greater than, the corrosion resistance properties the same substrate exhibits when at least partially coated under the same conditions with a conventional chrome-containing corrosion-resistant composition (as described in more detail below). As a result, the inventors have discovered that such corrosion resisting particles can be used to replace chromium in metal substrate primer coating compositions, such as etch-primers, and/or metal pretreatment coating compositions.

As previously indicated, in certain embodiments, the coating compositions of the present invention comprise a film-forming resin. As used herein, the term "film-forming resin" refers to resins that can form a self-supporting continuous film on at least a horizontal surface of a substrate upon removal of any diluents or carriers present in the composition or upon curing at ambient or elevated temperature.

Film-forming resins that are used in the coating compositions of the present invention are, those used in automotive OEM coating compositions, automotive refinish coating compositions, industrial coating compositions, architectural coating compositions, coil coating compositions, and aerospace coating compositions.

In certain embodiments, the film-forming resin included within the coating compositions of the present invention comprises a thermosetting film-forming resin. As used herein, the term "thermosetting" refers to resins that "set" irreversibly upon curing or crosslinking, wherein the polymer chains of the polymeric components are joined together by covalent bonds. This property is usually associated with a crosslinking reaction of the composition constituents often induced, for example, by heat or radiation. *See* Hawley, Gessner G., The Condensed Chemical Dictionary, Ninth Edition., page 856; Surface Coatings, vol. 2, Oil and Colour Chemists' Association, Australia, TAFE Educational Books (1974). Curing or crosslinking reactions also may be carried out under ambient conditions. Once cured or crosslinked, a thermosetting resin will not melt upon the application of heat and is insoluble in solvents. In other embodiments, the film-forming resin included within the coating compositions of the present invention comprises a thermoplastic resin. As used herein, the term "thermoplastic" refers to resins that comprise polymeric components that are not joined by covalent bonds and thereby can undergo liquid flow upon heating and are soluble in solvents. *See* Saunders, K.J., Organic Polymer Chemistry, pp. 41-42, Chapman and Hall, London (1973).

Film-forming resins suitable for use in the coating compositions of the present invention include, for example, those formed from the reaction of a polymer having at least one type of reactive group and a curing agent having reactive groups reactive with the reactive group(s) of the polymer. As used herein, the term "polymer" is meant to encompass oligomers, and includes, without limitation, both homopolymers and copolymers. The polymers can be, for example, acrylic, saturated or unsaturated polyester, polyurethane or polyether, polyvinyl, cellulosic, acrylate, silicon-based polymers, co-polymers thereof, and mixtures thereof, and can contain reactive groups such as epoxy, carboxylic acid, hydroxyl, isocyanate, amide, carbamate and carboxylate groups, among others, including mixtures thereof.

Suitable acrylic polymers include, for example, those described in United States Patent Application Publication 2003/0158316 A1 at [00300] - [0039]. Suitable polyester polymers include, for example, those described in United States Patent Application Publication 2003/0158316 A1 at [0040] - [0046]. Suitable polyurethane polymers include, for example, those described in United States Patent Application Publication 2003/0158316 A1 at [0047] - [0052]. Suitable silicon-based polymers are defined in United States Patent No. 6,623,791 at col. 9, lines 5-10.

In certain embodiments of the present invention, the film-forming resin comprises a polyvinyl polymer, such as a polyvinyl butyral resin. Such resins may be produced by reacting a polyvinyl alcohol with an aldehyde, such as acetaldehyde, formaldehyde, or butyraldehyde, among others. Polyvinyl alcohols may be produced by the polymerization of vinyl acetate monomer and the subsequent, alkaline-catalyzed methanolysis of the polyvinyl acetate obtained. The acetalization reaction of polyvinyl alcohol and butyraldehyde is not quantitative, so the resulting polyvinyl butyral may contain a certain amount of hydroxyl groups. In addition, a small amount of acetyl groups may remain in the polymer chain.

Commercially available polyvinyl butyral resins may be used. Such resins often have an average degree of polymerization of 500 to 1000 and a degree of buyration of 57 to 70 mole percent Specific examples of suitable polyvinyl butyral resins include the MOWITAL® line of polyvinyl butyral resins commercially available from Kuraray America, Inc., New York, New York and the BUTVAR® polyvinyl butyral resins commercially available from Solutia Inc.

As indicated earlier, certain coating compositions of the present invention can include a film-forming resin that is formed from the use of a curing agent. As used herein, the term "curing agent" refers to a material that promotes "cure" of composition components. As used herein, the term "cure" means that any crosslinkable components of the composition are at least partially crosslinked. In certain embodiments, the crosslink density of the crosslinkable components, i.e., the degree of crosslinking, ranges from 5 percent to 100 percent of complete crosslinking, such as 35 percent to 85 percent of complete crosslinking. One skilled in the art will understand that the presence and degree of crosslinking, i.e., the crosslink density, can be determined by a variety of methods, such as dynamic mechanical thermal analysis (DMTA) using a Polymer Laboratories MK m DMTA analyzer, as is described in United States Patent No. 6,803,408, at col. 7, line 66 to col. 8, line 18.

Any of a variety of curing agents known to those skilled in the art may be used. For example exemplary suitable aminoplast and phenoplast resins are described in United States Patent No. 3,919,351 at col. 5, line 22 to col. 6, line 25, the cited portion of which being incorporated herein by reference. Exemplary suitable polyisocyanates and blocked isocyanates are described in United States Patent No. 4,546,045 at col. 5, lines 16 to 38; and in United States Patent No. 5,468,802 at col. 3, lines 48 to 60. Exemplary suitable anhydrides are described in United States Patent No. 4,798,746 at col. 10, lines 16 to 50; and in United States Patent No. 4,732,790 at col. 3, lines 41 to 57. Exemplary suitable polyepoxides are described in United States Patent No. 4,681,811 at col. 5, lines 33 to 58. Exemplary suitable polyacids are described in United States Patent No. 4,681,811 at col. 6, line 45 to col. 9, line 54. Exemplary suitable polyols are described in United States Patent No. 4,046,729 at col. 7, line 52 to col. 8, line 9 and col. 8, line 29 to col. 9, line 66, and in United States Patent No. 3,919,315 at col. 2, line 64 to col. 3, line 33. Examples suitable polyamines described in United States Patent No. 4,046,729 at col. 6, line 61 to col. 7, line 26, and in United States Patent No. 3,799,854 at column 3, lines 13 to 50. Appropriate mixtures of curing agents, such as those described above, may be used.

In certain embodiments, the coating compositions of the present invention are formulated as a one-component composition where a curing agent is admixed with other composition components to form a storage stable composition. In other embodiments, compositions of the present invention can be formulated as a two-component composition where a curing agent is added to a pre-formed admixture of the other composition components just prior to application.

In certain embodiments, the film-forming resin is present in the coating compositions of the present invention in an amount greater than 30 weight percent, such as 40 to 90 weight percent, or, in some cases, 50 to 90 weight percent, with weight percent being based on the total weight of the coating composition. When a curing agent is used, it may, in certain embodiments, be present in an amount of up to 70 weight percent, such as 10 to 70 weight percent; this weight percent is also based on the total weight of the coating composition.

In certain embodiments, the coating compositions of the present invention are in the form of liquid coating compositions, examples of which include aqueous and solvent-based coating compositions and electrodepositable coating compositions. The coating compositions of the present invention may also be in the form of a co-reactable solid in particulate form, i.e., a powder coating composition. Regardless of the form, the coating compositions of the present invention may be pigmented or clear, and may be used alone or in combination as primers, basecoats, or topcoats. Certain embodiments of the present invention, as discussion in more detail below, are directed to corrosion resistant primer and/or pretreatment coating compositions. As indicated, certain embodiments of the present invention are directed to metal substrate primer coating compositions, such as "etch primers," and/or metal substrate pretreatment coating compositions. As used herein, the term "primer coating composition" refers to coating compositions from which an undercoating may be deposited onto a substrate in order to prepare the surface for application of a protective or decorative coating system. As used herein, the term "etch primer" refers to primer coating compositions that include an adhesion promoting component, such as a free acid as described in more detail below. As used herein, the term "pretreatment coating composition" refers to coating compositions that can be applied at very low film thickness to a bare substrate to improve corrosion resistance or to increase adhesion of subsequently applied coating layers. Metal substrates that may be coated with such compositions include, for example, substrates comprising steel (including electrogalvanized steel, cold rolled steel, hot-dipped galvanized steel, among others), aluminum, aluminum alloys, zinc-aluminum alloys, and aluminum plated steel. Substrates that may be coated with such compositions also may comprise more than one metal or metal alloy, in that the substrate may be a combination of two or more metal substrates assembled together, such as hot-dipped galvanized steel assembled with aluminum substrates.

The metal substrate primer coating compositions and/or metal substrate pretreatment coating compositions of the present invention may be applied to bare metal. By "bare" is meant a virgin material that has not been treated with any pretreatment compositions, such as, for example, conventional phosphating baths, heavy metal rinses, etc. Additionally, bare metal substrates being coated with the primer coating compositions and/or pretreatment coating compositions of the present invention may be a cut edge of a substrate that is otherwise treated and/or coated over the rest of its surface.

Before applying a primer coating composition of the present invention and/or a metal pretreatment composition of the present invention, the metal substrate to be coated may first be cleaned to remove grease, dirt, or other extraneous matter. Conventional cleaning procedures and materials may be employed. These materials could include, for example, mild or strong alkaline cleaners, such as those that are commercially available. Examples include BASE Phase Non-Phos or BASE Phase #6, both of which are available from PPG Industries, Pretreatment and Specialty Products. The application of such cleaners may be followed and/or preceded by a water rinse.

The metal surface may then be rinsed with an aqueous acidic solution after cleaning with .the alkaline cleaner and before contact with a metal substrate primer coating composition and/or metal substrate pretreatment composition of the present invention. Examples of suitable rinse solutions include mild or strong acidic cleaners, such as the dilute nitric acid solutions commercially available.

As previously indicated, certain embodiments of the present invention are directed to coating compositions comprising an adhesion promoting component. As used herein, the term "adhesion promoting component" refers to a material that is included in the composition to enhance the adhesion of the coating composition to a metal substrate.

In certain embodiments of the present invention, such an adhesion promoting component comprises a free acid. As used herein, the term "free acid" is meant to encompass organic and/or inorganic acids that are included as a separate component of the compositions of the present invention as opposed to any acids that may be used to form a polymer that may be present in the composition. In certain embodiments, the free acid included within the coating compositions of the present invention is selected from tannic acid, gallic acid, phosphoric acid, phosphorous acid, citric acid, malonic acid, a derivative thereof, or a mixture thereof. Suitable derivatives include esters, amides, and/or metal complexes of such acids.

In certain embodiments, the free acid comprises an organic acid, such as tannic acid, i.e., tannin. Tannins are extracted from various plants and trees which can be classified according to their chemical properties as (a) hydrolyzable tannins, (b) condensed tannins, and (c) mixed tannins containing both hydrolyzable and condensed tannins. Tannins useful in the present invention include those that contain a tannin extract from naturally occurring plants and trees, and are normally referred to as vegetable tannins. Suitable vegetable tannins include the crude, ordinary or hot-water-soluble condensed vegetable tannins, such as Quebracho, mimosa, mangrove, spruce, hemlock, gabien, wattles, catechu, uranday, tea, larch, myrobalan, chestnut wood, divi-divi, valonia, summac, chinchona, oak, etc. These vegetable tannins are not pure chemical compounds with known structures, but rather contain numerous components including phenolic moieties such as catechol, pyrogallol, etc., condensed into a complicated polymeric structure.

In certain embodiments, the free acid comprises a phosphoric acid, such as a 100 percent orthophosphoric acid, superphosphoric acid or the aqueous solutions thereof, such as a 70 to 90 percent phosphoric acid solution.

In addition to or in lieu of such free acids, other suitable adhesion promoting components are metal phosphates, organophosphates, and organophosphonates. Suitable organophosphates and organophosphonates include those disclosed in United States Patent Nos. 6,440,580 at col. 3, line 24 to col. 6, line 22, 5,294,265 at col. 1, line 53 to col. 2, line 55, and 5,306,526 at col. 2, line 15 to col. 3, line 8. Suitable metal phosphates include, for example, zinc phosphate, iron phosphate, manganese phosphate, calcium phosphate, magnesium phosphate, cobalt phosphate, zinc-iron phosphate, zinc-manganese phosphate, zinc-calcium phosphate, including the materials described in United States Patent Nos. 4,941,930, 5,238,506, and 5,653,790.

In certain embodiments, the adhesion promoting component comprises a phosphatized epoxy resin. Such resins may comprise the reaction product of one or more epoxy-functional materials and one or more phosphorus-containing materials. Non-limiting examples of such materials, which are suitable for use in the present invention; are disclosed in United States Patent No. 6,159,549 at col. 3, lines 19 to 62.

In certain embodiments, the adhesion promoting component is present in the metal substrate primer coating compositions and/or the metal pretreatment coating composition in an amount ranging from 0.05 to 20 percent by weight, such as 3 to 15 percent by weight, with the percents by weight being based on the total weight of the composition.

As previously indicated, in certain embodiments, such as embodiments where the coating compositions of the present invention comprise a metal substrate primer coating composition and/or a metal pretreatment composition, the composition may also comprise a film-forming resin. In certain embodiments, the film-forming resin is present in such compositions in an amount ranging from 20 to 90 percent by weight, such as 30 to 80 percent by weight, with the percents by weight being based on the total weight of the composition.

In certain embodiments, the coating compositions of the present invention may also comprise additional optional ingredients, such as those ingredients well known in the art of formulating surface coatings. Such optional ingredients may comprise, for example, pigments, dyes, surface active agents, flow control agents, thixotropic agents, fillers, anti-gassing agents, organic co-solvents, catalysts, antioxidants, light stabilizers, UV absorbers and other customary auxiliaries. Any such additives known in the art can be used, absent compatibility problems. Non-limiting examples of these materials and suitable amounts include those described in United States Patent No. 4,220,679; 4,403,003; 4,147,769; and 5,071,904.

In certain embodiments, the coating compositions of the present invention also comprise, in addition to any of the previously described corrosion resisting particles, conventional non-chrome corrosion resisting particles. Suitable conventional non-chrome corrosion resisting particles include, but are not limited to, iron phosphate, zinc phosphate, calcium ion-exchanged silica, colloidal silica, synthetic amorphous silica, and molybdates, such as calcium molybdate, zinc molybdate, barium molybdate, strontium molybdate, and mixtures thereof. Suitable calcium ion-exchanged silica is commercially available from W. R. Grace & Co. as SHIELDEX® AC3 and/or SHIELDEX® C303. Suitable amorphous silica is available from W. R. Grace & Co. under the tradename SYLOID®. Suitable zinc hydroxyl phosphate is commercially available from Elements Specialties, Inc. under the tradename NALZIN® 2.

These conventional non-chrome corrosion resisting pigments typically comprise particles having a particle size of approximately one micron or larger. In certain embodiments, these particles are present in the coating compositions of the present invention in an amount ranging from 5 to 40 percent by weight, such as 10 to 25 percent by weight, with the percents by weight being based on the total solids weight of the composition.

In certain embodiments, the present invention is directed to coating compositions comprising an adhesion promoting component, a phenolic resin and an alkoxysilane, in addition to any of the previously described corrosion resisting particles. Suitable phenolic resins include those resins prepared by the condensation of a phenol or an alkyl substituted phenol with an aldehyde. Exemplary phenolic resins include those described in United States Patent No. 6,774,168 at col. 2, lines 2 to 22. Suitable alkoxysilanes are described in United States Patent No. 6,774,168 at col. 2, lines 23 to 65, and include, for example, acryloxyalkoxysilanes, such as γ-acryloxypropyltrimethoxysilane and methacrylatoalkoxysilane, such as γ-methacryloxypropyltrimethoxysilane. Such compositions may also include a solvent, rheological agent, and/or pigment, as described in United States Patent No. 6,774,168 at col. 3, lines 28 to 41.

The inventors have discovered that the corrosion resisting particles disclosed herein are particularly suitable for use in etch-primers, such as automotive refinish etch-primers and metal coil coating primers. As a result, certain embodiments of the present invention are directed to etch-primers comprising: (a) a film-forming resin, such as a polyvinyl resin; (b) an adhesion promoting component, such as a free acid; and (c) corrosion resisting particles of the type described herein. As used herein, the term "refinish" refers to the act of redoing, restoring or repairing the surface or finish of an article.

The coating compositions of the present invention may be prepared by any of a variety of methods. For example, in certain embodiments, the previously described corrosion resisting particles are added at any time during the formulation of a coating composition comprising a film-forming resin, so long as they form a stable suspension in a film-forming resin. Coating compositions of the present invention can be prepared by first blending a film-forming resin, the previously described corrosion resisting particles, and a diluent, such as an organic solvent and/or water, in a closed container that contains ceramic grind media. The blend is subjected to high shear stress conditions, such as by shaking the blend on a high speed shaker, until a homogeneous dispersion of particles remains suspended in the film-forming resin with no visible particle settle in the container. If desired, any mode of applying stress to the blend can be utilized, so long as sufficient stress is applied to achieve a stable dispersion of the particles in the film-forming resin.

The coating compositions of the present invention may be applied to a substrate by known application techniques, such as dipping or immersion, spraying, intermittent spraying, dipping followed by spraying, spraying followed by dipping, brushing, or by roll-coating. Usual spray techniques and equipment for air spraying and electrostatic spraying, either manual or automatic methods, can be used. While the coating compositions of the present invention can be applied to various substrates, such as wood, glass, cloth, plastic, foam, including elastomeric substrates and the like, in many cases, the substrate comprises a metal.

In certain embodiments of the coating compositions of the present invention, after application of the composition to the substrate, a film is formed on the surface of the substrate by driving solvent, i.e., organic solvent and/or water, out of the film by heating or by an air-drying period, Suitable drying conditions will depend on the particular composition and/or application, but in some instances a drying time of from about 1 to 5 minutes at a temperature of about 80 to 250°F (20 to 121°C) will be sufficient. More than one coating layer may be applied if desired. Usually between coats, the previously applied coat is flashed; that is, exposed to ambient conditions for 5 to 30 minutes. In certain embodiments, the thickness of the coating is from 0.05 to 5 mils (1.3 to 127 microns), such as 0.05 to 3.0 mils (1.3 to 76.2 microns). The coating composition may then be heated. In the curing operation, solvents are driven off and crosslinkable components of the composition, if any, are crosslinked. The heating and curing operation is sometimes carried out at a temperature in the range of from 160 to 350°F (71 to 177°C) but, if needed, lower or higher temperatures may be used.

As indicated, certain embodiments of the coating compositions of the present invention are directed to primer compositions, such as "etch primers," while other embodiments of the present invention are directed to metal substrate pretreatment compositions. In either case, such compositions are often topcoated with a protective and decorative coating system, such as a monocoat topcoat or a combination of a pigmented base coating composition and a clearcoat composition, i.e., a color-plus-clear system. As a result, the present invention is also directed to multi-component composite coatings comprising at least one coating layer deposited from a coating composition of the present invention. In certain embodiments, the multi-component composite coating compositions of the present invention comprise a base-coat film-forming composition serving as a basecoat (often a pigmented color coat) and a film-forming composition applied over the basecoat serving as a topcoat (often a transparent or clear coat).

In these embodiments of the present invention, the coating composition from which the basecoat and/or topcoat is deposited may comprise, for example, any of the conventional basecoat or topcoat coating compositions known to those skilled in the art of, for example, formulating automotive OEM coating compositions, automotive refinish coating compositions, industrial coating compositions, architectural coating compositions, coil coating compositions, and aerospace coating compositions, among others. Such compositions typically include a film-forming resin that may include, for example, an acrylic polymer, a polyester, and/or a polyurethane. Exemplary film-forming resins are disclosed in United States Patent No. 4,220,679, at col. 2 line 24 to col. 4, line 40; as well as United States Patent No. 4,403,003, United States Patent No. 4,147,679 and United States Patent No. 5,071,904.

The present invention is also directed to substrates, such as metal substrates, at least partially coated with a coating composition of the present invention as well as substrates, such as metal substrates, at least partially coated with a multi-component composite coating of the present invention.

In many cases, the coating compositions of the present invention, when deposited onto at least a portion of one metal substrate selected from cold rolled steel, electrogalvanized steel and aluminum and cured, produce a substrate that exhibits corrosion resistance properties greater than the corrosion resistance properties the same substrate exhibits when at least partially coated under the same conditions with a similar coating composition that does not include the previously described corrosion resisting particles. In some cases, the coating compositions of the present invention, when deposited onto at least a portion of two metal substrates selected from cold rolled steel, electrogalvanized steel and aluminum and cured, produce a substrate that exhibits corrosion resistance properties greater than the corrosion resistance properties the same two substrates exhibit when at least partially coated under the same conditions with a similar coating composition that does not include the previously described corrosion resisting particles. In some cases, the coating compositions of the present invention, when deposited onto at least a portion of a cold rolled steel, electrogalvanized steel and aluminum substrate and cured, produce a substrate that exhibits corrosion resistance properties greater than the corrosion resistance properties the same three substrates exhibit when at least partially coated under the same conditions with a similar coating composition that does not include the previously described corrosion resisting particles.

As a result, certain embodiments of the present invention are directed to coating compositions that comprise corrosion resisting particles selected from: (i) magnesium oxide particles having an average primary particle size of no more than 100 nanometers; (ii) particles comprising an inorganic oxide network comprising one or more inorganic oxide; and/or (iii) chemically modified particles having an average primary particle size of no more than 500 nanometers, and wherein the corrosion resisting particles are present in the composition in an amount sufficient to result in a composition that, when deposited onto at least a portion of one metal substrate selected from cold rolled steel, electrogalvanized steel and aluminum and cured, produces a substrate that exhibits corrosion resistance properties greater than the corrosion resistance properties the same substrate exhibits when at least partially coated under the same conditions with a similar coating composition that does not include the corrosion resisting particles.

In certain embodiments, the corrosion resisting particles are present in the composition in an amount sufficient to result in a composition that, when deposited onto at least a portion of two metal substrates selected from cold rolled steel, electrogalvanized steel and aluminum and cured, produces a substrate that exhibits corrosion resistance properties greater than the corrosion resistance properties the same two substrates exhibit when at least partially coated under the same conditions with a similar coating composition that does not include the corrosion resisting particles. In yet other embodiments, such particles are present in the composition in an amount sufficient to result in a composition that, when deposited onto at least a portion of a cold rolled steel, electrogalvanized steel and aluminum substrate and cured, produces a substrate that exhibits corrosion resistance properties greater than the corrosion resistance properties the same three substrates exhibit when at least partially coated under the same conditions with a similar coating composition that does not include the corrosion resisting particles.

As used herein, the term "corrosion resistance properties" refers to the measurement of corrosion prevention on a metal substrate utilizing the test described in ASTM B117 (Salt Spray Test). In this test, the coated substrate is scribed with a knife to expose the bare metal substrate. The scribed substrate is placed into a test chamber where an aqueous salt solution is continuously misted onto the substrate. The chamber is maintained at a constant temperature. The coated substrate is exposed to the salt spray environment for a specified period of time, such as 500 or 1000 hours. After exposure, the coated substrate is removed from the test chamber and evaluated for corrosion along the scribe. Corrosion is measured by "scribe creep", which is defined as the total distance the corrosion has traveled across the scribe measured in millimeters.

In this application, when it is stated that a substrate "exhibits corrosion resistance properties greater than" another substrate, it means that the substrate exhibits less scribe creep (the corrosion travels across the scribe fewer millimeters) compared to the other substrate. In certain embodiments, the corrosion resisting particles are present in the coating compositions of the present invention in an amount sufficient to result in a substrate exhibiting corrosion resistance properties at least 15 % greater or, in some cases, at least 50% greater, than the corrosion resistance properties exhibited by the same substrate when at least partially coated under the same conditions with a similar coating composition that does not include the corrosion resisting particles.

As used herein, the term "the same conditions" means that a coating composition is (i) deposited on the substrate at the same or similar film thickness as the composition to which it is being compared, and (ii) cured under the same or similar cure conditions, such as cure temperature, humidity, and time, as the composition to which it is being compared. As used herein, the term "similar coating composition that does not include the corrosion resisting particles" means that a coating composition contains the same components in the same or similar amounts as the composition to which it is being compared, except that the corrosion resisting particles described herein, which are included in the coating compositions of the present invention, are not present and are replaced with conventional non-chrome corrosion resisting particles, such as NALZIN® 2 or SHIELDEX® AC3 (identified earlier).

In many cases, the coating compositions of the present invention, when deposited onto at least a portion of a metal substrate selected from cold rolled steel, electrogalvanized steel and aluminum and cured, produce a substrate that exhibits corrosion resistance properties similar to, or, in some cases, greater than, the corrosion resistance properties the same substrate exhibits when at least partially coated under the same conditions with a conventional chrome-containing corrosion-resistant composition. In some cases, the coating compositions of the present invention, when deposited onto at least a portion of two metal substrates selected from cold rolled steel, electrogalvanized steel and aluminum and cured, produce a substrate that exhibits corrosion resistance properties similar to, or, in some cases, greater than, the corrosion resistance properties the same two substrates exhibit when at least partially coated under the same conditions with a conventional chrome-containing corrosion-resistant composition. In some cases, the coating compositions of the present invention, when deposited onto at least a portion of a cold rolled steel, electrogalvanized steel and aluminum substrate and cured, produce a substrate that exhibits corrosion resistance properties similar to, or, in some cases, greater than, the corrosion resistance properties the same three substrates exhibit when at least partially coated under the same conditions with a conventional chrome-containing corrosion-resistant composition.

As a result, certain embodiments of the present disclosure are directed to coating compositions that comprise corrosion resisting particles selected from: (i) magnesium oxide particles having an average particle size of no more than 100 nanometers; (ii) particles comprising an inorganic oxide network comprising one or more inorganic oxide; and/or (iii) chemically modified particles having an average particle size of no more than 500 nanometers, and wherein the corrosion resisting particles are present in the composition in an amount sufficient to result in a composition that, when deposited onto at least a portion of one metal substrate selected from cold rolled steel, electrogalvanized steel and aluminum and cured, produces a substrate that exhibits corrosion resistance properties similar to or, in some embodiments, greater than, the corrosion resistance properties the same substrate exhibits when at least partially coated under the same conditions with a conventional chrome-containing corrosion-resistant composition. In certain embodiments, such corrosion resisting particles are present in the composition in an amount sufficient to result in a composition that, when deposited onto at least a portion of two metal substrates selected from cold rolled steel, electrogalvanized steel and aluminum and cured, produces a substrate that exhibits corrosion resistance properties similar to or, in some embodiments, greater than the corrosion resistance properties the same two substrates exhibit when at least partially coated under the same conditions with a conventional chrome-containing corrosion-resistant composition. In yet other embodiments, such corrosion resisting particles are present in the composition in an amount sufficient to result in a composition that, when deposited onto at least a portion of a cold rolled steel, electrogalvanized steel and aluminum substrate and cured, produces a substrate that exhibits corrosion resistance properties similar to, or, in some embodiments, greater than the corrosion resistance properties the same three substrates exhibit when at least partially coated under the same conditions with a conventional chrome-containing corrosion-resistant composition.

In this application, when it is stated that a substrate "exhibits corrosion resistance properties similar to" another substrate, it means that the substrate exhibits scribe creep as measured by ASTM B117 as described above no more than 10% greater than the substrate to which it is being compared. As used herein, the term "conventional chrome-containing corrosion-resistant composition" refers to coating compositions commercially available from PPG Industries, Inc., Pittsburgh, PA, under the tradenames D8099 and DX1791.

As will be appreciated by those skilled in the art based on the foregoing description, certain embodiments of the present disclosure are directed to methods for enhancing the corrosion resistance of a metal substrate, such methods comprising coating at least a portion of the substrate with a primer and/or pretreatment coating composition that comprises (a) an adhesion promoting component, and (b) corrosion resisting particles selected from: (i) magnesium oxide particles having an average particle size of no more than 100 nanometers; (ii) particles comprising an inorganic oxide network comprising one or more inorganic oxide; and/or (iii) chemically modified particles having an average particle size of no more than 500 nanometers. In certain embodiments, such primer compositions are substantially free of chromium containing material and/or also comprise a film-forming resin, such as a polyvinyl polymer.

As will also be appreciated by the skilled artisan, certain embodiments of the present disclosure are directed to methods for enhancing the corrosion resistance of a metal substrate. The methods comprise coating at least a portion of the substrate with a primer and/or pretreatment coating composition that comprises (a) an adhesion promoting component, and (b) corrosion resisting particles selected from: (i) magnesium oxide particles having an average primary particle size of no more than 100 nanometers; (ii) particles comprising an inorganic oxide network comprising one or more inorganic oxide; and/or (iii) chemically modified particles having an average primary particle size of no more than 500 nanometers.

Illustrating the invention are the following examples, which, however, are not to be considered as limiting the invention to their details. Unless otherwise indicated, all parts and percentages in the following examples, as well as throughout the specification, are by weight.

### EXAMPLES

The following Particle Examples describe the preparation of corrosion resisting particles suitable for use in certain embodiments of the coating compositions of the present invention.

### PARTICLE EXAMPLE 1

A reaction flask was equipped with a stirrer, thermocouple and a condenser. Charge A and charge B (see table 1) were added and stirred for 15 minutes. Then, Charge C (see Table 1) was added over 5 minutes and stirred for 30 minutes. Then, 300 grams of water was added and heated to 40°C. The reaction mixture was stirred at 40°C for six hours and then cooled to ambient temperature. The solid precipitated was filtered off, washed with acetone and dried at ambient temperature for 24 hours.

### PARTICLE EXAMPLE 2

A reaction flask was equipped with a stirrer, thermocouple and a condenser. Charge A and charge B (See Table 1) were added and stirred for 15 minutes. Then, Charge C (See Table 1) was added over 5 minutes and stirred for 6 minutes. Then, 300 grams of water was added and heated to 40°C. The reaction mixture was stirred at 40°C for 375 minutes and then cooled to ambient temperature. The solid precipitated was filtered off, washed with acetone and dried at ambient temperature for 24 hours.

### PARTICLE EXAMPLE 3

A reaction flask was equipped with a stirrer, thermocouple and a condenser. Charge A and charge B (See Table 1) were added and stirred for three minutes. Then, (See Table 1) was added over 5 minutes and stirred for 32 minutes. Then, 200 grams of water was added and heated to 40°C. The reaction mixture was stirred at 40°C for six hours and then cooled to ambient temperature. Then, five grams of triethylamine in 30 grams of water was added and stirred for an hour. The solid precipitated was filtered off, washed with acetone and dried at ambient temperature for 24 hours.

### PARTICLE EXAMPLE 4

A reaction flask was equipped with a stirrer, thermocouple and a condenser. Charge A and charge B (See Table 1) were added and stirred for 45 minutes. Then, Charge C (See Table 1) was added over 5 minutes and stirred for 30 minutes. Then, 200 grams of water was added and heated to 40°C. The reaction mixture was stirred at 40°C for two hours. Then, charge D, sparged with nitrogen stream continuously, (See Table 1) was added over thirty minutes and stirred at 40°C for two hours. Reaction mixture was cooled to ambient temperature and nine grams of triethylamine were added, and stirred for 90 minutes. The solid precipitated was filtered off, washed with acetone and dried at ambient temperature for 24 hours.

### PARTICLE EXAMPLE 5

A reaction flask was equipped with a stirrer, thermocouple and a condenser. Charge A and charge B (See Table 1) were added and stirred for 85 minutes. The temperature was raised to 75°C and stirred at 75°C for 55 minutes. Then, the reaction mixture was cooled to 50°C and Charge C (See Table 1) was added over 5 minutes and stirred for 25 minutes. Then, charge D, sparged with nitrogen stream continuously during addition, (See Table 1) was added over thirty minutes and stirred at 50°C for 375 minutes. The reaction mixture was cooled to ambient temperature and the solid precipitated was filtered off, washed with acetone and dried at ambient temperature for 24 hours.

**TABLE 1**

| | Particle Example 1 | Particle Example 2 | Particle Example 3 | Particle Example 4 | Particle Example 5 |
|---|---|---|---|---|---|
| Charge A (grams) | | | | | |
| Deionized water | 200.0 | 200.0 | 200.0 | 200.0 | 800 |

| Charge B (grams) | | | | | |
|---|---|---|---|---|---|
| Cerium(III) acetate 1.5H₂0¹ | 34.0 | 0.0 | 0.0 | 0.0 | 102.0 |
| Yttrium acetate Hydrate² | 0.0 | 26.3 | 0.0 | 0.0 | 0.0 |
| Manganese acetate 4H₂O³ | 0.0 | 0.0 | 24.2 | 0.0 | 0.0 |
| Zirconium sulfate⁴ | 0.0 | 0.0 | 0.0 | 27.9 | 0.0 |
| Zinc acetate dihydrate⁵ | 22.0 | 22.0 | 22.0 | 22.0 | 66.0 |

| Charge C (grams) | | | | | |
|---|---|---|---|---|---|
| Silquest TEOS pure silane⁶ | 48.0 | 48.0 | 48.0 | 48.0 | 144.0 |
| Acetone | 200.0 | 200.0 | 200.0 | 200.0 | 600.0 |

| Charge D (grams) | | | | | |
|---|---|---|---|---|---|
| Triethylamine⁷ | | | | 5.0 | 30.0 |
| Deionized water | | | | 50.0 | 180.0 |

| | | | | | |
|---|---|---|---|---|---|
| ¹ Available from Prochem Inc., ² Available from Aldrich ³ Available from Aldrich ⁴ Available from ICN Biomedicals Inc ⁵ Available from Barker Industries, ⁶ Available from GE silicones ⁷ Available from Aldrich | | | | | |

### PARTICLE EXAMPLE 6

A reaction flask was equipped with a stirrer, thermocouple and a condenser. Charge A and charge B (See Table 2) were added, heated to 50°C and stirred for ten minutes. Then, Charge C (See Table 2) was added over 5 minutes and stirred for 40 minutes. Then Charge D, sparged with nitrogen stream continuously during addition, (See Table 2) was added over thirty minutes and stirred at 50°C for six hours. The reaction mixture was cooled to ambient temperature and the solid precipitated was filtered off, washed with water and acetone sequentially and dried at ambient temperature for 24 hours.

### PARTICLE EXAMPLE 7

A reaction flask was equipped with a stirrer, thermocouple and a condenser. Charge A and charge B (See Table 2) were added and stirred at 50°C for 30 minutes. Then, the temperature was raised to 75°C and stirred for an hour. Then, the reaction mixture was cooled to 50°C and Charge C (See Table 2) was added over 5 minutes and stirred for 25 minutes. Then charge D (See Table 2) was added over thirty minutes and stirred at 50°C for 320 minutes. The reaction mixture was then cooled to ambient temperature and the solid precipitated was filtered off, washed with water and acetone sequentially, and dried at ambient temperature for 24 hours.

### PARTICLE EXAMPLE 8

A reaction flask was equipped with a stirrer, thermocouple and a condenser. Charge A and charge B (See Table 2) were added and the temperature was raised to 75°C and stirred for an hour. Then, the reaction mixture was cooled to 50°C, and Charge C (See Table 2) was added over 5 minutes and stirred for 35 minutes. Then, charge D, sparged with nitrogen stream continuously during addition, (See Table 2) was added over thirty minutes and stirred at 50°C for six hours. The reaction mixture was cooled to ambient temperature and the solid precipitated was filtered off, washed with acetone and dried at ambient temperature for 24 hours.

### PARTICLE EXAMPLE 9

A reaction flask was equipped with a stirrer, thermocouple and a condenser. Charge A (See Table 1) was added and stirred at 50°C. Then, Charge B and Charge C (See Table 2) were added over two hours simultaneously. Then, the reaction mixture was stirred at 50°C for three hours. The solid precipitated was filtered off, washed with water and acetone sequentially, and dried at ambient temperature for 48 hours. The solid obtained was ground using mortar and pestle.

### PARTICLE EXAMPLE 10

A reaction flask was equipped with a stirrer, thermocouple and a condenser. Charge A (See Table 2) was added and stirred at 50°C. Charge B and Charge C (See Table 2) were added over two hours simultaneously. Then, the reaction mixture was stirred at 50°C for three hours. The solid precipitated was filtered off, washed with water and acetone sequentially, and dried at ambient temperature for 48 hours. The solid obtained was ground using mortar and pestle.

**TABLE 2**

| | Particle Example 6 | Particle Example 7 | Particle Example 8 | Particle Example 9 | Particle Example 10 |
|---|---|---|---|---|---|
| Charge A (grams) | | | | | |
| Deionized water | 676.0 | 400.0 | 3200.0 | 300.0 | 300.0 |

| Charge B | | | | | |
|---|---|---|---|---|---|
| Cerium(III) acetate 1.5H₂0¹ | 51.0 | 51.0 | 408.0 | 51.0 | 51.0 |
| Zinc acetate dihydrate² | 33.0 | 33.0 | 264.0 | 33.0 | 33.0 |
| Sulfuric acid ~36N³ | 0.0 | 0.0 | 0.0 | 0.0 | 5.9 |
| Deionized water | 0.0 | 0.0 | 0.0 | 740.0 | 740.0 |

| Charge C (grams) | | | | | |
|---|---|---|---|---|---|
| Silquest TEOS pure silage⁴ | 144.0 | 72.0 | 576.0 | 0.0 | 0.0 |
| Acetone | 300.0 | 300:0 | 2400.0 | 0.0 | 0.0 |
| Sodium Silicate solution⁵ | | | | 94.0 | 94.0 |

| Charge D (grams) | | | | | |
|---|---|---|---|---|---|
| Triethylamine⁶ | 15.0 | 0.0 | 120.0 | | |
| Ammonium hydroxide⁷ | 0.0 | 16.6 | 0.0 | | |
| Deionized water | 90.0 | 90.0 | 720.0 | | |

| | | | | | |
|---|---|---|---|---|---|
| ¹ Available from Prochem Inc., ² Available from Barker Industries ³ Available from Fischer Scientific ⁴ Available from GE silicones ⁵ 30% solids aqueous solution; Available from PPG Industries ⁶ Available from Fisher Scientific ⁷ Available from Mallinckrodt | | | | | |

### PARTICLE EXAMPLE 11

A reaction flask was equipped with a stirrer, thermocouple and a condenser. Charge A and charge B (See Table 3) were added and stirred for 30 minutes. Then, the temperature was raised to 50°C and stirred for 105 minutes. Then, 100 grams of water was added and the reaction mixture was heated to 60°C and stirred for 45 minutes. Then, the heat source was removed. At a reaction temperature of 34°C, charge C (See Table 3) was added over five minutes. The reaction mixture was stirred for 30 minutes at 30°C. Charge D, sparged with nitrogen stream continuously during addition, (See Table 3) was added over thirty minutes and stirred at 30°C for 260 minutes. The reaction mixture was cooled to ambient temperature and the solid precipitated was filtered off, washed with acetone and dried at ambient conditions for 24 hours.

### PARTICLE EXAMPLE 12

A reaction flask was equipped with a stirrer, thermocouple and a condenser. Charge A and charge B (See Table 3) were added and stirred for 20 minutes. Then, 100 grams of water was added and the reaction mixture was heated to 60°C and stirred for an hour. Then, the heat source was removed. At a reaction temperature of 48°C, charge C (See Table 3) was added over two minutes. The reaction mixture was stirred for three hours while cooling to 26°C. The solid precipitated was filtered off, washed with acetone and dried at ambient temperature for 24 hours.

### PARTICLE EXAMPLE 13

A reaction flask was equipped with a stirrer, thermocouple and a condenser. Charge A and charge B (See Table 3) were added, heated to 40°C and stirred for 45 minutes. Then, the temperature was raised to 50°C and stirred for 105 minutes. The heat source was removed and at a reaction temperature of 38°C, charge C (See Table 3) was added over two minutes. The reaction mixture was stirred for two hours while cooling to 26°C. The solid precipitated was filtered off, washed with acetone and dried at ambient temperature,

### PARTICLE EXAMPLE 14

A reaction flask was equipped with a stirrer, thermocouple and a condenser. Charge A and charge B (See Table 3) were added and stirred for 15 minutes. Then, the temperature was raised to 50°C. Charge C (See Table 3) was added over five minutes and stirred for 30 minutes. Charge D, sparged with nitrogen stream continuously during addition, (See Table 3) was added over thirty minutes and stirred at 50°C for four hours. The reaction mixture was cooled to ambient temperature and the solid precipitated was filtered off, washed with water and acetone sequentially and dried at ambient temperature for 24 hours:

**TABLE 3**

| | Particle Example 11 | Particle Example 12 | Particle Example 13 | Particle Example 14 |
|---|---|---|---|---|
| Charge A (grams) | | | | |
| Deionized water | 200.0 | 200.0 | 200.0 | 300.0 |

| Charge B (grams) | | | | |
|---|---|---|---|---|
| Cerium (III) acetate 1.5H₂0¹ | 34.0 | 34.0 | 34.0 | 0.0 |
| Zinc acetate dihydrate² | 22.0 | 22.0 | 22.0 | 33.0 |
| Magnesium(II)acetate.4H₂O³ | 21.2 | 21.2 | 0.0 | 31.8 |

| Charge C (grams) | | | | |
|---|---|---|---|---|
| Silquest TEOS pure silane⁴ | 48.0 | 0.0 | 0.0 | 72.0 |
| Acetone | 200.0 | 0.0 | 0.0 | 300.0 |
| Phosphoric acid 85%⁵ | 0.0 | 40.3 | 0.0 | 0.0 |
| Sodium metasilicate⁶ | 0.0 | 0.0 | 48.0 | 0.0 |
| Deionized water | 0.0 | 50.0 | 100.0 | 0.0 |

| Charge D (grams) | | | | |
|---|---|---|---|---|
| Triethylamine⁷ | 10.0 | | | 15.0 |
| Deionized water | 60.0 | | | 90.0 |

| | | | | |
|---|---|---|---|---|
| 1 Available from Prochem Inc., 2 Available from Barker Industries 3 Available from Acros Organics 4 Available from GE silicones 5 Available from Fisher Scientific 6 Available from Aldrich 7 Available from Fisher Scientific | | | | |

### PARTICLE EXAMPLE 15

To a reaction flask, charge A and Charge B (see Table 3a) were added and stirred for 15 minutes. Then, Charge C (see Table 3a) was added over five minutes and stirred for 150 minutes. Then, 20 grams of deionized water was added and stirred for 40 minutes. The precipitated solid was filtered off, washed with water and acetone sequentially and air dried for 24 hours.

### PARTICLE EXAMPLE 16

A reaction flask was equipped with a stirrer, thermocouple and a condenser. Charge A and charge B (see Table 3a) were added, heated to 50°C and stirred for an hour. Then, charge C (see Table 3 a) was added over 5 minutes and stirred for 30 minutes. Then, charge D, sparged with nitrogen stream continuously during addition, ((see Table 3a) was added over thirty minutes and stirred for three hours. The solid precipitated was filtered off, washed with acetone and dried at ambient temperature for 24 hours.

**TABLE 3a**

| | Particle Example 15 | Particle Example 16 |
|---|---|---|
| Charge A (grams) | | |
| Deionized water | 50.0 | 800 |

| Charge B (grams) | | |
|---|---|---|
| Cerium (III) acetate 1.5H₂0¹ | 8.8 | 51.0 |
| Zinc acetate dihydrate² | 4.8 | 99.0 |

| Charge C (grams) | | |
|---|---|---|
| Silquest TEOS pure silane³ | 0.0 | 144.0 |
| Acetone | 0.0 | 600.0 |
| Laponite RD⁴ | 20.0 | |

| Charge D (grams) | | |
|---|---|---|
| Triethylamine⁵ | | 30.0 |
| Deionized water | | 180.0 |

| | | |
|---|---|---|
| ¹ Available from Prochem Inc., ² Available from Barker Industries ³ Available from GE silicones 4 Synthetic clay available from Southern Clay Products, Inc. ⁵ Available from Fisher Scientific | | |

### PARTICLE EXAMPLE 17

A suitable reaction vessel equipped for vacuum distillation was flushed with nitrogen gas. To the flask was added 1600 grams of Snowtex O (a 20% solution of colloidal silica in water available from Nissan Chemical). A mixture of 6.5 grams of trimethoxysilylpropyl methacrylate in 154 grams of water with the pH adjusted to 5.0 with acetic acid was added to the flask over 5 minutes at ambient temperature. The mixture was stirred for 45 minutes at ambient temperature. Then 64 grams of vinyl trimethoxysilane was added to the reaction mixture over 5 minutes. The reaction mixture was again stirred for 45 minutes at ambient temperature. A total of 1280 grams of butyl Cellosolve was then added to the reaction mixture over about 20 minutes at ambient temperature. The mixture was again stirred for 45 minutes at ambient temperature. The mixture was slowly heated to 90°C and vacuum distilled. A total of 1679 grams of distillate was removed. The final mixture was a slightly hazy, low viscosity mixture about 29% solids as measured at 110°C for 60 minutes.

### PARTICLE EXAMPLE 18

Particles were prepared using a DC thermal plasma system. The plasma system included a DC plasma torch (Model SG-100 Plasma Spray Gun commercially available from Praxair Technology, Inc., Danbury, Connecticut) operated with 80 standard liters per minute of argon carrier gas and 24 kilowatts of power delivered to the torch. A liquid precursor feed composition comprising the materials and amounts listed in Table 4 was prepared and fed to the reactor at a rate of 5 grams per minute through a gas assisted liquid nebulizer located 3.7 inches down stream of the plasma torch outlet. At the nebulizer, a mixture of 4.9 standard liters per minute of argon and 10.4 standard liters per minute oxygen were delivered to assist in atomization of the liquid precursors. Additional oxygen at 28 standard liters per minute was delivered through a ¹/₈ inch diameter nozzle located 180° apart from the nebulizer. Following a 6 inch long reactor section, a plurality of quench stream injection ports were provided that included 6 ¹/₈ inch diameter nozzles located 60° apart radially. A 10 millimeter diameter converging-diverging nozzle of the type described in United States Patent No. RE 37,853E was provided 4 inches downstream of the quench stream injection port. Quench air was injected through the plurality of quench stream injection ports at a rate of 100 standard liters per minute.

**TABLE 4**

| Material | Amount |
|---|---|
| Cerium 2-ethylhexanoate¹ | 271 grams |
| Zinc 2-ethylhexanoate² | 254 grams |
| Tetraethoxysilane³ | 1046 grams |

| | |
|---|---|
| ¹ Commercially available from Alfa Aesar, Ward Hill, Massachusetts. ² Commercially available from Alfa Aesar, Ward Hill, Massachusetts. ³ Commercially available from Sigma Aldrich Co., St Louis, Missouri. | |

The produced particles had a theoretical composition of 10 weight percent cerium oxide, 15 weight percent zinc oxide, and 75 weight percent silica. The measured B.B.T. specific surface area was 170 square meters per gram using a Gemini model 2360 analyzer (available from Micromeritics Instrument Corp., Norcross, Georgia), and the calculated equivalent spherical diameter was 13 nanometers.

### PARTICLE EXAMPLE 19

Particles from liquid precursors were prepared using the apparatus and conditions identified in Example 18 and the feed materials and amounts listed in Table 5.

**TABLE 5**

| Material | Amount |
|---|---|
| Cerium 2-ethylhexanoate¹ | 81 grams |
| Zinc 2-ethylhexanoate² | 355 grams |
| Tetraethoxysilane³ | 1062 grams |

The produced particles had a theoretical composition of 3 weight percent cerium oxide, 21 weight percent zinc oxide, and 76 weight percent silica. The measured B.E.T. specific surface area was 181 square meters per gram using the Gemini model 2360 analyzer and the calculated equivalent spherical diameter was 13 nanometers.

### PARTICLE EXAMPLE 20

Particles from liquid precursors were prepared using the apparatus and conditions identified in Example 18 and the feed materials and amounts listed in Table 6.

**TABLE 6**

| Material | Amount |
|---|---|
| Calcium methoxide⁴ | 116 grams |
| Butanol | 116 grams |
| 2-ethylhexanoic acid | 582 grams |
| Tetraethoxysilane³ | 820 grams |

| | |
|---|---|
| ⁴ Commercially available from Sigma Aldrich Co., St Louis, Missouri. | |

The produced particles had a theoretical composition of 21 weight percent calcium oxide, and 76 weight percent silica. The measured B.E.T. specific surface area was 181 square meters per gram using the Gemini model 2360 analyzer and the calculated equivalent spherical diameter was 14 nanometers.

### PARTICLE EXAMPLE 21

Particles from liquid precursors were prepared using the apparatus and conditions identified in Example 18 and the feed materials and amounts listed in Table 7.

**TABLE 7**

| Material | Amount |
|---|---|
| Calcium methoxide⁴ | 55 grams |
| Butanol | 55 grams |
| 2-ethylhexanoic acid | 273 grams |
| Zinc 2-ethylhexanoate² | 160 grams |
| Tetraethoxysilane³ | 809 grams |

The produced particles had a theoretical composition of 10 weight percent calcium oxide, 12.3 weight percent zinc oxide, and 77.7 weight percent silica. The measured B.E.T. specific surface area was 163 square meters per gram using the Gemini model 2360 analyzer and the calculated equivalent spherical diameter was 15 nanometers.

### PARTICLE EXAMPLE 22

Particles from liquid precursors were prepared using the apparatus and conditions identified in Example 18 and the feed materials and amounts listed in Table 8.

**TABLE 8**

| Material | Amount |
|---|---|
| Zinc 2-ethylhexanoate² | 393 grams |
| Triethylphosphate³ | 137 grams |
| Tetraethoxysilane³ | 889 grams |

| | |
|---|---|
| ⁵ Commercially available from Alfa Aesar, Ward Hill, Massachusetts. | |

The produced particles had a theoretical composition of 13.3 weight percent phosphorus oxide, 22.7 weight percent zinc oxide, and 64 weight percent silica. The measured B.E.T. specific surface area was 81 square meters per gram using the Gemini model 2360 analyzer and the calculated equivalent spherical diameter was 28 nanometers.

### PARTICLE EXAMPLE 23

Particles from liquid precursors were prepared using the apparatus and conditions identified in Example 18 and the feed materials and amounts listed in Table 9.

**TABLE 9**

| Material | Amount |
|---|---|
| Zinc 2-ethylhexanoate² | 389 grams |
| Triethylphosphate⁵ | 411 grams |
| Tetraethoxysilane³ | 521 grams |

The produced particles had a theoretical composition of 22.5 weight percent phosphorus oxide, 40 weight percent zinc oxide, and 37.5 weight percent silica. The measured B.E.T. specific surface area was 37 square meters per gram using the Gemini model 2360 analyzer and the calculated equivalent spherical diameter was 61 nanometers.

### PARTICLE EXAMPLE 24

Particles from liquid precursors were prepared using the apparatus and conditions identified in Example 18 and the feed materials and amounts listed in Table 10.

**TABLE 10**

| Material | Amount |
|---|---|
| Zinc 2-ethylhexanoate² | 398 grams |
| Tetraethoxysilane³ | 1069 grams |

The produced particles had a theoretical composition of 23 weight percent zinc oxide, and 77 weight percent silica. The measured B.E.T. specific surface area was 121 square meters per gram using the Gemini model 2360 analyzer and the calculated equivalent spherical diameter was 19 nanometers.

### PARTICLE EXAMPLE 25

Particles from liquid precursors were prepared using the apparatus and conditions identified in Example 18 and the feed materials and amounts listed in Table 11.

**TABLE 11**

| Material | Amount |
|---|---|
| Lithium 2,4-pentanedionate⁶ | 28 grams |
| Methanol | 240 grams |
| Zinc 2-ethylhexanoate | 389 grams |
| Triethylphosphate⁵ | 513 grams |
| Tetraethoxysilane³ | 382 grams |

| | |
|---|---|
| ⁶ Commercially available from Alfa Aesar, Ward Hill, Massachusetts. | |

The produced particles had a theoretical composition of 1 weight percent lithium oxide, 50 weight percent phosphorus oxide, 22.5 weight percent zinc oxide, and 27.5 weight percent silica. The measured B.E.T. specific surface area was 33 square meters per gram using the Gemini model 2360 analyzer and the calculated equivalent spherical diameter was 67 nanometers.

### PARTICLE EXAMPLE 26

Particles from liquid precursors were prepared using the apparatus and conditions identified in Example 18 and the feed materials and amounts listed in Table 12.

**TABLE 12**

| Material | Amount |
|---|---|
| Yttrium butoxide⁷ | 195 grams |
| Zinc 2-ethylhexanoate² | 358 grams |
| Triethylphosphate⁵ | 41 grams |
| Ethanol | 50 grams |
| Tetraethoxysilane³ | 1004 grams |

| | |
|---|---|
| ⁷ Commercially available from Alfa Aesar, Ward Hill, Massachusetts. | |

The produced particles had a theoretical composition of 3 weight percent yittrium oxide, 4 weight percent phosphorus oxide, 20.7 weight percent zinc oxide, and 72.3 weight percent silica. The measured B.E.T. specific surface area was 227 square meters per gram using the Gemini model 2360 analyzer and the calculated equivalent spherical diameter was 10 nanometers.

### PARTICLE EXAMPLE 27

Particles from liquid precursors were prepared using the apparatus and conditions identified in Example 18 and the feed materials and amounts listed in Table 13.

**TABLE 13**

| Material | Amount |
|---|---|
| Yttrium butoxide⁷ | 195 grams |
| Zinc 2-ethylhexanoate² | 363 grams |
| Tetraethoxysilane³ | 1056 grams |

The produced particles had a theoretical composition of 3 weight percent yttrium oxide, 21 weight percent zinc oxide, and 76 weight percent silica. The measured B.E.T. specific surface area was 202 square meters per gram using a Gemini model 2360 analyzer (available from Micromeritics Instrument Corp., Norcross, Georgia), and the calculated average primary particle size was 11 nanometers.

### PARTICLE EXAMPLE 28

Particles from liquid precursors were prepared using the apparatus and conditions identified in Example 18 and the feed materials and amounts listed in Table 14.

**TABLE 14**

| Material | Amount |
|---|---|
| Molybdenum oxide bis(2,4-pentanedionate)⁸ | 91 grams |
| Methanol | 906 grams |
| Zinc 2-ethylhexanoate² | 185 grams |
| Tetraethoxysilane³ | 1101 grams |

| | |
|---|---|
| ⁸ Commercially available from Alfa Aesar, Ward Hill, Massachusetts. | |

The produced particles had a theoretical composition of 10 weight percent molybdenum oxide, 10.7 weight percent zinc oxide, and 79.3 weight percent silica. The measured B.E.T. specific surface area was 222 square meters per gram using the Gemini model 2360 analyzer and the calculated equivalent spherical diameter was 11 nanometers.

### PARTICLE EXAMPLE 29

Particles from liquid precursors were prepared using the apparatus and conditions identified in Example 18 and the feed materials and amounts listed in Table 15.

**TABLE 15**

| Material | Amount |
|---|---|
| Molybdenum oxide bis(2,4-pentanedioate⁸ | 27 grams |
| Methanol | 272 grams |
| Zinc 2-ethylhexanoate² | 334 grams |
| Tetraethoxysilane³ | 1079 grams |

The produced particles had a theoretical composition of 3 weight percent molybdenum oxide, 19.3 weight percent zinc oxide, and 77.7 weight percent silica. The measured B.E.T. specific surface area was 238 square meters per gram using the Gemini model 2360 analyzer and the calculated equivalent spherical diameter was 10 nanometers.

### PARTICLE EXAMPLE 30

Particles from liquid precursors were prepared using the apparatus and conditions identified in Example 18 and the feed materials and amounts listed in Table 16.

**TABLE 16**

| Material | Amount |
|---|---|
| Trimethoxyboroxine⁹ | 167 grams |
| Zinc 2-ethylhexanoate² | 188 grams |
| Tetraethoxysilane³ | 405 grams |
| Hexanes¹⁰ | 152 grams |
| Methyl ethyl ketone | 365 grams |

| | |
|---|---|
| ⁹ Commercially available from Alfa Aesar, Ward Hill, Massachusetts. ¹⁰ Commercially available from Sigma Aldrich Co., St Louis, Missouri. | |

The produced particles had a theoretical composition of 20 weight percent boron oxide, 21.7 weight percent zinc oxide, and 58.3 weight percent silica. The measured B.E.T. specific surface area was 184 square meters per gram using the Gemini model 2360 analyzer and the calculated equivalent spherical diameter was 13 nanometers.

### PARTICLE EXAMPLE 31

Particles from liquid precursors were prepared using the apparatus and conditions identified in Example 18 and the feed materials and amounts listed in Table 17.

**TABLE 17**

| Material | Amount |
|---|---|
| Trimethoxyboroxine⁹ | 251 grams |
| Aluminum sec-butoxide¹¹ | 413 grams |
| Tetraethoxysilane³ | 536 grams |

| | |
|---|---|
| ¹¹ Commercially available from Chattem Chemicals, Inc., Chattanooga, Tennessee. | |

The produced particles had a theoretical composition of 20 weight percent boron oxide, 28.5 wight percent aluminum oxide, and 51.5 weight percent silica. The measured B.E.T. specific surface area was 88 square meters per gram using the Gemini model 2360 analyzer and the calculated equivalent spherical diameter was 28 nanometers.

### PARTICLE EXAMPLE 32

Particles from liquid precursors were prepared using the apparatus and conditions identified in Example 18 and the feed materials and amounts listed in Table 18.

**TABLE 18**

| Material | Amount |
|---|---|
| Cerium 2-ethylhexanoate¹ | 20 grams |
| Zinc 2-ethylhexanoate² | 389 grams |
| Tetraethoxysilane³ | 1066 grams |

The produced particles had a theoretical composition of 22.5 weight percent zinc oxide, 0.75 weight percent cerium oxide, and 76.75 weight percent silica. The measured B.E.T. specific surface area was 218 square meters per gram using the Gemini model 2360 analyzer and the calculated equivalent spherical diameter was 10 nanometers.

### PARTICLE EXAMPLE 33

Particles from liquid precursors were prepared using the apparatus and conditions identified in Example 18 and the feed materials and amounts listed in Table 19.

**TABLE 19**

| Material | Amount |
|---|---|
| Cerium 2-ethylhexanoate¹ | 41 grams |
| Zinc 2-ethylhexanoate² | 375 grams |
| Tetraethoxysilane³ | 1067 grams |

The produced particles had a theoretical composition of 21.7 weight percent zinc oxide, 1.5 weight percent cerium oxide, and 76.8 weight percent silica. The measured B.E.T. specific surface area was 190 square meters per gram using the Gemini model 2360 analyzer and the calculated equivalent spherical diameter was 12 nanometers.

### PARTICLE EXAMPLE 34

Particles from liquid precursors were prepared using the apparatus and conditions identified in Example 18 and the feed materials and amounts listed in Table 20.

**TABLE 20**

| Material | Amount |
|---|---|
| Cerium 2-ethylhexanoate¹ | 81 grams |
| Zinc 2-ethylhexanoate² | 355 grams |
| Tetraethoxysilane³ | 1062 grams |

The produced particles had a theoretical composition of 20.5 weight percent zinc oxide, 3.0 weight percent cerium oxide, and 76.5 weight percent silica. The measured B.E.T. specific surface area was 152 square meters per gram using the Gemini model 2360 analyzer and the calculated equivalent spherical diameter was 15 nanometers.

### PARTICLE EXAMPLE 35

Particles from liquid precursors were prepared using the apparatus and conditions identified in Example 18 and the feed materials and amounts listed in Table 21.

**TABLE 21**

| Material | Amount |
|---|---|
| Cerium 2-ethylhexanoate¹ | 163 grams |
| Zinc 2-ethylhexanoate² | 311 grams |
| Tetraethoxysilane³ | 1056 grams |

The produced particles had a theoretical composition of 18 weight percent zinc oxide, 6 weight percent cerium oxide, and 76 weight percent silica. The measured B.E.T. specific surface area was 143 square meters per gram using the Gemini model 2360 analyzer and the calculated equivalent spherical diameter was 16 nanometers. A micrograph of a TEM image of a representative portion of the particles (50,000x magnification) was prepared. The micrograph was prepared by weighing out 0.2 to 0.4 grams of the particles and adding those particles to methanol present in an amount sufficient to yield an adequate particle density on a TEM grid. The mixture was placed in a sonicater for 20 minutes and then dispersed onto a 3 millimeter TEM grid coated with a uniform carbon film using a disposable pipette. After allowing the methanol to evaporate, the grid was loaded into a specimen holder which was then inserted into a TEM instrument.

### PARTICLE EXAMPLE 36

Particles from liquid precursors were prepared using the apparatus and conditions identified in Example 18, except that the feed materials and amounts are listed in Table 22, the plasma power input was 12 kilowatts instead of 24 kilowatts, and the quench air flow rate was 30 standard liters per minute rather than 100 standard liters per minute.

**TABLE 22**

| Material | Amount |
|---|---|
| Cerium 2-ethylhexanoate¹ | 81 grams |
| Zinc 2-ethylhexanoate² | 355 grams |
| Tetraethoxysilane³ | 1062 grams |

The produced particles had a theoretical composition of 20.5 weight percent zinc oxide, 3 weight percent cerium oxide, and 76.5 weight percent silica. The measured B.E.T. specific surface area was 95 square meters per gram using the Gemini model 2360 analyzer, and the calculated equivalent spherical diameter was 24 nanometers.

### PARTICLE EXAMPLE 37

Particles from liquid precursors were prepared using the apparatus and conditions identified in Example 18 and the feed materials and amounts listed in Table 23.

**TABLE 23**

| Material | Amount |
|---|---|
| Cerium 2-ethylhexanoate¹ | 81 grams |
| Zinc 2-ethylhexanoate² | 254 grams |
| Yttrium butoxide⁷ | 195 grams |
| Molybdenum oxide bis(2,4-pentanedionate)⁸ | 27 grams |
| Tetraethoxysilane³ | 1060 grams |
| Methanol | 272 grams |

The produced particles had a theoretical composition of 14.7 weight percent zinc oxide, 3 weight percent cerium oxide, 3 weight percent molybdenum oxide, 3 weight percent yttrium oxide, and 76.3 weight percent silica. The measured B.E.T. specific surface area was 157 square meters per gram using the Gemini model 2360 analyzer, and the calculated equivalent spherical diameter was 15 nanometers.

### PARTICLE EXAMPLE 38

Particles from liquid precursors were prepared using the apparatus and conditions identified in Example 18 and the feed materials and amounts listed in Table 24.

**TABLE 24**

| Material | Amount |
|---|---|
| Cerium 2-ethylhexanoate¹ | 271 grams |
| Zinc 2-ethylhexanoate² | 254 grams |
| Tetraethoxysilane³ | 1046 grams |

The produced particles had a theoretical composition of 14.7 weight percent zinc oxide, 10 weight percent cerium oxide, and 75.3 weight percent silica. The measured B.E.T. specific surface area was 130 square meters per gram using the Gemini model 2360 analyzer, and the calculated equivalent spherical diameter was 17 nanometers.

### PARTICLE EXAMPLE 39

Particles from liquid precursors were prepared using the apparatus and conditions identified in Example 18 and the feed materials and amounts listed in Table 25.

**TABLE 25**

| Material | Amount |
|---|---|
| Cerium 2-ethylhexanoate¹ | 81 grams |
| Zinc 2-ethylhexanoate² | 355 grams |
| Tetraethoxysilane³ | 1062 grams |

The produced particles had a theoretical composition of 20.5 weight percent zinc oxide, 3 weight percent cerium oxide, and 76.5 weight percent silica. The measured B.E.T. specific surface area was 114 square meters per gram using the Gemini model 2360 analyzer and the calculated equivalent spherical diameter was 20 nanometers. A TEM image of a representative portion of the particles (50,00x magnification) was prepared in the manner described in Particle Example 35. The calculated average primary particle size from the TEM image was 18.7 nanometers.

### PARTICLE EXAMPLE 40

Particles from liquid precursors were prepared using the apparatus and conditions identified in Example 18 and the feed materials and amounts listed in Table 26.

**TABLE 26**

| Material | Amount |
|---|---|
| Cerium 2-ethylhexanoate¹ | 81 grams |
| Aluminum sec-butoxide¹¹ | 522 grams |
| Tetraethoxysilane³ | 972 grams |

The produced particles had a theoretical composition of 27 weight percent aluminum oxide, 3 weight percent cerium oxide, and 70 weight percent silica. The measured B.E.T. specific surface area was 138 square meters per gram using the Gemini model 2360 analyzer and the calculated equivalent spherical diameter was 17 nanometers. A micrograph of a TEM image of a representative portion of the particles (100,000x magnification) was prepared in the manner described in Particle Example 35. The calculated average primary particle size from the TEM image was 18.8 nanometers.

### PARTICLE EXAMPLE 41

Particles from liquid precursors were prepared using the apparatus and conditions identified in Example 18, except that the feed materials and amounts are listed in Table 27, the converging-diverging nozzle diameter was 15 millimeters rather than 10 millimeters, the plasma power input was 12 kilowatts instead of 24 kilowatts, and the quench air flow rate was 30 standard liters per minute rather than 100 standard liters per minute.

**TABLE 27**

| Material | Amount |
|---|---|
| Cerium 2-ethylhexanoate¹ | 271 grams |
| Zinc 2-ethylhexanoate² | 254 grams |
| Tetraethoxysilane³ | 1046 grams |

The produced particles had a theoretical composition of 20.5 weight percent zinc oxide, 3 weight percent cerium oxide, and 76.5 weight percent silica. The measured B.E.T. specific surface area was 98 square meters per gram using the Gemini model 2360 analyzer and the calculated equivalent spherical diameter was 23 nanometers.

### PARTICLE EXAMPLE 42

Particles from liquid precursors were prepared using the apparatus and conditions identified in Example 18, except that the feed materials and amounts are listed in Table 28 and the converging-diverging nozzle diameter was 15 millimeters rather than 10 millimeters.

**TABLE 28**

| Material | Amount |
|---|---|
| Cerium 2-ethylhexanoate¹ | 271 grams |
| Zinc 2-ethylhexanoate² | 254 grams |
| Tetraethoxysilane³ | 1046 grams |

The produced particles had a theoretical composition of 14.7 weight percent zinc oxide, 10 weight percent cerium oxide, and 75.3 weight percent silica. The measured B.E.T. specific surface area was 196 square meters per gram using the Gemini model 2360 analyzer and the calculated equivalent spherical diameter was 11 nanometers.

### PARTICLE EXAMPLE 43

Particles from liquid precursors were prepared using the apparatus and conditions identified in Example 18, except that the feed materials and amounts are listed in Table 29, the converging-diverging nozzle diameter was 15 millimeters rather than 10 millimeters, the plasma power input was 12 kilowatts instead of 24 kilowatts, and the quench air flow rate was 30 standard liters per minute rather than 100 standard liters per minute.

**TABLE 29**

| Material | Amount |
|---|---|
| Cerium 2-ethylhexanoate¹ | 81 grams |
| Zinc 2-ethylhexanoate² | 355 grams |
| Tetraethoxysilane³ | 1062 grams |

The produced particles had a theoretical composition of 20.5 weight percent zinc oxide, 3 weight percent cerium oxide, and 76.5 weight percent silica. The measured B.E.T. specific surface area was 114 square meters per gram using the Gemini model 2360 analyzer and the calculated equivalent spherical diameter was 20 nanometers.

### PARTICLE EXAMPLE 44

Particles from liquid precursors were prepared using the apparatus and conditions identified in Example 18, except that the feed materials and amounts are listed in Table 30 and the converging-diverging nozzle diameter was 15 millimeters rather than 10 millimeters.

**TABLE 30**

| Material | Amount |
|---|---|
| Cerium 2-ethylhexanoate¹ | 81 grams |
| Trimethoxyboroxine⁹ | 355 grams |
| Tetraethoxysilane³ | 1062 grams |

The produced particles had a theoretical composition of 20.5 weight percent zinc oxide, 3 weight percent cerium oxide, and 76.5 weight percent silica. The measured B.E.T. specific surface area was 229 square meters per gram using the Gemini model 2360 analyzer and the calculated equivalent spherical diameter was 10 nanometers.

### PARTICLE EXAMPLE 45

Particles from liquid precursors were prepared using the apparatus and conditions identified in Example 18 and the feed materials and amounts listed in Table 31.

**TABLE 31**

| Material | Amount |
|---|---|
| Cerium 2-ethylhexanoate¹ | 163 grams |
| Trimethoxyboroxine⁹ | 99 grams |
| Tetraethoxysilane³ | 583 grams |
| Methyl ethyl ketone | 365 grams |

The produced particles had a theoretical composition of 10 weight percent boron oxide, 6 weight percent cerium oxide, and 84 weight percent silica. The measured B.E.T. specific surface area was 124 square meters per gram using the Gemini model 2360 analyzer and the calculated equivalent spherical diameter was 19 nanometers.

### PARTICLE EXAMPLE 46

Particles from liquid precursors were prepared using the apparatus and conditions identified in Example 18 and the feed materials and amounts listed in Table 32.

**TABLE 32**

| Material | Amount |
|---|---|
| Cerium 2-ethylhexanoate¹ | 163 grams |
| Zinc 2-ethylhexanoate² | 156 grams |
| Trimethoxyboroxine⁹ | 99 grams |
| Tetraethoxysilane³ | 458 grams |
| Hexanes¹⁰ | 152 grams |
| Methyl ethyl ketone | 365 grams |

The produced particles had a theoretical composition of 18 weight percent zinc oxide, 10 weight percent boron oxide, 6 weight percent cerium oxide, and 66 weight percent silica. The measured B.E.T. specific surface area was 143 square meters per gram using the Gemini model 2360 analyzer and the calculated equivalent spherical diameter was 17 nanometers.

### PARTICLE EXAMPLE 47

Particles from liquid precursors were prepared using the apparatus and conditions identified in Example 18 and the feed materials and amounts listed in Table 33.

**TABLE 33**

| Material | Amount |
|---|---|
| Cerium 2-ethylhexanoate¹ | 389 grams |
| Triethylphosphate⁵ | 411 grams |
| Tetraethoxysilane³ | 521 grams |

The produced particles had a theoretical composition of 22.5 weight percent zinc oxide, 40 weight percent phosphorous oxide, and 37.5 weight percent silica. The measured B.E.T. specific surface area was 84 square meters per gram using the Gemini model 2360 analyzer and the calculated equivalent spherical diameter was 27 nanometers.

### PARTICLE EXAMPLE 48

Particles from liquid precursors were prepared using the apparatus and conditions identified in Example 18 and the feed materials and amounts listed in Table 34.

**TABLE 34**

| Material | Amount |
|---|---|
| Cerium 2-ethylhexanoate¹ | 163 grams |
| Tetraethoxysilane³ | 1306 grams |

The produced particles had a theoretical composition of 6 weight percent cerium oxide and 94 weight percent silica. The measured B.E.T. specific surface area was 156.2 square meters per gram using the Gemini model 2360 analyzer and the calculated equivalent spherical diameter was 14 nanometers.

### PARTICLE EXAMPLE 49

Particles from liquid precursors were prepared using the apparatus and conditions identified in Example 18 and the feed materials and amounts listed in Table 35.

**TABLE 35**

| Material | Amount |
|---|---|
| Cerium 2-ethylhexanoate¹ | 163 grams |
| Tetraethoxysilane³ | 1306 grams |

The produced particles had a theoretical composition of 6 weight percent cerium oxide, and 94 weight percent silica. The measured B.E.T. specific surface area was 240 square meters per gram using the Gemini model 2360 analyzer and the calculated equivalent spherical diameter was 11 nanometers.

### PARTICLE EXAMPLE 50

Particles were prepared using a DC thermal plasma system that included a DC plasma torch (Model SG-100 Plasma Spray Gun commercially available from Praxair Technology, Inc., Danbury, Connecticut) operated with 60 standard liters per minute of argon carrier gas and 25 kilowatts of power delivered to the torch. A solid precursor feed composition comprising the materials and amounts listed in Table 36 was prepared and fed to the reactor at a rate of 2.5 grams per minute through a gas assistant powder feeder (Model 1264 commercially available from Praxair Technology) located at the plasma torch outlet. At the powder feeder, 3.8 standard liters per minute argon was delivered as a carrier gas. Oxygen was delivered at 7 standard liters per minute through two ¹/₈" diameter nozzles located 180° apart at 0.69" downstream of the powder injection port. Following a 7.7 inch long reactor section, a plurality of quench stream injection ports were provided that included 6 ¹/₈ inch diameter nozzles located 60° apart radially. A 7 millimeter diameter converging-diverging nozzle of the type described in United States Patent No. RE 37,853E was located 3 inches downstream of the quench stream injection ports. Quench air was injected through the plurality of at the quench stream injection ports at a rate of 30 standard liters per minute.

**TABLE 36**

| Material | Amount |
|---|---|
| Cerium acetate¹² | 33.2 grams |
| Zinc oxide¹³ | 54 grams |
| Silica¹⁴ | 228 grams |

| | |
|---|---|
| ¹² Commercially available from Alfa Aesar, Ward Hill, Massachusetts. ¹³ Commercially available from Alfa Aesar, Ward Hill, Massachusetts. ¹⁴ Commercially available under the tradename WB-10 from PPG Industries, Inc., Pittsburgh, PA. | |

The produced particles had a theoretical composition of 6 weight percent cerium oxide, 18 weight percent zinc oxide, and 76 weight percent silica. The measured B.E.T. specific surface area was 105 square meters per gram using the Gemini model 2360 analyzer and the calculated equivalent spherical diameter was 23 nanometers.

### PARTICLE EXAMPLE 51

Particles from liquid precursors were prepared using the apparatus and conditions identified in Example 18 and the feed materials and amounts listed in Table 37.

**TABLE 37**

| Material | Amount |
|---|---|
| Cerium 2-ethylhexanoate¹ | 163 Grams |
| Zinc 2-ethylhexanoate² | 311 grams |
| Tetraethoxysilane³ | 1056 grams |

The produced particles had a theoretical composition of 6 weight percent cerium oxide, 18 weight percent zinc oxide, and 76 weight percent silica. The measured B.E.T. specific surface area was 134 square meters per gram using the Gemini model 2360 analyzer and the calculated equivalent spherical diameter was 17 nanometers.

### PARTICLE EXAMPLE 52

Particles from liquid precursors were prepared using the apparatus and conditions identified in Example 18 and the feed materials and amounts listed in Table 38.

**TABLE 38**

| Material | Amount |
|---|---|
| Calcium methoxide⁴ | 116 grams |
| Butanol | 116 grams |
| 2-ethylhexanoic acid¹⁵ | 582 grams |
| Tetraethoxysilane³ | 820 grams |

| | |
|---|---|
| ¹⁵Commercially available from Alfa Aesar, Ward Hill, Massachusetts. | |

The produced particles had a theoretical composition of 21.3 weight percent calcium oxide, and 78.7 weight percent silica. The measured B.E.T. specific surface area was 116 square meters per gram using the Gemini model 2360 analyzer and the calculated equivalent spherical diameter was 21 nanometers.

### PARTICLE EXAMPLE 53

Particles from liquid precursors were prepared using the apparatus and conditions identified in Example 18 and the feed materials and amounts listed in Table 39.

**TABLE 39**

| Material | Amount |
|---|---|
| Calcium methoxide⁴ | 55 grams |
| Zinc 2-ethylhexanoate² | 160 grams |
| Tetraethoxysilane³ | 809 grams |
| Butanol | 55 grams |
| 2-ethylhexanoic acid¹⁵ | 273 grams |

The produced particles had a theoretical composition of 10 weight percent calcium oxide, 12.3 weight percent zinc oxide, and 77.7 weight percent silica. The measured B.E.T. specific surface area was 124 square meters per gram using the Gemini model 2360 analyzer and the calculated equivalent spherical diameter was 19 nanometers.

### PARTICLE EXAMPLE 54

Particles from liquid precursors were prepared using the apparatus and conditions identified in Example 18 and the feed materials and amounts listed in Table 40.

**TABLE 40**

| Material | Amount |
|---|---|
| Cerium 2-ethylhexanoate¹ | 163 grams |
| Zinc 2-ethylhexanoate² | 311 grams |
| Tetraethoxysilane³ | 1056 grams |

The produced particles had a theoretical composition of 6 weight percent cerium oxide, 18 weight percent zinc oxide, and 76 weight percent silica. The measured B.E.T. specific surface area was 135 square meters per gram using the Gemini model 2360 analyzer and the calculated equivalent spherical diameter was 17 nanometers.

### PARTICLE EXAMPLE 55

Particles from solid precursors were prepared using the apparatus and conditions identified in Example 50 and the feed materials and amounts listed in Table 41.

**TABLE 41**

| Material | Amount |
|---|---|
| Cerium acetate¹² | 33.2 grams |
| Silica¹⁴ | 282 grams |

The produced particles had a theoretical composition of 6 weight percent cerium oxide and 94 weight percent silica. The measured B.E.T. specific surface area was 156 square meters per gram using the Gemini model 2360 analyzer and the calculated equivalent spherical diameter was 15 nanometers.

### PARTICLE EXAMPLE 56

Particles from solid precursors were prepared using the apparatus and conditions identified in Example 50 and the feed materials and amounts listed in Table 42.

**TABLE 42**

| Material | Amount |
|---|---|
| Zinc Oxide¹³ | 54 grams |
| Silica¹⁴ | 246 grams |

The produced particles had a theoretical composition of 18 weight percent zinc oxide and 82 weight percent silica. The measured B.E.T. specific surface area was 107 square meters per gram using the Gemini model 2360 analyzer and the calculated equivalent spherical diameter was 22 nanometers.

### PARTICLE EXAMPLE 57

Particles from solid precursors were prepared using the apparatus and conditions identified in Example 50 and the feed materials and amounts listed in Table 43.

**TABLE 43**

| Material | Amount |
|---|---|
| Cerium acetate¹² | 8.3 grams |
| Zinc Oxide¹³ | 65.1 grams |
| Silica¹⁴ | 230.4 grams |

The produced particles had a theoretical composition of 1.5 weight percent cerium oxide, 21.7 weight percent zinc oxide, and 76.8 weight percent silica. The measured B.E.T. specific surface area was 106 square meters per gram using the Gemini model 2360 analyzer and the calculated equivalent spherical diameter was 22 nanometers.

### PARTICLE EXAMPLE 58

Particles from solid precursors were prepared using the apparatus and conditions identified in Example 50 and the feed materials and amounts listed in Table 44.

**TABLE 44**

| Material | Amount |
|---|---|
| Cerium acetate¹² | 55.2 grams |
| Zinc Oxide¹³ | 44.1 grams |
| Silica¹⁴ | 225.9 grams |

The produced particles had a theoretical composition of 10 weight percent cerium oxide, 14.7 weight percent zinc oxide, and 75.3 weight percent silica. The measured B.E.T. specific surface area was 93 square meters per gram using the Gemini model 2360 analyzer and the calculated equivalent spherical diameter was 24 nanometers.

### PARTICLE EXAMPLE 59

Particles from liquid precursors were prepared using the apparatus and conditions identified in Example 18 and the feed materials and amounts listed in Table 45.

**TABLE 45**

| Material | Amount |
|---|---|
| Calcium methoxide⁴ | 116 grams |
| Butanol | 116 grams |
| 2-ethylhexanoic acid | 582 grams |
| Tetraethoxysilane³ | 820 grams |

The produced particles had a theoretical composition of 21 weight percent calcium oxide, and 76 weight percent silica. The measured B.E.T. specific surface area was 162 square meters per gram using the Gemini model 2360 analyzer and the calculated equivalent spherical diameter was 15 nanometers.

### PARTICLE EXAN1PLE 60

Particles from liquid precursors were prepared using the apparatus and conditions identified in Example 18, except that the liquid reactant feed composition comprised the materials and amounts listed in Table 46.

**TABLE 46**

| Material | Amount |
|---|---|
| Yttrium butoxide⁷ | 195 grams |
| Zinc-2 ethylhexanoate² | 363 grams |
| Tetraethoxysilane³ | 1056 grams |

The produced particles had a theoretical composition of 3 weight percent yittrium oxide, 21 weight percent zinc oxide, and 76 weight percent silica. The measured B.E.T. specific surface area was 181 square meters per gram using a Gemini model 2360 analyzer and the calculated average primary particle size was 13 nanometers.

### PARTICLE EXAMPLE 61

Particles from solid precursors were prepared using the apparatus and conditions identified in Example 50, except that quench air was injected at the quench gas injection ports at a rate of 100 standard liters per minute, and the feed materials and amounts are listed in Table 47.

**TABLE 47**

| Material | Amount |
|---|---|
| Magnesium oxide^{##1} | 25 grams |
| Silica¹⁴ | 75 grams |

| | |
|---|---|
| ^{##1} Commercially available from Sigma Aldrich Co., St Louis, Missouri. | |

The produced particles had a theoretical composition of 25 weight percent magnesium oxide and 75 weight percent silica. The measured B.E.T. specific surface area was 162 square meters per gram using the Gemini model 2360 analyzer and the calculated equivalent spherical diameter was 15 nanometers.

### PARTICLE EXAMPLE 62

Particles from solid precursors were prepared using the apparatus and conditions identified in Example 50, except that quench air was injected at the quench gas injection ports at a rate of 100 standard liters per minute, 15 kilowatts of power was delivered to the torch, and the feed materials and amounts are listed in Table 48.

**TABLE 48**

| Material | Amount |
|---|---|
| Tin (IV) oxide^{##2} | 60 grams |
| Silica¹⁴ | 40 grams |

| | |
|---|---|
| ^{##2}Commercially available from Alfa Aesar, Ward Hill, Massachusetts. | |

The produced particles had a theoretical composition of 60 weight percent Tin oxide and 40 weight percent silica. The measured B.E.T. specific surface area was 161 square meters per gram using the Gemini model 2360 analyzer and the calculated equivalent spherical diameter was 7 nanometers.

### PARTICLE EXAMPLE 63

Particles from solid precursors were prepared using the apparatus and conditions identified in Example 50, except that 15 kilowatts of power was delivered to the torch, quench argon was injected at the quench gas injection ports at a rate of 100 standard liters per minute, and the feed materials and amounts are listed in Table 49.

**TABLE 49**

| Material | Amount |
|---|---|
| Tin(IV) oxide^{##2} | 80 grams |
| Tin(II) oxide^{##3} | 20 grams |

| | |
|---|---|
| ^{##3} Commercially available from Sigma Aldrich Co., St Louis, Missouri. | |

The produced particles had a theoretical composition of 80 weight percent Tin(IV) oxide and 20 weight percent Tin(II) oxide. The measured B.E.T. specific surface area was 59 square meters per gram using the Gemini model 2360 analyzer and the calculated equivalent spherical diameter was 15 nanometers.

The following Coating Composition Examples describe the preparation, application, and testing of various coating compositions.

### COATING COMPOSITION EXAMPLES 1A TO 1E

Coating compositions were prepared using the components and weights (in grams) shown in Table 50. All materials in the A pack of the formulation, were added under agitation with a Cowles blade in the order listed up to ethanol. 17.42 grams of ethanol was held out from the total until later in the preparation. Next, the poly(vinyl butyral) resin was slowly added while still under agitation and left to mix for 15 minutes. Epoxy resin was then added. Next, corrosion resisting particles, if any, and pigment(s) were added with heavy mixing for about ten minutes. Then, the rest of the ethanol and other solvents were slowly added. This final mixture was allowed to mix for ten minutes and was then added to a sealed 8 ounce glass container containing approximately 150 grams of the above material to approximately 125 gram of zircoa beads. This sealed container was then left on a paint shaker for two to 4 hours. After removing the paste from the paint shaker, the milling beads were filtered out with a standard paint filter and the finished material was ready.

The B pack of the formulation was prepared by adding the components to a suitable vessel under agitation with a paddle blade and allowing to mix for 20 minutes. When ready to spray, the two compositions were mixed.

**TABLE 50**

| Pack | Material | Example 1A | Example 1B | Example 1C | Example 1D | Example 1E |
|---|---|---|---|---|---|---|
| A | DOWANOL PM¹ | 9.18 | 9.18 | 9.18 | 9.18 | 9.18 |
| A | BLS-2700² | 10.17 | 10.17 | 10.17 | 10.17 | 10.17 |
| A | Ethanol³ | 56.51 | 56.51 | 56.51 | 56.51 | 56.51 |
| A | Butvar B-90⁴ | 6.9 | 6.9 | 6.9 | 6.9 | 6.9 |
| A | EPON 834-X-80⁵ | 3 | 3 | 3 | 3 | 3 |
| A | Particle Example 5 | - | 2.26 | - | - | - |
| A | Particle Example 9 | - | - | 2.26 | - | - |
| A | Particle Example 10 | - | - | - | 2.26 | - |
| A | Particle Example 7 | - | - | - | - | 2.26 |
| A | K-White G105⁶ | 2.26 | 2.26 | 2.26 | 2.26 | 2.26 |
| A | Aerosil 200⁷ | 0.6 | 0.6 | 0.6 | 0.6 | 0.6 |
| A | Toluene⁸ | 6.91 | 6.91 | 6.91 | 6.91 | 6.91 |
| A | Xylene⁹ | 5.19 | 5.19 | 5.19 | 5.19 | 5.19 |
| A | Isobutyl Alcohol¹⁰ | 5.89 | 5.89 | 5.89 | 5.89 | 5.89 |
| B | Ethanol³ | 85.28 | 85.28 | 85.28 | 85.28 | 85.28 |
| B | Butanol¹¹ | 9.43 | 9.43 | 9.43 | 9.43 | 9.43 |
| B | Phosphoric Acid 85%¹² | 1.59 | 1.59 | 1.59 | 1.59 | 1.59 |
| B | Deionized Water | 0.09 | 0.09 | 0.09 | 0.09 | 0.09 |

| | | | | | | |
|---|---|---|---|---|---|---|
| ¹ Propylene glycol monomethyl ether commercially available from BASF Corp. ² Phenolic resin commercially available from Georgia Pacific ³ Organic solvent commercially available from ChemCentral Corp. ⁴ Poly (vinyl butyral) resin commercially available from Solutia Inc. ³ Epichlorohydrin-Bisphenol A resin commercially available from Resolution Performance Products ⁶ Aluminum triphosphate compound commercially available from Tayca ⁷ Silicon dioxide commercially available from Cabot Corp. ⁸ Commercially available from Ashland Chemical Co. ⁹ Commercially available from Ashland Chemical Co. ¹⁰ Commercially available from Avecia. ¹¹ Commercially available from BASF Corp. ¹² Commercially available from Akzo Chemicals Inc. | | | | | | |

### Test Substrates

The compositions of Table 50, as well as Examples 1F and 1G (described below), were applied to the test substrates identified in Table 51. The substrates were prepared by first cleaning with a wax and greaser remover (DX330, commercially available from PPG Industries, Inc.) and allowed to dry. The panels were then sanded with 180 grit using a DA orbital sander and again cleaned with DX330. The compositions were applied using a DeVilbiss GTI HVLP spray gun with a 1.4 spray tip, N2000 Cap, and 30 psi at gun. Each composition was applied in two coats with a five-minute flash in between to film builds of 0.50 to approximately 1.25 mils (12.7 to 31.8 microns). A minimum of twenty to thirty minutes and no more than one hour of time was allowed to elapse before applying a PPG Industries, Inc. global sealer D 839 over each composition. The sealer was mixed and applied as a wet-on-wet sealer to approximately 1.0 to 2.0 mils (25.4 to 50.8 microns) of paint and allowed to flash forty-five minutes before applying base coat. Deltron DBC base coat, commercially available from PPG Industries, Inc., was applied over the sealer in two coats with five to ten minutes flash time between coats to a film build thickness of approximately 0.5 mils (12.7 microns). The base coat was allowed approximately fifteen minutes time to flash before applying D893 Global clear coat, commercially available from PPG Industries, Inc., in two coats with five to ten minutes to flash between coats to a film build of 2.50 to 3.00 mils (63.5 to 76.2 microns). Sealer, base coat, and clear coat were mixed as the procedure for these products recommended by PPG Industries, Inc. Salt spray resistance was tested as described in ASTM B117. Panels removed from salt spray testing after 1000 hours were measured for scribe creep across the scribe. Scribe creep values were reported as an average of six (6) measurements. Results are illustrated in Table 51, with lower value indicated better corrosion resistance results.

**TABLE 51**

| Substrate | Example 1A | Example 1B | Example 1C | Example 1D | Example 1E | Example 1F¹³ | Example 1G¹⁴ |
|---|---|---|---|---|---|---|---|
| Cold Rolled Steel (APR10288) | 4.3 | 11.1 | 9.5 | 3.9 | 8.3 | 22 | 0 |
| G-60 Galvanized (PR18661) | 7.2 | 3.3 | 1.1 | 0 | 0 | 4.3 | 0 |
| Aluminum (APR21047) | 10.5 | Delaminated | Delaminated | Delaminated | Delaminated | 1 | 0 |

| | | | | | | | |
|---|---|---|---|---|---|---|---|
| ¹³D-831 commercially available from PPG Industries, Inc., Pittsburgh, PA. ¹⁴ D8099 Fast Drying-And-Corrosion Etch Primer commercially available from PPG Industries, Inc., Pittsburgh, PA. | | | | | | | |

### COATING COMPOSITION EXAMPLES 2A TO 2F

Coating compositions were prepared using the components and weights (in grams) shown in Table 52. Coatings were prepared in the same manner as described for Coating Composition Examples 1A to 1E.

**TABLE 52**

| Pack | Material | Example 2A | Example 2B | Example 2C | Example 2D | Example 2E | Example 2F |
|---|---|---|---|---|---|---|---|
| A | DOWANOL PM¹ | 9.18 | 9.18 | 9.18 | 9.18 | 9.18 | 9.18 |
| A | BLS-2700² | 10.17 | 10.17 | 10.17 | 10.17 | 10.17 | 10.17 |
| A | Ethanol³ | 56.51 | 56.51 | 56.51 | 56.51 | 56.51 | 56.51 |
| A | Butvar B-90⁴ | 6.9 | 6.9 | 6.9 | 6.9 | 6.9 | 6.9 |
| A | EPON 834-X-80⁵ | 3 | 3 | 3 | 3 | 3 | 3 |
| A | Particle Example 5 | - | 2.26 | - | - | - | - |
| A | Particle Example 10 | - | - | - | - | - | 2.26 |
| A | Particle Example 8 | - | - | 2.26 | - | - | - |
| A | Particle Example 15 | - | - | - | 2.26 | - | - |
| A | Particle Example 6 | - | - | - | - | 2.26 | - |
| A | K-White G105⁶ | 2.26 | 2.26 | 2.26 | 2.26 | 2.26 | 2.26 |
| A | Aerosil 200⁷ | 0.6 | 0.6 | 0.6 | 0.6 | 0.6 | 0.6 |
| A | Toluene⁸ | 6.91 | 6.91 | 6.91 | 6.91 | 6.91 | 6.91 |
| A | Xylene⁹ | 5.19 | 5.19 | 5.19 | 5.19 | 5.19 | 5.19 |
| A | Isobutyl Alcohol¹⁰ | 5.89 | 5.89 | 5.89 | 5.89 | 5.89 | 5.89 |
| B | Ethanol³ | 85.28 | 85.28 | 85.28 | 85.28 | 85.28 | 85.28 |
| B | Butanol¹¹ | 9.43 | 9.43 | 9.43 | 9.43 | 9.43 | 9.43 |
| B | Phosphoric Acid 85%¹² | 1.59 | 1.59 | 1.59 | 1.59 | 1.59 | 1.59 |
| B | Deionized Water | 0.09 | 0.09 | 0.09 | 0.09 | 0.09 | 0.09 |

### Test Substrates

The compositions of Table 53, as well as Examples 2F and 2G (described below), were applied to the test substrates identified in Table 53 using the same procedure as was described above for Coating Composition Examples 1A to 1G. Results are illustrated in Table 53, with lower value indicated better corrosion resistance results.

**TABLE 53**

| Substrate | Example 2A | Example 2B | Example 2C | Example 2D | Example 2E | Example 2F | Example 2G¹³ | Example 2H¹⁴ |
|---|---|---|---|---|---|---|---|---|
| Cold Rolled Steel (APR10288) | 4.2 | 11.3 | 2.3 | 10 | 7.7 | 13.7 | 23 | 10.3 |
| G-60 Galvanized (APR18661) | 5.3 | 2 | 1.2 | 0.9 | 0 | 0.5 | 1.3 | 0 |
| Aluminum (APR21047) | Delaminated | Delaminated | Delaminated | Delaminated | Delaminated | Delaminated | 0.5 | 0 |

### COATING COMPOSITION EXAMPLES 3A TO 3D

Coating compositions were prepared using the components and weights (in grams) shown in Table 54. Coatings were prepared in the same manner as described for Coating Composition Examples 1A to 1E.

**TABLE 54**

| Pack | Material | Example 3A | Example 3B | Example 3C | Example 3D |
|---|---|---|---|---|---|
| A | DOWANOL PM¹ | 8.82 | 9.18 | 9.18 | 9.18 |
| A | BLS-2700² | 9.77 | 10.17 | 10.17 | 10.17 |
| A | Ethanol³ | 54.28 | 56.51 | 56.51 | 56.51 |
| A | Butvar B-90⁴ | 6.63 | 6.9 | 6.9 | 6.9 |
| A | EPON 834-X-80⁵ | 2.88 | - | - | - |
| A | Particle Example 5 | 2.17 | - | - | - |
| A | Particle Example 12 | - | 2.17 | - | - |
| A | Particle Example 13 | - | - | - | 2.17 |
| A | Particle Example 14 | - | - | 2.17 | - |
| A | Aerosil 200⁷ | 0.58 | 0.58 | 0.58 | 0.58 |
| A | Toluene⁸ | 6.64 | 6.64 | 6.64 | 6.64 |
| A | Xylene⁹ | 4.99 | 4.99 | 4.99 | 4.99 |
| A | Isobutyl Alcohol¹⁰ | 5.66 | 5.66 | 5.66 | 5.66 |
| B | Ethanol³ | 81.92 | 81.92 | 81.92 | 81.92 |
| B | Butanol¹¹ | 9.06 | 9.06 | 9.06 | 9.06 |
| B | Phosphoric Acid 85%¹² | 1.53 | 1.53 | 1.53 | 1.53 |
| B | Deionized Water | 0.09 | 0.09 | 0.09 | 0.09 |

### Test Substrates

The compositions of Table 54, as well as Examples 3E and 3F (described below), were applied to the test substrates identified in Table 55 using the same procedure as was described above for Coating Composition Examples 1A to 1G. Results are illustrated in Table 55, with lower value indicated better corrosion resistance results.

**TABLE 55**

| Substrate | Example 3A | Example 3B | Example 3C | Example 3D | Example 3E¹⁵ | Example 3F¹⁴ |
|---|---|---|---|---|---|---|
| Cold Rolled Steel (APR10288) | Delaminated | 12.7 | 9 | 14.5 | Delaminated | 2.7 |
| G-60 Galvanized (PR18661) | 14.3 | 7.2 | 7 | 9.3 | 11.8 | 2.2 |
| Aluminum (APR21047) | 6.2 | 9.2 | 4.7 | 4.5 | 4.7 | 0.5 |

| | | | | | | |
|---|---|---|---|---|---|---|
| ¹⁵DPX-171 commercially available from PPG Industries, Inc., Pittsburgh, PA. | | | | | | |

### COATING COMPOSITION EXAMPLE 4A

Coating composition 4A was prepared using the components and weights (in grams) shown in Table 56. The coating was prepared in the same manner as described for Coating Composition Examples 1A to 1E.

**TABLE 56**

| Pack | Material | Example 4A |
|---|---|---|
| A | DOWANOL PM¹ | 9.18 |
| A | BLS-2700² | 10.17 |
| A | Ethanol³ | 56.51 |
| A | Butvar B-90⁴ | 6.9 |
| A | EPON 834-X-80⁵ | 3 |
| A | Particle Example 11 | 2.26 |
| A | Aerosil 200⁷ | 0.6 |
| A | Toluene⁸ | 6.91 |
| A | Xylene⁹ | 5.19 |
| A | Isobutyl Alcohol¹⁰ | 5.89 |
| B | Ethanol³ | 85.28 |
| B | Butanol¹¹ | 9.43 |
| B | Phosphoric Acid 85%¹² | 1.59 |
| B | Deionized Water | 0.09 |

### Test Substrates

The composition of Table 56, as well as Examples 4B and 4C (described below), were applied to the test substrates identified in Table 57 using the same procedure as was described above for Coating Composition Examples 1A to 1G. Results are illustrated in Table 57, with lower value indicated better corrosion resistance results.

**TABLE 57**

| Substrate | Example 4A | Example 4B¹⁵ | Example 4C¹⁴ |
|---|---|---|---|
| Cold Rolled Steel (APR10288) | 2.1 | 24.2 | 0 |
| G-60 Galvanized (APR18661) | 73 | 2 | 0 |
| Aluminum (APR21047) | Delaminated | 0.7 | 0 |

### COATING COMPOSITION EXAMPLES 5A TO 5G

Coating compositions were prepared using the components and weights (in grams) shown in Table 58. Coatings were prepared in the same manner as described for Coating Composition Examples 1A to 1E.

**TABLE 58**

| Pack | Material | Example 5A | Example 5B | Example 5C | Example 5D | Example 5E | Example 5F | Example 5G |
|---|---|---|---|---|---|---|---|---|
| A | DOWANOL PM¹ | 9.18 | 9.18 | 9.18 | 9.18 | 9.18 | 9.18 | 9.18 |
| A | BLS-2700² | 10.17 | 10.17 | 10.17 | 10.17 | 10.17 | 10.17 | 10.17 |
| A | Ethanol³ | 56.51 | 56.51 | 56.51 | 56.51 | 56.51 | 56.51 | 56.51 |
| A | Butvar B-90⁴ | 6.9 | 6.9 | 6.9 | 6.9 | 6.9 | 6.9 | 6.9 |
| A | Zinc chromate¹⁶ | 2.26 | - | - | - | - | - | - |
| A | Magnesium Oxide¹⁷ | - | 2.26 | - | - | - | - | - |
| A | Particle Example 1 | - | - | 2.26 | | - | - | - |
| A | Particle Example 2 | - | - | - | 2.26 | - | - | - |
| A | Particle Example 3 | - | - | - | - | 2.26 | - | - |
| A | Particle Example 4 | - | - | - | - | - | 2.26 | - |
| A | Nalzin-2¹⁸ | - | - | - | - | - | - | 2.26 |
| A | Aerosil 200⁷ | 0.6 | 0.6 | 0.6 | 0.6 | 0.6 | 0.6 | 0.6 |
| A | Toluene⁸ | 6.91 | 6.91 | 6.91 | 6.91 | 6.91 | 6.91 | 6.91 |
| A | Xylene⁹ | 5.18 | 5.18 | 5.18 | 5.18 | 5.18 | 5.18 | 5.18 |
| A | Isobutyl Alcohol¹⁰ | 5.89 | 5.89 | 5.89 | 5.89 | 5.89 | 5.89 | 5.89 |
| B | Ethanol³ | 85.28 | 85.28 | 85.28 | 85.28 | 85.28 | 85.28 | 85.28 |
| B | Butanol¹¹ | 9.43 | 9.43 | 9.43 | 9.43 | 9.43 | 9.43 | 9.43 |
| B | Phosphoric Acid 85%¹² | 1.59 | 1.59 | 1.59 | 1.59 | 1.59 | 1.59 | 1.59 |
| B | Deionized Water | 0.09 | 0.09 | 0.09 | 0.09 | 0.09 | 0.09 | 0.09 |

| | | | | | | | | |
|---|---|---|---|---|---|---|---|---|
| ¹⁶Zinc tetroxy chromate Commercially available from PMG Colours. ¹⁷Magnesium oxide, average primary particle size of 20 nanometers, commercially available from Nanostructured & Amorphous Materials, Inc. ¹⁸ Zinc hydroxyl phosphate anti-corrosion pigment commercially available from Elementis Specialties, Inc. | | | | | | | | |

### Test Substrates

The compositions of Table 58, as well as Examples 5H and 5I (described below), were applied to the test substrates identified in Table 59 using the same procedure as was described above for Coating Composition Examples 1A to 1G. Results are illustrated in Table 59, with lower value indicated better corrosion resistance results.

**TABLE 59**

| Substrate | Ex. 5A | Ex. 5B | Ex. 5C | Ex. 5D | Ex. 5E | Ex. 5F | Ex. 5G | Ex. 5H¹³ | Ex. 5I¹⁴ |
|---|---|---|---|---|---|---|---|---|---|
| Cold Rolled Steel (APR10288) | 6.2 | 4 | 0.7 | 1.3 | 3.3 | 0 | 13 | 10.7 | 8.2 |
| G-60 Galvanized (APR18661) | 10.7 | 5.2 | 15.2 | 13.2 | 11.8 | 14.3 | 15.6 | 10 | 7.8 |
| Aluminum (APR21047) | Delam. | 1 | Delam. | Delam. | Delam | Delam | Delam. | 6.2 | 0 |

### COATING COMPOSITION EXAMPLES 6A TO 6H

Coating compositions were prepared using the components and weights (in grams) shown in Table 60. Coatings were prepared in the same manner as described for Coating Composition Examples 1A to 1E.

**TABLE 60**

| Pack | Material | Example 6A | Example 6B | Example 6C | Example 6D | Example 6E | Example 6F | Example 6G | Example 6H |
|---|---|---|---|---|---|---|---|---|---|
| A | DOWANOL PM¹ | 9.18 | 9.18 | 9.18 | 9.18 | 9.18 | 9.18 | 9.18 | 9.18 |
| A | BLS-2700² | 10.17 | 10.17 | 10.17 | 10.17 | 10.17 | 10.17 | 10.17 | 10.17 |
| A | Ethanol³ | 56.51 | 56.51 | 56.51 | 56.51 | 56.51 | 56.51 | 56.51 | 56.51 |
| A | Butvar B-90⁴ | 6.9 | 6.9 | 6.9 | 6.9 | 6.9 | 6.9 | 6.9 | 6.9 |
| A | EPON 834-X-80⁵ | 3 | - | - | - | 3 | - | 3 | 3 |
| A | Magnesium Oxide¹⁷ | - | 2.26 | - | - | - | 2.26 | 2.26 | 2.26 |
| A | Particle Example 1 | - | - | 2.26 | - | 2.26 | 2.26 | - | 2.26 |
| A | Particle Example 11 | 2.26 | 2.26 | - | 2.26 | - | - | 2.26 | - |
| A | K-White G105⁶ | - | - | - | 2.26 | 2.26 | 2.26 | 2.26 | - |
| A | Aerosil 200⁷ | 0.6 | 0.6 | 0.6 | 0.6 | 0.6 | 0.6 | 0.6 | 0.6 |
| A | Toluene⁸ | 6.91 | 6.91 | 6.91 | 6.91 | 6.91 | 6.91 | 6.91 | 6.91 |
| A | Xylene⁹ | 5.18 | 5.18 | 5.18 | 5.18 | 5.18 | 5.18 | 5.18 | 5.18 |
| A | Isobutyl Alcohol¹⁰ | 5.89 | 5.89 | 5.89 | 5.89 | 5.89 | 5.89 | 5.89 | 5.89 |
| B | Ethanol³ | 85.28 | 85.28 | 85.28 | 85.28 | 85.28 | 85.28 | 85.28 | 85.28 |
| B | Butanol¹¹ | 9.43 | 9.43 | 9.43 | 9.43 | 9.43 | 9.43 | 9.43 | 9.43 |
| B | Phosphoric Acid 85%¹² | 1.59 | 1.59 | 1.59 | 1.59 | 1.59 | 1.59 | 1.59 | 1.59 |
| B | Deionized Water | 0.09 | 0.09 | 0.09 | 0.09 | 0.09 | 0.09 | 0.09 | 0.09 |

### Test Substrates

The compositions of Table 60, as well as Examples 6I and 6J (described below), were applied to the test substrates identified in Table 61 using the same procedure as was described above for Coating Composition Examples 1A to 1G. Results are illustrated in Table 61, with lower value indicated better corrosion resistance results.

**TABLE 61**

| Substrate | Ex. 6A | Ex. 6B | Ex. 6C | Ex. 6D | Ex. 6E | Ex. 6F | Ex. 6G | Ex. 6H | Ex. 6I¹³ | Ex. 6J¹⁴ |
|---|---|---|---|---|---|---|---|---|---|---|
| Cold Rolled Steel (APR10288) | 2.1 | 2.5 | 0 | 0 | 0 | 0 | 0.5 | 13.7 | 24.2 | 0 |
| G-60 Galvanized (APR18661) | 7.3 | 3.2 | 4.4 | 2.6 | 2.7 | 0.5 | 0.7 | 0.5 | 2 | 0 |
| Aluminum (APR21047) | Delam. | 0 | Delam. | Delam. | 0.5 | 0 | 0 | 0 | 0.7 | 0 |

### COATING COMPOSITION EXAMPLE 7A

Coating composition 7A was prepared using the components and weights (in grams) shown in Table 62. The coating was prepared in the same manner as described for Coating Composition Examples 1A to 1E.

**TABLE 62**

| Pack | Material | Example 7A |
|---|---|---|
| A | DOWANOL PM¹ | 3.1 |
| A | BLS-2700² | 9.86 |
| A | Ethanol³ | 54.75 |
| A | Butvar B-90⁴ | 6.68 |
| A | EPON 834-X-80⁵ | 3.44 |
| A | Particle Example 17 | 20.82 |
| A | 2-mercaptobenzothiazole | 1.01 |
| A | Aerosil 200⁷ | 0.58 |
| A | Toluene⁸ | 6.69 |
| A | Xylene⁹ | 5.03 |
| A | Isobutyl Alcohol¹⁰ | 5.71 |
| B | Ethanol³ | 82.63 |
| B | Butanol¹¹ | 9.14 |
| B | Phosphoric Acid 85%¹² | 2.6 |
| B | Deionized Water | 0.09 |

### Test Substrates

The composition of Table 62, as well as Examples 7B and 7C (described below), were applied to the test substrates identified in Table 63 using the same procedure as was described above for Coating Composition Examples 1A to 1G. Results are illustrated in Table 63, with lower value indicated better corrosion resistance results.

**TABLE 63**

| Substrate | Example 7A | Example 7B¹³ | Example 7C¹⁴ |
|---|---|---|---|
| Cold Rolled Steel (APR10288) | 0.5 | 17.4 | 0.3 |
| G-60 Galvanized (APR18661) | 0.1 | 4.4 | 0 |
| Aluminum (APR21047) | 0.4 | Delaminated | 0 |

### COATING COMPOSITION EXAMPLES 8A TO 8B

Coating compositions 8A and 8B were prepared using the components and weights (in grams) shown in Table 64. The coatings were prepared in the same manner as described for Coating Composition Examples 1A to 1E.

**TABLE 64**

| Pack | Material | Example 8A | Example 8B |
|---|---|---|---|
| A | DOWANOL PM¹ | 10.55 | 3.68 |
| A | BLS-2700² | 11.7 | 11.7 |
| A | Ethanol³ | 65.35 | 64.97 |
| A | Butvar B-90⁴ | 7.93 | 7.93 |
| A | Zinc Tetroxy Chromate | 2.6 | - |
| A | Particle Example 17 | - | 9.52 |
| A | Aerosil 200⁷ | 0.69 | 0.69 |
| A | Toluene⁸ | 7.95 | 7.94 |
| A | Xylene⁹ | 5.97 | 5.97 |
| A | Isobutyl Alcohol¹⁰ | 6.77 | 6.77 |
| B | Ethanol³ | 98.07 | 98.05 |
| B | Butanol¹¹ | 10.85 | 10.85 |
| B | Phosphoric Acid 85%¹² | 1.83 | 1.83 |
| B | Deionized Water | 0.11 | 0.11 |

### Test Substrates

The compositions of Table 64, as well as examples 8C and 8D (described below), were applied to the test substrates identified in Table 65 using the same procedure as was described above for Coating Composition Examples 1A to 1 G. Results are illustrated in Table 65, with lower value indicated better corrosion resistance results.

**TABLE 65**

| Substrate | Example 8A | Example 8B | Example 8C¹⁵ | Example 8D¹³ |
|---|---|---|---|---|
| Cold Rolled Steel (APR10288) | 8.3 | 2.3 | 25.3 | 24.1 |
| G-60 Galvanized (APR18661) | 12.8 | 3.5 | 8.2 | 8.9 |
| Aluminum (APR21047) | 1.4 | Delaminated | 8.9 | 3.7 |

### COATING COMPOSITIONS EXAMPLES 9A TO 9B

Coating compositions 9A and 9B were prepared using the components and weights (in grams) shown in Table 66. The coatings were prepared in the same manner as described for Coating Composition Examples 1A to 1E.

**TABLE 66**

| Pack | Material | Example 9A | Example 9B |
|---|---|---|---|
| A | DOWANOL PM¹ | 3.17 | 3.13 |
| A | BLS-2700² | 9.86 | 9.86 |
| A | Ethanol³ | 56.05 | 55.34 |
| A | Butvar B-90⁴ | 6.68 | 6.68 |
| A | EPON 834-X-80⁵ | 3.44 | 3.44 |
| A | VANSIL® W-50¹⁶ | 20 | 20 |
| A | Particle Example 17 | -- | 9.55 |
| A | 2-mercaptobenzothiazole | 1.01 | 1.01 |
| A | NANOBYK-3650 | 8.59 | -- |
| A | Aerosil 200⁷ | 0.6 | 0.6 |
| A | Toluene⁸ | 6.85 | 6.76 |
| A | Xylene⁹ | 5.15 | 5.08 |
| A | Isobutyl Alcohol¹⁰ | 5.85 | 5.77 |
| B | Ethanol³ | 82.63 | 82.63 |
| B | Butanol¹¹ | 9.14 | 9.14 |
| B | Phosphoric Acid 85%¹² | 2.6 | 2.6 |
| B | Deionized Water | 0.09 | 0.09 |

| | | | |
|---|---|---|---|
| ¹⁶ Wollastonite (calcium metasilicate) commercially available from R.T. Vanderbilt Co., Inc. | | | |

### Test Substrates

The compositions of Table 66, as well as Examples 9C and 9D (described below), were applied to the test substrates identified in Table 67 using the same procedure as was described above for Coating Composition Examples 1A to 1G. Results are illustrated in Table 67, with lower value indicated better corrosion resistance results.

**TABLE 67**

| Substrate | Example 9A | Example 9B | Example 9C¹³ | Example 9D¹³ |
|---|---|---|---|---|
| Cold Rolled Steel (APR10288) | 5.6 | 2.1 | 15.2 | 5 |
| G-60 Galvanized (APR18661) | 1.7 | 1.8 | 6.3 | 0 |
| Aluminum (APR21047) | 0 | 0 | 5.2 | 0 |

### COATING COMPOSITIONS EXAMPLES 10A TO 10C

Coating compositions 10A to 10C were prepared using the components and weights (in grams) shown in Table 68. The coatings were prepared in the same manner as described for Coating Composition Examples 1A to 1E.

**TABLE 68**

| Pack | Material | Example 10A | Example 10B | Example 10C |
|---|---|---|---|---|
| A | DOWANOL PM¹ | 9.18 | 3.1 | 3.1 |
| A | BLS-2700² | 10.17 | 9.86 | 9.86 |
| A | Ethanol³ | 56-51 | 54.75 | 54.75 |
| A | Butvar B-90⁴ | 6.9 | 6.68 | 6.68 |
| A | EPON 834-X-80⁵ | 3 | 3.44 | 3.44 |
| A | Talc¹⁷ | -- | 20 | 20 |
| A | Particle Example 17 | -- | 10.41 | -- |
| A | 2-mercaptobenzothiazole | -- | 1.01 | 1.01 |
| A | NANOBYK-3650 | -- | -- | 8.9 |
| A | Aerosil 200⁷ | 0.6 | 0.58 | 0.58 |
| A | Toluene⁸ | 6.91 | 6.69 | 6.69 |
| A | Xylene⁹ | 5.19 | 5.03 | 5.03 |
| A | Isobutyl Alcohol¹⁰ | 5.89 | 5.71 | 5.71 |
| B | Ethanol³ | 85.28 | 85.28 | 85.28 |
| B | Butanol¹¹ | 9.43 | 9.43 | 9.43 |
| B | Phosphoric Acid 85%¹² | 1.59 | 1.59 | 1.59 |
| B | Deionized Water | 0.09 | 0.09 | 0.09 |

| | | | | |
|---|---|---|---|---|
| ¹⁷Available from Barretts Minerals | | | | |

### Test Substrates

The compositions of Table 68, as well as Examples 10D and 10E (described below), were applied to the test substrates identified in Table 69 using the same procedure as was described above for Coating Composition Examples 1A to 1G. Results are illustrated in Table 69, with lower value indicated better corrosion resistance results.

**TABLE 69**

| Substrate | Example 10A | Example 10B | Example 10C | Example 10D¹³ | Example 10E¹³ |
|---|---|---|---|---|---|
| Cold Rolled Steel (APR10288) | Delaminated | 4.8 | 1 | 23 | 1.8 |
| G-60 Galvanized (APR18661) | 19.5 | 93 | 5 | 9.2 | 0.5 |
| Aluminum (APR21047) | 23.5 | 8.2 | 0 | 1.5 | 0 |

### COATING COMPOSITION EXAMPLES 11A TO 11E

Coating compositions were prepared using the components and weights (in grams) shown in Table 70. Coatings were prepared by adding components 1 to 7 to a suitable vessel under agitation with a Cowles blade. Next, component 8 was slowly added while still under agitation and left to mix for 15 minutes. Next, components 9 to 18 were added in order under agitation. This mixture was allowed to mix for ten minutes and was then added to a sealed 8 ounce glass container containing approximately 150 grams of the above material to approximately 125 grams of zircoa beads. This sealed container was then left on a paint shaker for 2 to 4 hours. After removing the paste from the paint shaker the milling beads were filtered out with a standard paint filter and the finished material was ready.

A second composition was prepared by adding components 1 to 3, and 18 to 20 to a suitable vessel under agitation with a paddle blade and allowed to mix for 20 minutes. When ready to spray, the two compositions were mixed.

**TABLE 70**

| Component No. | Material | Example 11A | Example 11B | Example 11C | Example 11D | Example 11E |
|---|---|---|---|---|---|---|
| 1 | Isopropanol¹⁶ | 6.23 | 6.23 | 6.23 | 6.23 | 6.23 |
| 2 | NORMAL BUTYL ALCOHOL¹⁷ | 28.00 | 28.00 | 28.00 | 28.00 | 28.00 |
| 3 | Toluene¹⁸ | 45.15 | 45.15 | 45.15 | 45.15 | 45.15 |
| 4 | MPA 2000T/#202-T ANTI-SETTLING AGT¹⁹ | 1.13 | 1.13 | 1.13 | 1.13 | 1.13 |
| 5 | Ethanol²⁰ | 52.96 | 52.96 | 52.96 | 52.96 | 52.96 |
| 6 | ANTI-TERRA-U²¹ | 0.45 | 0.45 | 0.45 | 0.45 | 0.45 |
| 7 | PHENODUR PR 263²² | 3.02 | 3.02 | 3.02 | 3.02 | 3.02 |
| 8 | MOWITAL B30H²³ | 8.03 | 8.03 | 8.03 | 8.03 | 8.03 |
| 9 | RAVEN 410²⁴ | 0.15 | 0.15 | 0.15 | 0.15 | 0.15 |
| 10 | CAB-O-SIL M-5²⁵ | 0.46 | 0.46 | 0.46 | 0.46 | 0.46 |
| 11 | MICROTALC-MONTANA TALC MP 15-38²⁶ | 9.77 | 9.77 | 9.77 | 9.77 | 9.77 |
| 12 | NALZIN-2²⁷ | 10.35 | - | - | - | - |
| | Example 18 Particles | - | 10.35 | - | - | - |
| | Example 19 Particles | - | - | 10.35 | - | - |
| | Example 20 Particles | - | - | - | 10.35 | - |
| | Example 21 Particles | - | - | - | - | 10.35 |
| 13 | SOLSPERSE 32500²⁸ | - | 0.35 | 0.35 | 0.35 | 0.35 |
| 14 | MAPICO YELLOW 2150A²⁹ | 1.91 | 1.91 | 1.91 | 1.91 | 1.91 |
| 15 | TRONOX CR-800³⁰ | 6.32 | 6.32 | 6.32 | 6.32 | 6.32 |
| 16 | EPON 834-X-80³¹ | 2.05 | 2.05 | 2.05 | 2.05 | 2.05 |
| 17 | NUXTRA ZINC 16%³² | 0.97 | 0.97 | 0.97 | 0.97 | 0.97 |
| 18 | 4-METHYL-2PENTANONE³³ | 20.00 | 20.00 | 20.00 | 20.00 | 20.00 |
| 19 | TANNIC ACID³⁴ | 0.62 | 0.62 | 0.62 | 0.62 | 0.62 |
| 20 | PHOSPHORIC ACID 85%³⁵ | 3.00 | 3.00 | 3.00 | 3.00 | 3.00 |

| | | | | | | |
|---|---|---|---|---|---|---|
| ¹⁶ Organic solvent commercially available from British Petroleum. ¹⁷ Organic solvent commercially available from BASF Corporation. ¹⁸ Organic solvent commercially available from Ashland Chemical Co. ¹⁹ Rheological additive commercially available from Elementis Specialties, Inc. ²⁰ Organic solvent commercially available from ChemCentral Corp. ²¹ Wetting additive commercially available from BYK-Chemie GmbH. ²² Phenolic resin commercially available from UCB Chemical, Inc. ²³ Polyvinyl butyral resin commercially available from Kuraray Co., Ltd. ²⁴ Carbon black powder commercially available from Columbian Chemicals Co. ²⁵ Silicon dioxide commercially available from Cabot Corp. ²⁶ Talc commercially available from Barretts Minerals, Inc. ²⁷ Zinc hydroxyl phosphate anti-corrosion pigment commercially available from Elementis Specialties, Inc. ²⁸ Wetting agent commercially available from Avecia Ltd. ²⁹ Iron oxide pigment commercially available from Rockwood Pigments NA, Inc. ³⁰ Titanium dioxide pigment commercially available from Kerr-McGec Corp. ³¹ Epichlorohydrin-Bisphenol A resin commercially available from Resolution Performance.Products. ³² Zinc 2-ethyl hexanoate solution commercially available from Condea Servo LLC ³³ Organic solvent commercially available from Shell Chemical Co. ³⁴ Commercially available from Yorkshire Americas, Inc. ³⁵ Commercially available from Atofina Chemicals, Inc. | | | | | | |

### Test Substrates

The compositions of Table 70, as well as Examples 11F and 11G (described below), were applied to the test substrates identified in Table 71 using a DeVilbiss GTI HVLP spray gun with a 1.4 spray tip, N2000 Cap, and 35 psi at gun. Each composition was applied in two coats with a five-minute flash in between to film builds of 0.50 to approximately 1.25 mils (12.7 to 31.8 microns). A minimum of twenty to thirty minutes and no more than one hour of time was allowed to elapse before applying a PPG Industries, Inc. global sealer D 839 over each composition. The sealer was mixed and applied as a wet-on-wet sealer to approximately 1.0 to 2.0 mils (25.4 to 50.8 microns) of paint and allowed to flash forty-five minutes before applying base coat. Deltron DBC base coat, commercially available from PPG Industries, Inc., was applied over the sealer in two coats with five to ten minutes flash time between coats to a film build thickness of approximately 0.5 mils (12.7 microns). The base coat was allowed approximately fifteen minutes time to flash before applying D893 Global clear coat, commercially available from PPG Industries, Inc., in two coats with five to ten minutes to flash between coats to a film build of 2.50 to 3.00 mils (63.5 to 76.2 microns). Sealer, base coat, and clear coat were mixed as the procedure for these products recommended by PPG Industries, Inc. Salt spray resistance was tested as described in ASTM B117. Panels removed from salt spray testing after 1000 hours were measured for scribe creep across the scribe. Scribe creep values were reported as an average of six (6) measurements. Results are illustrated in Table 48, with lower value indicated better corrosion resistance results.

**TABLE 71**

| Substrate | Example 11A | Example 11B | Example 11C | Example 11D | Example 11E | Example 11F³⁶ | Example 11G³⁷ |
|---|---|---|---|---|---|---|---|
| Cold Rolled Steel (APR10288) | 27.3 | 22 | 7.5 | 18.7 | 15.7 | 31.7 | 11.5 |
| G-60 Galvanized (PR18661) | 4.3 | 9.2 | 2.2 | 1.8 | 7.2 | 1.3 | 0.67 |
| Aluminum (APR21047) | 0 | 9.8 | 2.8 | 3.3 | 11.8 | 2.5 | 0.3 |

| | | | | | | | |
|---|---|---|---|---|---|---|---|
| ³⁶ D-831 commercially available from PPG Industries, Inc., Pittsburgh, PA. ³⁷ D8099 Fast Drying-Anti-Corrosion Etch Primer commercially available from PPG Industries, Inc., Pittsburgh, PA. | | | | | | | |

### COATING COMPOSITION EXAMPLES 12A TO 12D

Coating compositions were prepared using the components and weights (in grams) shown in Table 72. Coatings were prepared in the same manner as described for Coating Composition Examples 1A to 1E.

**TABLE 72**

| Component No. | Material | Example 12A | Example 12B | Example 12C | Example 12D |
|---|---|---|---|---|---|
| 1 | Isopropanol¹⁶ | 6.25 | 6.25 | 6.25 | 6.25 |
| 2 | NORMAL BUTYL ALCOHOL¹⁷ | 13.00 | 13.00 | 13.00 | 13.00 |
| 3 | Toluene¹⁸ | 45.18 | 45.18 | 45.18 | 45.18 |
| 4 | MPA 2000T/#202-T ANTI-SETTLING AGT¹⁹ | 1.13 | 1.13 | 1.13 | 1.13 |
| 5 | Ethanol²⁰ | 52.96 | 52.96 | 52.96 | 52.96 |
| 6 | ANTI-TERRA-U²¹ | 0.45 | 0.45 | 0.45 | 0.45 |
| 7 | PHENODUR PR 263²² | 3.02 | 3.02 | 3.02 | 3.02 |
| 8 | MOWITAL B30H²³ | 8.03 | 8.03 | 8.03 | 8.03 |
| 9 | RAVEN 410²⁴ | 0.15 | 0.15 | 0.15 | 0.15 |
| 10 | CAB-O-SIL M-5²⁵ | 0.46 | 0.46 | 0.46 | 0.46 |
| 11 | MICROTALC-MONTANA TALC MP 15-38²⁶ | 9.77 | 9.77 | 9.77 | 9.77 |
| 12 | NALZIN-2²⁷ | 10.35 | | | |
| | Example 23 Particles | | 10.35 | 6.89 | 3.45 |
| 13 | SOLSPERSE 32500²⁸ | | 0.35 | 0.35 | 0.35 |
| 14 | MAPICO YELLOW 2150A²⁹ | 1.91 | 1.91 | 1.91 | 1.91 |
| 15 | TRONOX CR-800³⁰ | 6.32 | 6.32 | 6.32 | 6.32 |
| 16 | EPON 834-X-80³¹ | 2.05 | 2.05 | 2.05 | 2.05 |
| 17 | NUXTRA ZINC 16%³² | 0.97 | 0.97 | 0.97 | 0.97 |
| 18 | 4-METHYL-. 2PENTANONE³³ | 20.00 | 20.00 | 20.00 | 20.00 |
| 19 | TANNIC ACID¹⁴ | 0.62 | 0.62 | 0.62 | 0.62 |
| 20 | PHOSPHORIC ACID 85%³⁵ | 1.91 | 1.91 | 1.91 | 1.91 |

### Test Substrates

The compositions of Table 72, as well as Example 12E (described below), were applied to the test substrates identified in Table 73 using the same procedure as was described above for Coating Composition Examples 11A to 11G. Results are illustrated in Table 73, with lower value indicated better corrosion resistance results.

**TABLE 73**

| Substrate | Example 12A | Example 12B | Example 12C | Example 12D | Example 12E³⁶ |
|---|---|---|---|---|---|
| Cold Rolled Steel (APR10288) | 37.3 | 0.8 | 1.7 | Delaminated | 23.8 |
| G-60 Galvanized (APR18661) | 15.8 | 8.8 | 15.8 | 10.83 | 6 |
| Aluminum (APR21047) | 1.7 | 20.8 | Delaminated | Delaminated | 63 |

### COATING COMPOSITION EXAMPLES 13A TO 13E

Coating compositions were prepared using the components and weights (in grams) shown in Table 74. Coatings were prepared in the same manner as described for Coating Composition Examples 11A to 11E.

**TABLE 74**

| Component No. | Material | Example 13A | Example 13B | Example 13C | Example 13D | Example 13E |
|---|---|---|---|---|---|---|
| 1 | Isopropanol¹⁶ | 6.25 | 6.25 | 6.25 | 6.25 | 6.25 |
| 2 | NORMAL BUTYL ALCOHOL¹⁷ | 13.00 | 13.00 | 13.00 | 13.00 | 13.00 |
| 3 | Toluene¹⁸ | 45.18 | 45.18 | 45.18 | 45.18 | 45.18 |
| 4 | MPA 2000T/#202-T ANTI-SETTLING AGT¹⁹ | 1.13 | 1.13 | 1.13 | 1.13 | 1.13 |
| 5 | Ethanol²⁰ | 52.96 | 52.96 | 52.96 | 52.96 | 52.96 |
| 6 | ANTI-TERRA-U²¹ | 0.45 | 0.45 | 0.45 | 0.45 | 0.45 |
| 7 | PHENODUR PR 263²² | 3.02 | 3.02 | 3.02 | 3.02 | 3.02 |
| 8 | MOWITAL B30H²³ | 8.03 | 8.03 | 8.03 | 8.03 | 8.03 |
| 9 | RAVEN 410²⁴ | 0.15 | 0.15 | 0.15 | 0.15 | 0.15 |
| 10 | CAB-O-SIL M-5²⁵ | 0.46 | 0.46 | 0.46 | 0.46 | 0.46 |
| 11 | MICROTALC-MONTANA TALC MP 15-38²⁶ | 9.77 | 9.77 | 9.77 | 9.77 | 9.77 |
| 12 | NALZIN-2²⁷ | 10.35 | | | | |
| | Example 18 Particles | | 10.35 | | | |
| | Example 19 Particles | | | 10.35 | | |
| | Example 20 Particles | | | | 10.35 | |
| | Example 21 Particles | | | | | 10.35 |
| 13 | SOLSPERSE 32500²⁸ | | 0.35 | 0.35 | 0.35 | 0.35 |
| 14 | MAPICO YELLOW 2150A²⁹ | 1.91 | 1.91 | 1.91 | 1.91 | 1.91 |
| 15 | TRONOX CR-800³⁰ | 6.32 | 6.32 | 6.32 | 6.32 | 632 |
| 16 | EPON 834-X-80³¹ | 2.05 | 2.05 | 2.05 | 2.05 | 2.05 |
| 17 | NUXTRA ZINC 16%³² | 0.97 | 0.97 | 0.97 | 0.97 | 0.97 |
| 18 | 4-METHYL-2PENTANONE³³ | 20.00 | 20.00 | 20.00 | 20.00 | 20.00 |
| 19 | TANNIC ACID³⁴ | 0.62 | 0.62 | 0.62 | 0.62 | 0.62 |
| 20 | PHOSPHORIC ACID 85%³⁵ | 1.91 | 1.91 | 1.91 | 1.91 | 1.91 |

### Test Substrates

The compositions of Table 74, as well as Example 13F (described below), were applied to the test substrates identified in Table 75 using the same procedure as was described above for Coating Composition Examples 11A to 11G. Results are illustrated in Table 75, with lower value indicated better corrosion resistance results.

**TABLE 75**

| Substrate | Example 13A | Example 13B | Example 13C | Example 13D | Example 13E | Example 13F³⁸ |
|---|---|---|---|---|---|---|
| Cold Rolled Steel (APR10288) | 27 | 1.7 | 0.4 | 0.6 | 3.8 | 23.8 |
| G-60 Galvanized (APR18661) | 2.7 | 0.2 | 0 | 0 | 0 | 0 |
| Aluminum (APR21047) | 0.3 | 0.5 | 2.3 | 0.8 | 0.2 | 2 |

| | | | | | | |
|---|---|---|---|---|---|---|
| ³⁸DPX-171 commercially available from PPG Industries, Inc., Pittsburgh, PA. | | | | | | |

### COATING COMPOSITION EXAMPLES 14A TO 14G

Coating compositions were prepared using the components and weights (in grams) shown in Table 76. Coatings were prepared in the same manner as described for Coating Composition Examples 11A to 11E.

**TABLE 76**

| Component No. | Material | Ex. 14A | Ex. 14B | Ex. 14C | Ex. 14D | Ex. 14E | Ex. 14F | Ex. 14G |
|---|---|---|---|---|---|---|---|---|
| 1 | Isopropanol¹⁶ | 6.25 | 6.25 | 6.25 | 6.25 | 6.25 | 6.25 | 6.25 |
| 2 | NORMAL BUTYL ALCOHOL¹⁷ | 13.00 | 13.00 | 13.00 | 13.00 | 13.00 | 13.00 | 13.00 |
| 3 | Toluene¹⁸ | 45.18 | 45.18 | 45.18 | 45.18 | 45.18 | 45.18 | 45.18 |
| 4 | MPA 2000T/#202-T ANTI-SETTLING AGT¹⁹ | 1.13 | 1.13 | 1.13 | 1.13 | 1.13 | 1.13 | 1.13 |
| 5 | Ethanol²⁰ | 52.96 | 52.96 | 52.96 | 52.96 | 52.96 | 52.96 | 52.96 |
| 6 | ANTI-TERRA-U²¹ | 0.45 | 0.45 | 0.45 | 0.45 | 0.45 | 0.45 | 0.45 |
| 7 | PHENODUR PR 263²² | 3.02 | 3.02 | 3.02 | 3.02 | 3.02 | 3:02 | 3.02 |
| 8 | MOWITAL B30H²³ | 8.03 | 8.03 | 8.03 | 8.03 | 8.03 | 8.03 | 8.03 |
| 9 | RAVEN 410²⁴ | 0.15 | 0.15 | 0.15 | 0.15 | 0.15 | 0.15 | 0.15 |
| 10 | CAB-O-SIL M-5²⁵ | 0.46 | 0.46 | 0.46 | 0.46 | 0.46 | 0.46 | 0.46 |
| 11 | MICROTALC-MONTANA TALC MP 15-38²⁶ | 9.77 | 9.77 | 9.77 | 9.77 | 9.77 | 9.77 | 9.77 |
| 12 | NALZIN-2²⁷ | 10.35 | | | | | | |
| | Example 26 Particles | | 10.35 | | | | | |
| | Example 27 Particles | | | 10.35 | | | | |
| | Example 28 Particles | | | | 10.35 | | | |
| | Example 29 Particles | | | | | .10.35 | | |
| | Example 30 Particles | | | | | | 10.35 | |
| | Example 31 Particles | | | | | | | 1035 |
| 13 | SOLSPERSE 32500²⁸ | | 0.35 | 0.35 | 0.35 | 0.35 | 0.35 | 0.35 |
| 14 | MAPICO YELLOW 2150A²⁹ | 1.91 | 1.91 | 1.91 | 1.91 | 1.91 | 1.91 | 1.91 |
| 15 | TRONOX CR-800³⁰ | 6.32 | 6.32 | 6.32 | 6.32 | 6.32 | 6.32 | 6.32 |
| 16 | EPON 834-X-80³¹ | 2.05 | 2.05 | 2.05 | 2.05 | 2.05 | 2.05 | 2.05 |
| 17 | NUXTRA ZINC 16%³² | 0.97 | 0.97 | 0.97 | 0.97 | 0.97 | 0.97 | 0.97 |
| 18 | 4-METHYL-2PENTANONE³³ | 20.00 | 20.00 | 20.00 | 20.00 | 20.00 | 20.00 | 20.00 |
| 19 | TANNIC ACID³⁴ | 0.62 | 0.62 | 0.62 | 0.62 | 0.62 | 0.62 | 0.62 |
| 20 | PHOSPHORIC ACID 85%³⁵ | 3.00 | 3.00 | 3.00 | 3.00. | 3.00 | 3.00 | 3.00 |

### Test Substrates

The compositions of Table 76, as well as Example 14H (described below), were applied to the test substrates identified in Table 77 using the same procedure as was described above for Coating Composition Examples 11A to 11G. Results are illustrated in Table 77, with lower value indicated better corrosion resistance results.

**TABLE 77**

| Substrate | Example 14A | Example 14B | Example 14C | Example 14D | Example 14E | Example 14F | Example 14G | Example 14H²³ |
|---|---|---|---|---|---|---|---|---|
| Cold Rolled Steel (APR10288) | 28.2 | 1.8 | 1 | 3.5 | 0.7 | 23.3 | Delaminated | 36 |
| G-60 Galvanized (APR18661) | 6.3 | 3.7 | 2.7 | 1 | 0.5 | 3 | 5.5 | 7.2 |
| Aluminum (APR21047) | 1.8 | 5.5 | 2 | 7.2 | 4.3 | 6.5 | 7.7 | 1.5 |

### COATING COMPOSITION EXAMPLES 15A TO 15E

Coating compositions were prepared using the components and weights (in grams) shown in Table 78. Coatings were prepared in the same manner as described for Coating Composition Examples 11A to 11E.

**TABLE 78**

| Component No. | Material | Example 15A | Example 15B | Example 15C | Example 15D | Example 15E |
|---|---|---|---|---|---|---|
| 1 | Isopropanol¹⁶ | 6.25 | 6.25 | 6.25 | 6.25 | 6.25 |
| 2 | NORMAL BUTYL ALCOHOL¹⁷ | 13.00 | 13.00 | 13.00 | 13.00 | 13.00 |
| 3 | Toluene¹⁸ | 45.18 | 45.18 | 45.18 | 45.18 | 45.18 |
| 4 | MPA 2000T/#202-T ANTI-SETTLING AGT¹⁹ | 1.13 | 1.13 | 1.13 | 1.13 | 1.13 |
| 5 | Ethanol²⁰ | 52.96 | 52.96 | 52.96 | 52.96 | 52.96 |
| 6 | ANTI-TERRA-U²¹ | 0.45 | 0.45 | 0.45 | 0.45 | 0.45 |
| 7 | PHENODUR PR 263²² | 3.02 | 3.02 | 3.02 | 3.02 | 3.02 |
| 8 | MOWITAL B30H²³ | 8.03 | 8.03 | 8.03 | 8.03 | 8.03 |
| 9 | RAVEN 410²⁴ | 0.15 | 0.15 | 0.15 | 0.15 | 0.15 |
| 10 | CAB-O-SIL M-5²⁵ | 0.46 | 0.46 | 0.46 | 0.46 | 0.46 |
| 11 | MICROTALC-MONTANA TALC MP 15-38²⁶ | 9.77 | 9.77 | 9.77 | 9.77 | 9.77 |
| 12 | NALZIN-2²⁷ | 10.35 | | 4.14 | | 4.14 |
| | Example 18 Particles | | 10.35 | 6.21 | | |
| | Example 20 Particles | | | | 10.35 | 6.21 |
| 13 | SOLSPERSE 32500²⁸ | | 0.35 | 0.35 | 0.35 | 0.35 |
| 14 | MAPICO YELLOW 2150A²⁹ | 1.91 | 1.91 | 1.91 | 1.91 | 1.91 |
| 15 | TRONOX CR-800³⁰ | 6.32 | 6.32 | 6.32 | 6.32 | 6.32 |
| 16 | EPON 834-X-80³¹ | 2.05 | 2.05 | 2.05 | 2.05 | 2.05 |
| 17 | NUXTRA ZINC 16%³² | 0.97 | 0.97 | 0.97 | 0.97 | 0.97 |
| 18 | 4-METHYL-2PENTANONE³³ | 20.00 | 20.00 | 20.00 | 20.00 | 20.00 |
| 19 | TANNIC ACID³⁴ | 0.62 | 0.62 | 0.62 | 0.62 | 0.62 |
| 20 | PHOSPHORIC ACID 85%³⁵ | 3.00 | 3.00 | 3.00 | 3.00 | 3.00 |

### Test Substrates

The compositions of Table 78, as well as Examples 15F and 15G (described below), were applied to the test substrates identified in Table 79 using the same procedure as was described above for Coating Composition Examples 11A to 11G. Results are illustrated in Table 79, with lower value indicated better corrosion resistance results.

**TABLE 79**

| Substrate | Example 15A | Example 15B | Example 15C | Example 15D | Example 15E | Example 15F³⁸ | Example 15G³⁹ |
|---|---|---|---|---|---|---|---|
| Cold Rolled Steel (APR10288) | 18.3 | 24 | 21 | 2.5 | 2.1 | Delaminated | 3.2 |
| G-60 Galvanized (APR18661) | 4.5 | 0.9 | 2.5 | 0 | 4.7 | 8 | 8.7 |
| Aluminum (APR21047) | 1 | 0.9 | 1 | 2.2 | 0.2 | 3.2 | 0.2 |

| | | | | | | | |
|---|---|---|---|---|---|---|---|
| ³⁹DX-1791 commercially available from PPG Industries, Inc., Pittsburgh, P.A. | | | | | | | |

### COATING POMPOSITION EXAMPLES 16A TO 16G

Coating compositions were prepared using the components and weights (in grams) shown in Table 80. Coatings were prepared in the same manner as described for Coating Composition Examples 11 A to 11E.

**TABLE 80**

| Component No. | Material | Ex. 16A | Ex. 16B | Ex. 16C | Ex. 16D | Ex. 16E | Ex. 16F | Ex. 16G |
|---|---|---|---|---|---|---|---|---|
| 1 | Isopropanol¹⁶ | 6.25 | 6.25 | 6.25 | 6.25 | 6.25 | 6.25 | 6.25 |
| 2 | NORMAL BUTYL ALCOHOL¹⁷ | 13.00 | 13.00 | 13.00 | 13.00 | 13.00 | 13.00 | 13.00 |
| 3 | Toluene¹⁸ | 45.18 | 45.18 | 45.18 | 45.18 | 45.18 | 45.18 | 45.18 |
| 4 | MPA 2000T/#202-T ANTI-SETTLING AGT¹⁹ | 1.13 | 1.13 | 1.13 | 1.13 | 1.13 | 1.13 | 1.13 |
| 5 | Ethanol²⁰ | 52.96 | 52.96 | 52.96 | 52.96 | 52.96 | 52.96 | 52.96 |
| 6 | ANTI-TERRA-U²¹ | 0.45 | 0.45 | 0.45 | 0.45 | 0.45 | 0.45 | 0.45 |
| 7 | PHENODUR PR 263²² | 3.02 | 3.02 | 3.02 | 3.02 | 3.02 | 3.02 | 3.02 |
| 8 | MOWITAL B30H²³ | 8.03 | 8.03 | 8.03 | 8.03 | 8.03 | 8.03 | 8.03 |
| 9 | RAVEN 410²⁴ | 0.15 | 0.15 | 0.15 | 0.15 | 0.15 | 0.15 | 0.15 |
| 10 | CAB-O-SIL M-5²⁵ | 0.46 | 0.46 | 0.46 | 0.46 | 0.46 | 0.46 | 0.46 |
| 11 | MICROTALC-MONTANA TALC MP 15-38²⁶ | 9.77 | 9.77 | 9.77 | 9.77 | 9.77 | 9.77 | 9.77 |
| 12 | NALZIN-2²⁷ | 10.35 | | | | | | |
| | Example 33 Particles | | 10.35 | | | | | |
| | Example 32 Particles | | | 10.35 | | | | |
| | Example 34 Particles | | | | 10.35 | | | |
| | Example 35 Particles | | | | | 10.35 | | |
| | Example 40 Particles | | | | | | 10.35 | |
| | Example 37 Particles | | | | | | | 1035 |
| 13 | SOLSPERSE 32500²⁸ | | 0.35 | 0.35 | 0.35 | 0.35 | 0.35 | 0.35 |
| 14 | MAPICO YELLOW 2150A²⁹ | 1.91 | 1.91 | 1.91 | 1.91 | 1.91 | 1.91 | 1.91 |
| 15 | TRONOX CR-800³⁰ | 632 | 6.32 | 6.32 | 6.32 | 6.32 | 6.32 | 6.32 |
| 16 | EPON 834-X-80³¹ | 2.05 | 2.05 | 2.05 | 2.05 | 2.05 | 2.05 | 2.05 |
| 17 | NUXTRA ZINC 16%³² | 0.97 | 0.97 | 0.97 | 0.97 | 0.97 | 0.97 | 0.97 |
| 18 | 4-METHYL-2PENTANONE³³ | 20.00 | 20.00 | 20.00 | 20.00 | 20.00 | 20.00 | 20.00 |
| 19 | TANNIC ACID³⁴ | 0.62 | 0.62 | 0.62 | 0.62 | 0.62 | 0.62 | 0.62 |
| 20 | PHOSPHORIC ACID 85%³⁵ | 3.00 | 3.00 | 3.00 | 3.00 | 3.00 | 3.00 | 3.00 |

### Test Substrates

The compositions of Table 80, as well as Examples 16H and 16I (described below), were applied to the test substrates identified in Table 81 using the same procedure as was described above for Coating Composition Examples 11A to 11G. Results are illustrated in Table 81, with lower value indicated better corrosion resistance results.

**TABLE 81**

| Substrate | Ex. 16A | Ex. 16B | Ex. 16C | Ex. 16D | Ex. 16E | Ex. 16F | Ex. 16G | Ex. 16H³⁸ | Ex. 16I³⁷ |
|---|---|---|---|---|---|---|---|---|---|
| Cold Rolled Steel (APR10288) | 23.8 | 1 | 1.7 | 1 | 3 | Delam. | 0.7 | 31.2 | 3.2 |
| G-60 Galvanized (APR18661) | 8 | 1.2 | 5 | 7.8 | 0.5 | 9.3 | 0.7 | 8.2 | 7.2 |
| Aluminum (APR21047) | 2 | 1.7 | 3.3 | 1.8 | 1.5 | 5.8 | 8.2 | 2.8 | 0.8 |

### COATING COMPOSITION EXAMPLES 17A TO 17E

Coating compositions were prepared using the components and weights (in grams) shown in Table 82. Coatings were prepared by adding components 1 to 3 to a suitable vessel under agitation with a Cowles mixing blade. Next, components 4 and 5 were added slowly while still under agitation and left for 20 minutes. Components 6 to 8 were then added in order under agitation. This mixture was allowed to mix for 10 minutes and was then added to a sealed 8 ounce glass container containing approximately 150 grams of the above material to approximately 100 grams of zircoa beads and component 12. The sealed container was then left on a paint shaker for 2 to 4 hours. After removing the paste from the paint shaker the milling beads were filtered out with a standard paint filter and the finished material was ready. A second composition was prepared by adding components 9 to 11 to a suitable vessel under agitation with a paddle blade and allowed to mix for 20 minutes. When ready to spray, the two components were mixed.

**TABLE 82**

| Component No. | Material | Example 17A | Example 17B | Example 17C | Example 17D | Example 17E |
|---|---|---|---|---|---|---|
| 1 | DOWANOL PM⁴⁰ | 11.47 | 11.47 | 11.47 | 11.47 | 11.47 |
| 2 | BLS-2700⁴¹ | 12.71 | 12.71 | 12.71 | 12.71 | 12.71 |
| 3 | Ethanol | 177.24 | 177.24 | 177.24 | 177.24 | 177.24 |
| 4 | Butvar B-90⁴² | 8.62 | 8.62 | 8.62 | 8.62 | 8.62 |
| 5 | Aerosil 200⁴³ | 0.75 | 0.75 | 0.75 | 0.75 | 0.75 |
| 6 | Toluene⁴⁴ | 8.64 | 8.64 | 8.64 | 8.64 | 8.64 |
| 7 | Xylene⁴⁵ | 6.49 | 6.49 | 6.49 | 6.49 | 6.49 |
| 8 | Isobutyl Alcohol⁴⁶ | 7.36 | 7.36 | 7.36 | 736 | 7.36 |
| 9 | Butanol⁴⁷ | 11.79 | 11.79 | 11.79 | 11.79 | 11.79 |
| 10 | Phosphoric Acid 85%⁴⁸ | 1.99 | 1.99 | 1.99 | 1.99 | 1.99 |
| 11 | Deionized Water | 0.11 | 0.11 | 0.11 | 0.11 | 0.11 |
| 12 | Zinc tetroxy chromate⁴⁹ | 2.82 | | | | |
| | Example 19 Particles | | 2.82 | | | |
| | Example 18 Particles | | | 2.82 | | |
| | Example 47 Particles | | | | 2.82 | |
| | Example 20 Particles | | | | | 2.82 |

| | | | | | | |
|---|---|---|---|---|---|---|
| 40 Propylene glycol monomethyl ether commercially available from BASF Corp. 41 Phenolic resin commercially available from Georgia Pacific. 42 Poly vinyl butyral resin commercially available from Solutia Inc. 43 Silicon dioxide commercially available from Cabot Corp. 44 Commercially available from Ashland Chemical Co. 45 Commercially available from Ashland Chemical Co. 46 Commercially available from Avecia. 47 Commercially available from BASF Corp. 48 Commercially available from Akzo Chemicals Inc. 49 Commercially available from PMG Colours. | | | | | | |

### Test Substrates

The compositions of Table 82, as well as Examples 17F and 17G (described below), were applied to the test substrates identified in Table 83 using the same procedure as was described above for Coating Composition Examples 11A to 11G. Results are illustrated in Table 83, with lower value indicated better corrosion resistance results.

**TABLE 83**

| Substrate | Example 17A | Example 17B | Example 17C | Example 17D | Example 17E | Example 17F³⁸ | Example 17G³⁹ |
|---|---|---|---|---|---|---|---|
| Cold Rolled Steel (APR10288) | 3.4 | 3.3 | 6.7 | 3.1 | 14.3 | 28 | 3.8 |
| G-60 Galvanized (APR18661) | 12.7 | 3 | 13.2 | 10.6 | 15.7 | 8.3 | 13.5 |
| Aluminum (APR21047) | 0.7 | 4.5 | 0 | 4.3 | 21 | 2.8 | 0 |

### COATING COMPOSITION EXAMPLES 18A AND 18B

Coating compositions were prepared using the components and weights (in grams) shown in Table 84. Coatings were prepared in the same manner as described for Coating Composition Examples 11A to 11E.

**TABLE 84**

| Component No. | Material | Example 18A (Lab Control) | Example 18B |
|---|---|---|---|
| 1 | Isopropanol¹⁶ | 6.25 | 6.25 |
| 2 | NORMAL BUTYL ALCOHOL¹⁷ | 13.00 | 13.00 |
| 3 | Toluene¹⁸ | 45.18 | 45.18 |
| 4 | MPA 2000T/#202-T ANTI-SETTLING AGT¹⁹ | 1-13 | 1.13 |
| 5 | Ethanol²⁰ | 52.96 | 52.96 |
| 6 | ANTI-TERRA-U²¹ | 0.45 | *0.45* |
| 7 | PHENODUR PR 263²² | 3.02 | 3.02 |
| 8 | MOWITAL B30H²³ | 8.03 | 8.03 . |
| 9 | RAVEN 410²⁴ | 0.15 | 0.15 |
| 10 | CAB-O-SIL M-5²⁵ | 0.46 | 0.46 |
| 11 | MICROTALC-MONTANA TALC MP 15-38²⁶ | 9.77 | 9.77 |
| 12 | NALZIN-2²⁷ | 10.35 | |
| | Example 20 Particles | | 10.35 |
| 13 | SOLSPERSE 32500²⁸ | | 0.35 |
| 14 | MAPICO YELLOW 2150A²⁹ | 1.91 | 1.91 |
| 15 | TRONOX CR-800³⁰ | 6.32 | 6.32 |
| 16 | EPON 834-X-80³¹ | 2.05 | 2.05 |
| 17 | NUXTRA ZINC 16%³² | 0.97 | 0.97 |
| 18 | 4-METHYL-2PENTANONE³³ | 20.00 | 20.00 |
| 19 | TANNIC ACID³⁴ | 0.62 | 0.62 |
| 20 | PHOSPHORIC ACID 85%³⁵ | 3.00 | 3.00 |

### Test Substrates

The compositions of Table 84, as well as Examples 18C and 18D (described below), were applied to the test substrates identified in Table 85 using the same procedure as was described above for Coating Composition Examples 11A to 11G. Results are illustrated in Table 85, with lower value indicated better corrosion resistance results.

**TABLE 85**

| Substrate | Example 18A | Example 18B | Example 18C³⁸ | Example 18D³⁹ |
|---|---|---|---|---|
| Cold Rolled Steel (APR10288) | 3.4 | 3.3 | 28 | 3.8 |
| G-60 Galvanized (APR18661) | 12.7 | 3 | 8.3 | 13.5 |
| Aluminum (APR21047) | 0.7 | 4.5 | 2.8 | 0 |

### COATING COMPOSITION EXAMPLES 19A TO 19H

Coating compositions were prepared using the components and weights (in grams) shown in Table 86. Coatings were prepared in the same manner as described for Coating Composition Examples 17A to 17E.

**TABLE 86**

| Component No. | Material | Ex. 19A | Ex. 19B | Ex. 19C | Ex. 19D | Ex.19E | Ex. 19F | Ex. 19G | Ex. 19H |
|---|---|---|---|---|---|---|---|---|---|
| 1 | DOWANOL PM⁴⁰ | 11.47 | 11.47 | 11.47 | 11.47 | 11.47 | 11.47 | 11.47 | 11.47 |
| 2 | BLS-2700⁴¹ | 12.71 | 12.71 | 12.71 | 12.71 | 12.71 | 12.71 | 12.71 | 12.71 |
| 3 | Ethanol | 177.24 | 177.24 | 177.24 | 177.24 | 177.24 | 177.24 | 177.24 | 177.24 |
| 4 | Butvar B-90⁴² | 8.62 | 8.62 | 8.62 | 8.62. | 8.62 | 8.02 | 8.62 | 8.62 |
| 5 | Aerosil 200⁴³ | 0.75 | 0.75 | 0.75 | 0.75 | 0.75 | 0.75 | 0.75 | 0.75 |
| 6 | Toluene⁴⁴ | 8.64 | 8.64 | 8.64 | 8.64 | 8.64 | 8.64 | 8.64 | 8.64 |
| 7 | Xylene⁴⁵ | 6.49 | 6.49 | 6.49 | 6.49 | 6.49 | 6.49 | 6.49 | 6.49 |
| 8 | Isobutyl Alcohol⁴⁶ | 7.36 | 7.36 | 7.36 | 7.36 | 7.36 | 7.36 | 7.36 | 7.36 |
| 9 | Butanol⁴⁷ | 11.79 | 11.79 | 11.79 | 11.79 | 11.79 | 11.79 | 11.79 | 11.79 |
| 10 | Phosphoric Acid 85%⁴³ | 1.99 | 1.99 | 1.99 | 1.99 | 1.99 | 1.99 | 1.99 | 1.99 |
| 11 | Deionized Water | 0.11 | 0.11 | 0.11 | 0.11 | 0.11 | 0.11 | 0.11 | 0.11 |
| 12 | Zinc tetroxy chromate⁴⁹ | 2.82 | | | | | | | |
| | Example 33 Particles | | 2.82 | | | | | | |
| | Example 32 Particles | | | 2.82 | | | | | |
| | Example 34 Particles | | | | 2.82 | | | | |
| | Example 35 Particles | | | | | 2.82 | | | |
| | Example 37 Particles | | | | | | 2.82 | | |
| | Example 38 Particles | | | | | | | 2.82 | |
| | Example 39 Particles | | | | | | | | 2.82 |

### Test Substrates

The compositions of Table 86, as well as Examples 19I and 19J (described below), were applied to the test substrates identified in Table 87 using the same procedure as was described above for Coating Composition Examples 11A to 11G. Results are illustrated in Table 87, with lower value indicated better corrosion resistance results.

**TABLE 87**

| Substrate | Ex. 19A | Ex. 19B | Ex. 19C | Ex. 19D | Ex. 19E | Ex. 19F | Ex. 19G | Ex. 19H | Ex. 19I³⁸ | Ex. 19J³⁶ |
|---|---|---|---|---|---|---|---|---|---|---|
| Cold Rolled Steel (APR10288) | 3.2 | 9.3 | 1.7 | 26.3 | 23.3 | 22.3 | 26.7 | 15.2 | 40 | 32.5 |
| G-60 Galvanized (APR18661) | 10.2 | 0.8 | 2.8 | Delam | 14.6 | 14.7 | 2.6 | 2 | 19.2 | 13.7 |
| Aluminum (APR21047) | 0.2 | 2.3 | 1.3 | 10.3 | 15.7 | 113 | 18 | 8.3 | 3.8 | 2 |

### COATING COMPOSITION EXAMPLES 20A TO 20G

Coating compositions were prepared using the components and weights (in grams) shown in Table 88. Coatings were prepared in the same manner as described for Coating Composition Examples 17A to 17E.

**TABLE 88**

| Component No. | Material | Example 20A | Example 20B | Example 20C | Example 20D | Example 20E | Example 20F | Example 20G |
|---|---|---|---|---|---|---|---|---|
| 1 | DOWANOL PM⁴⁰ | 10.55 | 10.55 | 10.55 | 10.55 | 10.55 | 10.55 | 10.55 |
| 2 | BLS-2700⁴¹ | 11.70 | 11.70 | 11.70 | 11.70 | 11.70 | 11.70 | 11.70 |
| 3 | Ethanol | 163.06 | 163.06 | 163.06 | 163.06 | 163.06 | 163.06 | 163.06 |
| 4 | Butvar B-90⁴² | 7.93 | 7.93 | 7.93 | 7.93 | 7.93 | 7.93 | 7.93 |
| 5 | Aerosil 200⁴³ | 0.69 | 0.69 | 0.69 | 0.69 | 0.69 | 0.69 | 0.69 |
| 6 | Toluene⁴⁴ | 7.95 | 7.95 | 7.95 | 7.95 | 7.95 | 7.95 | 7.95 |
| 7 | Xylene⁴⁵ | 5.97 | 5.97 | 5.97 | 5.97 | 5.97 | 5.97 | 5.97 |
| 8 | Isobutyl Alcohol⁴⁶ | 6.77 | 6.77 | 6.77 | 6.77 | 6.77 | 6.77 | 6.77 |
| 9 | Butanol⁴⁷ | 10.85 | 10.85 | 10.85 | 10.85 | 10.85 | 10.85 | 10.85 |
| 10 | Phosphoric Acid 85%⁴⁸ | 1.83 | 1.83 | 1.83 | 1.83 | 1.83 | 1.83 | 1.83 |
| 11 | Deionized Water | 0.11 | 0.11 | 0.11 | 0.11 | 0.11 | 0.11 | 0.11 |
| 12 | Zinc tetroxy chromate⁴⁹ | 2.60 | | | | | | |
| | Example 38 Particles | | 2.60 | | | | | |
| | Example 40 Particles | | | 2.60 | | | | |
| | Example 21 Particles | | | | 2.60 | | | |
| | Example 28 Particles | | | | | 2.60 | | |
| | Example 27 Particles | | | | | | 2.60 | |
| | Example 24 Particles | | | | | | | 2.60 |

### Test Substrates

The compositions of Table 88, as well as Examples 20H and 20I (described below), were applied to the test substrates identified in Table 89 using the same procedure as was described above for Coating Composition Examples 11A to 11G. Results are illustrated in Table 89, with lower value indicated better corrosion resistance results.

**TABLE 89**

| Substrate | Example 20A | Example 20B | Example 20C | Example 20D | Example 20E | Example 20F | Example 20G | Example 20H³⁸ | Example 20I³⁶ |
|---|---|---|---|---|---|---|---|---|---|
| Cold Rolled Steel (APR10288) | 8.3 | 13.5 | 36.3 | 10.8 | 18.3 | 24.8 | 18.3 | 16.8 | 14.7 |
| G-60 Galvanized (APR18661) | 12.8 | 3.5 | 3.5 | 0 | 1.2 | 0 | 0 | 5.3 | 4.9 |
| Aluminum (APR21047) | 1.4 | 14.2 | 9.7 | 3 | 7.4 | 8.5 | 16 | 3.3 | 3.8 |

### COATING COMPOSITION EXAMPLES 21A TO 21I

Coating compositions were prepared using the components and weights (in grams) shown in Table 90. Coatings were prepared in the same manner as described for Coating Composition Examples 11A to 11E.

**TABLE 90**

| Component No. | Material | Ex. 21A | Ex. 21B | Ex. 21C | Ex. 21D | Ex. 21E | Ex. 21F | Ex. 21G | Ex. 21H | Ex. 21I |
|---|---|---|---|---|---|---|---|---|---|---|
| 1 | Isopropanol¹⁶ | 6.25 | 6.25 | 6.25 | 6.25 | 6.25 | 6.25 | 6.25 | 6.25 | 6.25 |
| 2 | NORMAL BUTYL ALCOHOL¹⁷ | 13.00 | 13.00 | 13.00 | 13.00 | 13.00 | 13.00 | 13.00 | 13.00 | 13.00 |
| 3 | Toluene¹⁸ | 45.18 | 45.18 | 45.18 | 45.18 | 45.18 | 45.18 | 45.18 | 45.18 | 45.18 |
| 4 | MPA 2000T/#202-T ANTISETTLING AGT¹⁹ | 1.13 | 1.13 | 1.13 | 1.13 | 1.13 | 1.13 | 1.13 | 1.13 | 1.13 |
| 5 | Ethanol²⁰ | 52.96 | 52.96 | 52.96 | 52.96 | 52.96 | 52.96 | 52.96 | 52.96 | 52.96 |
| 6 | ANTI-TERRA-U²¹ | 0.45 | 0.45 | 0.45 | 0.45 | 0.45 | 0.45 | 0.45 | 0.45 | 0.45 |
| 7 | PHENODUR PR 263²² | 3.02 | 3.02 | 3.02 | 3.02 | 3.02 | 3.02 | 3.02 | 3.02 | 3.02 |
| 8 | MOWITAL B30H²³ | 8.03 | 8.03 | 8.03 | 8.03 | 8.03 | 8.03 | 8.03 | 8.03 | 8.03 |
| 9 | RAVEN 410²⁴ | 0.15 | 0.15 | 0.15 | 0.15 | 0.15 | 0.15 | 0.15 | 0.15 | 0.15 |
| 10 | CAB-O-SIL M-5²⁵ | 0.46 | 0.46 | 0.46 | 0.46 | 0.46 | 0.46 | 0.46 | 0.46 | 0.46 |
| 11 | MICROTALC-MONTANA TALC MP 15-38²⁶ | 9.77 | 9.77 | 9.77 | . 9.77 | 9.77 | 9.77 | 9.77 | 9.77 | 9.77 |
| 12 | NALZIN-2²⁷ | 10.35 | 2.59 | 2.59 | 5.18 | | 5.18 | | | |
| | Example 39 Particles | | 2.59 | | | 5.18 | 5.18 | 10.35 | | |
| | Example 38 Particles | | | 2.59 | 5.18 | | | | 10.35 | 5.18 |
| 13 | SOLSPERSE 32500²⁸ | 0.35 | 0.35 | 0.35 | 0.35 | 0.35 | 0.35 | 0.35 | 0.35 | 0.35 |
| 14 | MAPICO YELLOW 2150A²⁹ | 1.91 | 1.91 | 1.91 | 1.91 | 1.91 | 1.91 | 1.91 | 1.91 | 1.91 |
| 15 | TRONOX CR-800³⁰ | 6.32 | 6.32 | 6.32 | 6.32 | 6.32 | 6.32 | 6.32 | 6.32 | 6.32 |
| 16 | EPON 834-X-80³¹ | 2.05 | 2.05 | 2.05 | 2.05 | 2.05 | 2.05 | 2.05 | 2.05 | 2.05 |
| 17 | NUXTRA ZINC 16%³² | 0.97 | 0.97 | 0.97 | 0.97 | 0.97 | 0.97 | 0.97 | 0.97 | 0.97 |
| 18 | 4-METHYL-2PENTANONE³³ | 20.00 | 20.00 | 20.00 | 20.00 | 20.00 | 20.00 | 20.00 | 20.00 | 20.00 |
| 19 | TANNIC ACID³⁴ | 0.62 | 0.62 | 0.62 | 0.62 | 0.62 | 0.62 | 0.62 | 0.62 | 0.62 |
| 20 | PHOSPHORIC ACID 85%³⁵ | 3.00 | 3.00 | 3.00 | 3.00 | 3.00 | 3.00 | 3.00 | 3.00 | 3.00 |

### Test Substrates

The compositions of Table 90 as well as Examples 21J and 21K (described below), were applied to the test substrates identified in Table 91 using the same procedure as was described above for Coating Composition Examples 11A to 11G. Results are illustrated in Table 91, with lower value indicated better corrosion resistance results.

**TABLE 91**

| Substrate | Ex. 21A | Ex. 21B | Ex. 21C | Ex. 21D | Ex. 21E | Ex. 21F | Ex. 21G | Ex. 21H | Ex. 21I | Ex. 21J³⁸ | Ex. 21K⁵⁰ |
|---|---|---|---|---|---|---|---|---|---|---|---|
| Cold Rolled Steel (APR10288) | 16.3 | 26.2 | 25.7 | 28 | 1 | 11.5 | 2.3 | 1 | 1 | Delam. | 6.83 |
| G-60 Galvanized (APR18661) | 11.2 | 2.2 | 7.7 | 8.5 | 0 | 5.67 | 0 | 0 | 2.5 | 11 | 4.67 |
| Aluminum (APR21047) | 0.8 | 0.3 | 0.3 | 0.5 | 0 | 0 | 0 | 0 | 0 | 7 | 2.3 |

| | | | | | | | | | | | |
|---|---|---|---|---|---|---|---|---|---|---|---|
| ⁵⁰DX-1793 commercially available from PPG Industries, Inc., Pittsburgh, PA. | | | | | | | | | | | |

### COATING COMPOSITION EXAMPLES 22A TO 22I

Coating compositions were prepared using the components and weights (in grams) shown in Table 92. Coatings were prepared in the same manner as described for Coating Composition Examples 11A to 11E.

**TABLE 92**

| Component No. | Material | Ex. 22A | Ex. 22B | Ex. 22C | Ex. 22D | Ex. 22E | Ex. 22F | Ex. 22G | Ex. 22H | Ex. 221 |
|---|---|---|---|---|---|---|---|---|---|---|
| 1 | Isopropanol¹⁶ | 6.25 | 6.25 | 6.25 | 6.25 | 6.25 | 6.25 | 6.25 | 6.25 | 6.25 |
| 2 | NORMAL BUTYL ALCOHOL¹⁷ | 13.00 | 13.00 | 13.00 | 13.00 | 13.00 | 13.00 | 13.00 | 13.00 | 13.00 |
| 3 | Toluene¹⁸ | 45.18 | 45.18 | 45.18 | 45.18 | 45.18 | 45.18 | 45.18 | 45.18 | 45.18 |
| 4 | MPA 2000TI#202-T ANTI-SETTLTNG AGT¹⁹ | 1.13 | 1.13 | 1.13 | 1.13 | 1.13 | 1.13 | 1.13 | 1.13 | 1.13 |
| 5 | Ethanol²⁰ | 52.96 | 52.96 | 52.96 | 52.96 | 52.96 | 52.96 | 52.96 | 52.96 | 52.96 |
| 6 | ANTI-TERRA-U²¹ | 0.45 | 0.45 | 0.45 | 0.45 | 0.45 | 0.45 | 0.45 | 0.45 | 0.45 |
| 7 | PHENODUR PR 263²² | 3.02 | 3.02 | 3.02 | 3.02 | 3.02 | 3.02 | 3.02 | 3.02 | 3.02 |
| 8 | MOWITAL B30H²³ | 8.03 | 8.03 | 8.03 | 8.03 | 8.03 | 8.03 | 8.03 | 8.03 | 8.03 |
| 9 | RAVEN 410²⁴ | 0.15 | 0.15 | 0.15 | 0.15 | 0.15 | 0.15 | 0.15 | 0.15 | 0.15 |
| 10 | CAB-O-SIL M-5²⁵ | 0.46 | 0.46 | 0.46 | 0.46 | 0.46 | 0.46 | 0.46 | 0.46 | 0.46 |
| 11 | MICROTALC-MONTANA TALC MP 15-38²⁶ | 9.77 | 9.77 | 9.77 | 9.77 | 9.77 | 9.77 | 9.77 | 9.77 | 9.77 |
| 12 | NALZIN-2²⁷ | 10.35 | | | | | | | | |
| | Example 41 Particles | | 10.35 | | | | | | | |
| | Example 38 Particles | | | 10.35 | | | | | | |
| | Example 42 Particles | | | | 10.35 | | | | | |
| | Example 43 Particles | | | | | 10.35 | | | | |
| | Example 39 Particles | | | | | | 10.35 | | | |
| | Example 44 Particles | | | | | | | 10.35 | | |
| | Example 38 Particles | | | | | | | | 10.35 | |
| | Example 39 Particles | | | | | | | | | 10.35 |
| 13 | SOLSPERSE 32500²⁸ | 0.35 | 0.35 | 0.35 | 0.35 | 0.35 | 0.35 | 0.35 | 0.35 | 0.35 |
| 14 | MAPICO YELLOW 2150A²⁹ | 1.91 | 1.91 | 1.91 | 1.91 | 1.91 | 1.91 | 1.91 | 1.91 | 1.91 |
| 15 | TRONOX CR-800³⁰ | 6.32 | 6.32 | 6.32 | 6.32 | 6.32 | 6.32 | 6.32 | 6.32 | 6.32 |
| 16 | EPON 834-X-80³¹ | 2.05 | 2.05 | 2.05 | 2.05 | 2.05 | 2.05 | 2.05 | 2.05 | 2.05 |
| 17 | NUXTRA ZINC 16%³² | 0.97 | 0.97 | 0.97 | 0.97 | 0.97 . | 0.97 | 0.97 | 0.97 | 0.97 |
| 18 | 4-METHYL-2PENTANONE³³ | 20.00 | 20.00 | 20.00 | 20.00 | 20.00 | 20.00 | 20.00 | 20.00 | 20.00 |
| 19 | TANNIC ACID³⁴ | 0.62 | 0.62 | 0.62 | 0.62 | 0.62 | 0.62 | 0.62 | 0.62 | 0.62 |
| 20 | PHOSPHORIC ACID 85%³⁵ | 3.00 | 3.00 | 3.00 | 3.00 | 3.00 | 3.00 | 3.00 | 3.00 | 3.00 |

### Test Substrates

The compositions of Table 92, as well as Examples 21J and 21K (described below), were applied to the test substrates identified in Table 93 using the same procedure as was described above for Coating Composition Examples 11A to 11G. Results are illustrated in Table 93, with lower value indicated better corrosion resistance results.

**TABLE 93**

| Substrate | Ex. 22A | Ex. 22B | Ex. 22C | Ex. 22D | Ex. 22E | Ex. 22F | Ex. 22G | Ex. 22H | Ex. 221 | Ex. 22J²³ | Ex. 22K²² |
|---|---|---|---|---|---|---|---|---|---|---|---|
| Cold Rolled Steel (APR10288) | 10.5 | 16.5 | 12.8 | 1 | 15.7 | 1.7 | 1 | 8.8 | 2.7 | 27.5 | 11 |
| G-60 Galvanized (APR18661) | 5.17 | 1.5 | 1 | 9.33 | 10.7 | 10.8 | 3.33 | 2 | 16.2 | 16.3 | 21 |
| Aluminum (APR21047) | 1 | 0 | 1 | 0.7 | 1 | 1 | 0.83 | 1 | 0.5 | 13 | 0 |

### COATING COMPOSITION EXAMPLES 23A TO 23E

Coating compositions were prepared using the components and weights (in grams) shown in Table 94. Coatings were prepared in the same manner as described for Coating Composition Examples 11A to 11E.

**TABLE 94**

| Component No. | Material | Example 23A | Example 23B | Example 23C | Example 23D | Example 23E |
|---|---|---|---|---|---|---|
| 1 | Isopropanol¹⁶ | 6.25 | 6.25 | 6.25 | 6.25 | 6.25 |
| 2 | NORMAL BUTYL ALCOHOL¹⁷ | 13.00 | 13.00 | 13.00 | 13.00 | 13.00 |
| 3 | Toluene¹⁸ | 45.18 | 45.18 | 45.18 | 45.18 | 45.18 |
| 4 | MPA 2000T/#202-T ANTI-SETTLING ACT¹⁹ | 1.13 | 1.13 | 1.13 | 1.13 | 1.13 |
| 5 | Ethanol²⁰ | 52.96 | 52.96 | 52.96 | 52.96 | 52.96 |
| 6 | ANTI-TERRA-U²¹ | 0.45 | 0.45 | 0:45 | 0.45 | 0.45 |
| 7 | PHENODUR PR 263²² | 3.02 | 3.02 | 3.02 | 3.02 | 3.02 |
| 8 | MOWITAL B30H²³ | 8.03 | 8.03 | 8.03 | 8.03 | 8.03 |
| 9 | RAVEN 410²⁴ | 0.15 | 0.15 | 0.15 | 0.15 | 0.15 |
| 10 | CAB-O-SIL M-5²⁵ | 0.46 | 0.46 | 0.46 | 0.46 | 0.46 |
| 11 | MICROTALC-MONTANA TALC MP 15-38²⁶ | 9.77 | 9.77 | 9.77 | 9.77 | 9.77 |
| 12 | NALZIN-2²⁷ | 10.35 | | | | |
| | Example 55 Particles | | 10.35 | | | |
| | Example 49 Particles | | | 10.35 | | |
| | Example 50 Particles | | | | 10.35 | |
| | Example 53 Particles | | | | | 10.35 |
| 13 | SOLSPERSE 32500²⁸ | 0.35 | 0.35 | 0.35 | 0.35 | 0.35 |
| 14 | MAPICO YELLOW | 1.91 | 1.91 | 1.91 | 1.91 | 1.91 |
| 15 | TRONOX CR-800³⁰ | 6.32 | 6.32 | 6.32 | 6.32 | 6.32 |
| 16 | EPON S34-X-80³¹ | 2.05 | 2.05 | 2.05 | 2.05 | 2.05 |
| 17 | NUXTRA ZINC 16%³² | 0.97 | 0.97 | 0.97 | 0.97 | 0.97 |
| 18 | 4-METHYL-2PENTANONE³³ | 20.00 | 20.00 | 20.00 | 20.00 | 20.00 |
| 19 | TANNIC ACID³⁴ | 0.62 | 0.62 | 0.62 | 0.62 | 0.62 |
| 20 | PHOSPHORIC ACID 85%³⁵ | 3.00 | 3.00 | 3.00 | 3.00 | 3.00 |

### Test Substrates

The compositions of Table 94, as well as Examples 23F and 23G (described below), were applied to the test substrates identified in Table 95 using the same procedure as was described above for Coating Composition Examples 11A to 11G. Results are illustrated in Table 95, with lower value indicated better corrosion resistance results.

**TABLE 95**

| Substrate | Example 23A | Example 23B | Example 23C | Example 23D | Example 23E | Example 23F³⁸ | Example 23G³⁷ |
|---|---|---|---|---|---|---|---|
| Cold Rolled Steel (APR10288) | 23.7 | 13.8 | 18.2 | 19.3 | 10.7 | Delam. | 7.5 |
| G-60 Galvanized (APR18661) | 13.8 | 13.3 | 5 | 3.7 | 7.5 | 12.3 | 15.2 |
| Aluminum (APR21047) | 2.5 | 9.5 | 16.8 | 1 | 4:2 | 3.2 | 0.7 |

### COATING COMPOSITION EXAMPLES 24A TO 24G

Coating compositions were prepared using the components and weights (in grams) shown in Table 96. Coatings were prepared in the same manner as described for Coating Composition Examples 11A to 11E.

**TABLE 96**

| Component No. | Material | Example 24A | Example 24B | Example 24C | Example 24D | Example 24E | Example 24F | Example 24G |
|---|---|---|---|---|---|---|---|---|
| 1 | Isopropanol¹⁶ | 6.25 | 6.25 | 6.25 | 6.25 | 6.25 | 6.25 | 6.25 |
| 2 | NORMAL BUTYL ALCOHOL¹⁷ | 13.00 | 13.00 | 13.00 | 13.00 | 13.00 | 13.00 | 13.00 |
| 3 | Toluene¹⁸ | 45.18 | 45.18 | 45.18 | 45.18 | 45.18 | 45.18 | 45.18 |
| 4 | MPA 2000T/#202-T ANTI-SETTLING AGT¹⁹ | 1.13 | 1.13 | 1.13 | 1.13 | 1.13 | 1.13 | 1.13 |
| 5 | Ethanol²⁰ | 52.96 | 52.96 | 52.96 | 52.96 | 52.96 | 52.96 | 52.96 |
| 6 | ANTI-TERRA-U²¹ | 0.45 | 0.45 | 0.45 | 0.45 | 0.45 | 0.45 | 0.45 |
| 7 | PHENODUR PR 263²² | 3.02 | 3.02 | 3.02 | 3.02 | 3.02 | 3.02 | 3.02 |
| 8 | MOWITAL B30H²³ | 8.03 | 8.03 | 8.03 | 8.03 | 8.03 | 8.03 | 8.03 |
| 9 | RAVEN 410²⁴ | 0.15 | 0.15 | 0.15 | 0.15 | 0.15 | 0.15 | 0.15 |
| 10 | CAB-O-SIL M-5²⁵ | 0.46 | 0.46 | 0.46 | 0.46 | 0.46 | 0.46 | 0.46 |
| 11 | MICROTALC-MONTANA TALC MP 15-38²⁶ | 9.77 | 9.77 | 9.77 | 9.77 | 9.77 | 9.77 | 9.77 |
| 12 | NALZIN-2²⁷ | 10.35 | | | | | | |
| | Example 52 Particles | | 2.6 | | | 6.50 | | 10.40 |
| | Example 53 Particles | | | 6.50 | 10.40 | | 2.60 | |
| 13 | SOLSPERSE 32500²⁸ | 0.35 | 0.35 | 0.35 | 0.35 | 0.35 | 0.35 | 0.35 |
| 14 | MAPICO YELLOW 2150A²⁹ | 1.91 | 1.91 | 1.91 | 1.91 | 1.91 | 1.91 | 1.91 |
| 15 | TRONOX CR-800³⁰ | 6.32 | 6.32 | 6.32 | 6.32 | 6.32 | 6.32 | 6.32 |
| 16 | EPON 834-X-80³¹ | 2.05 | 2.05 | 2.05 | 2.05 | 2.05 | 2.05 | 2.05 |
| 17 | NUXTRA ZINC 16%³² | 0.97 | 0.97 | 0.97 | 0.97 | 0.97 | 0.97 | 0.97 |
| 14 | 4-METHYL 2PENTANONE³³ | 20.00 | 20.00 | 20.00 | 20.00 | 20.00 | 20:00 | 20.00 |
| 19 | TANNIC ACID³⁴ | 0.62 | 0.62 | 0.62 | 0.62 | 0.62 | 0.62 | 0.62 |
| 20 | PHOSPHORIC ACID 85%³⁵ | 3.00 | 3.00 | 3.00 | 3.00 | 3.00 | 3.00 | 3.00 |

### Test Substrates

The compositions of Table 96, as well as Examples 24H and 24I (described below), were applied to the test substrates identified in Table 97 using the same procedure as was described above for Coating Composition Examples 11A to 11G. Results are illustrated in Table 97, with lower value indicated better corrosion resistance results.

**TABLE 97**

| Substrate | Example 24A | Example 24B | Example 24C | Example 24D | Example 24E | Example 24F | Example 24G | Example 24H²³ | Example 24I²² |
|---|---|---|---|---|---|---|---|---|---|
| Cold Rolled Steel (APR10288) | 11.7 | -- | 23.8 | 11.7 | 17.7 | Delam. | 7.2 | 20.2 | 7.7 |
| G-60 Galvanized (APR18661) | 16.8 | 18.5 | 6.7 | 10 | 10 | 4.8 | 9.8 | 15.2 | 9.7 |
| Aluminum (APR21047) | 3.3 | 7.2 | 2.7 | 1 | 0.2 | 5.3 | 2.7 | 1.8 | 1 |

### COATING COMPOSITION EXAMPLES 25A TO 25E

Coating compositions were prepared using the components and weights (in grams) shown in Table 98. Coatings were prepared in the same manner as described for Coating Composition Examples 11A to 11E.

**TABLE 98**

| Component No. | Material | Example 25A | Example 25B | Example 25C | Example 25D | Example 25E |
|---|---|---|---|---|---|---|
| 1 | Isopropanol¹⁶ | 6.25 | 6.25 | 6.25 | 6.25 | 6.25 |
| 2 | NORMAL BUTYL ALCOHOL¹⁷ | 13.00 | 13.00 | 13.00 | 13.00 | 13.00 |
| 3 | Toluene¹⁸ | 45.18 | 45.18 | 45.18 | 45.18 | 45.18 |
| 4 | MPA 2000T/#202-T ANTISETTLING AGT¹⁹ | 1.13 | 1.13 | 1.13 | 1.13 | 1.13 |
| 5 | Ethanol²⁰ | 52.96 | 52.96 | 52.96 | 52.96 | 52.96 |
| 6 | ANTI-TERRA-U²¹ | 0.45 | 0.45 | 0.45 | 0.45 | 0.45 |
| 7 | PHENODUR PR 263²² | 3.02 | 3.02 | 3.02 | 3.02 | 3.02 |
| 8 | MOWITAL B30H²³ | 8.03 | 8.03 | 8.03 | 8.03 | 8.03 |
| 9 | RAVEN 410²⁴ | 0.15 | 0.15 | 0.15 | 0.15 | 0.15 |
| 10 | CAB-O-SIL M-5²⁵ | 0.46 | 0.46 | 0.46 | 0.46 | 0.46 |
| 11 | MICROTALC-MONTANA TALC MP 15-38²⁶ | 9.77 | 9.77 | 9.77 | 9.77 | 9.77 |
| 12 | NAIZIN-2²⁷ | 10.35 | | | | |
| | Example 59 Particles | | 10.35 | | | |
| | Example 51 Particles | | | 5.18 | | |
| | Example 18 Particles | | | | 5.18 | |
| | Example 55 Particles | | | | | 5.18 |
| 13 | SOLSPERSE 32500²⁸ | 0.35 | 0.35 | 0.35 | 0.35 | 0.35 |
| 14 | MAPICO YELLOW 2150A²⁹ | 1.91 | 1.91 | 1.91 | 1.91 | 1.91 |
| 15 | TRONOX CR-800³⁰ | 6.32 | 6.32 | 6.32 | 6.32 | 6.32 |
| 16 | EPON 834-X-80³¹ | 2.05 | 2.05 | 2.05 | 2.05 | 2.05 |
| 17 | NUXTRA ZINC 16%³² | 0.97 | 0.97 | 0.97 | 0.97 | 0.97 |
| 18 | 4-METHYL-2PENTANONE³³ | 20.00 | 20.00 | 20.00 | 20.00 | 20.00 |
| 19 | TANNIC ACID³⁴ | 0.62 | 0.62 | 0.62 | 0.62 | 0.62 |
| 20 | PHOSPHORIC ACID 85%³⁵ | 3.00 | 3.00 | 3.00 | 3.00 | 3.00 |

### Test Substrates

The compositions of Table 98, as well as Examples 25F and 25G (described below), were applied to the test substrates identified in Table 99 using the same procedure as was described above for Coating Composition Examples 11A to 11G. Results are illustrated in Table 99, with lower value indicated better corrosion resistance results.

**TABLE 99**

| Substrate | Example 25A | Example 25B | Example 25C | Example 25D | Example 25E | Example 25F³⁸ | Example 25G³⁷ |
|---|---|---|---|---|---|---|---|
| Cold Rolled Steel (APR10288) | 25.5 | 2 | 1 | Delam. | 1 | 1.2 | 2.2 |
| G-60 Galvanized (APR18661) | 5 | 4.3 | 7 | 1 | 21 | 10.8 | 2.8 |
| Aluminum (APR21047) | 0.83 | Delam. | 4.3 | 2.3 | 16 | 1.5 | 0.7 |

### COASTING COMPOSITION EXAMPLES 26A TO 26F

Coating compositions were prepared using the components and weights (in grams) shown in Table 100. Coatings were prepared in the same manner as described for Coating Composition Examples 11A to 11E.

**TABLE 100**

| Component No. | Material | Example 26A | Example 26B | Example 26C | Example 26D | Example 26E | Example 26F |
|---|---|---|---|---|---|---|---|
| 1 | Isopropanol¹⁶ | 6.25 | 6.25 | 6.25 | 6.25 | 6.25 | 6.25 |
| 2 | NORMAL BUTYL ALCOHOL¹⁷ | 13.00 | 13.00 | 13.00 | 13.00 | 13.00 | 13.00 |
| 3 | Toluene¹⁸ | 45.18 | 45.18 | 45.18 | 45.18 | 45.18 | 45.18 |
| 4 | MPA 2000T/#202-T ANTI-SETTLING AGT¹⁹ | 1.13 | 1.13 | 1.13 | 1.13 | 1.13 | 1.13 |
| 5 | Ethanol²⁰ | 52.96 | 52.96 | 52.96 | 52.96 | 52.96 | 52.96 |
| 6 | ANTI-TERRA-U²¹ | 0.45 | 0.45 | 0.45 | 0.45 | 0.45 | 0.45 |
| 7 | PHENODUR PR 263²² | 3.02 | 3.02 | 3.02 | 3.02 | 3.02 | 3.02 |
| 8 | MOWITAL B30H²³ | 8.03 | 8.03 | 8.03 | 8.03 | 8.03 | 8.03 |
| 9 | RAVEN 410²⁴ | 0.15 | 0.15 | 0.15 | 0.15 | 0.15 | 0.15 |
| 10 | CAB-O-SIL M-5²⁵ | 0.46 | 0.46 | 0.46 | 0.46 | 0.46 | 0.46 |
| 11 | MICROTALC-MONTANA TALC MP 15-38²⁶ | 9.77 | 9.77 | 9.77 | 9.77 | 9.77 | 9.77 |
| 12 | NALZIN-2²⁷ | 10.35 | | | | | |
| | Example 45 Particles | | 10.35 | 5.18 | | | |
| | Example 46 Particles | | | | 10.35 | 5.18 | |
| | Example 39 Particles | | | | | | 5.18 |
| 13 | SOLSPERSE 32500²⁸ | 0.35 | 0.35 | 0.35. | 0.35 | 0.35 | 0.35 |
| 14 | MAPICO YELLOW 2150A²⁹ | 1.91 | 1.91 | 1.91 | 1.91 | 1.91 | 1.91 |
| 15 | TRONOX CR-800³⁰ | 6.32 | 6.32 | 6.32 | 6.32 | 6.32 | 6.32 |
| 16 | EPON 834+X-80³¹ | 2.05 | 2.05 | 2.05 | 2.05 | 2.05 | 2.05 |
| 17 | NUXTRA ZINC 16%³² | 0.97 | 0.97 | 0.97 | 0.97 | 0.97 | 0.97 |
| 18 | 4-METHYL-2PENTANONE³³ | 20.00 | 20.00 | 20.00 | 20.00 | 20.00 | 20.00 |
| 19 | TANNIC ACID³⁴ | 0.62 | 0.62 | 0.62 | 0.62 | 0.62 | 0.62 |
| 20 | PHOSPHORIC ACID 85%³⁵ | 3.00 | 3.00 | 3.00 | 3.00 | 3.00 | 3.00 |

### Test Substrates

The compositions of Table 100, as well as Examples 26G and 26H (described below), were applied to the test substrates identified in Table 101 using the same procedure as was described above for Coating Composition Examples 11A to 11G. Results are illustrated in Table 101, with lower value indicated better corrosion resistance results.

**TABLE 101**

| Substrate | Example 26A | Example 26B | Example 26C | Example 26D | Example 26E | Example 26F | Example 26G³⁸ | Example 26H³⁷ |
|---|---|---|---|---|---|---|---|---|
| Cold Rolled Steel (APR10288) | 16.2 | 14.7 | 19.3 | 7.2 | 8.7 | 23 | 33.2 | 3.7 |
| G-60 Galvanized (APR18661) | 8.3 | 15.2 | 10.2 | 7.7 | 10.5 | 4 | 7.8 | 8.2 |
| Aluminum (APR21047) | 1.7 | 10.2 | 21.3 | 17.5 | 9.7 | 7.2 | 7.2 | 0.7 |

### COATING COMPOSITION EXAMPLES 27A TO 27E

Coating compositions were prepared using the components and weights (in grams) shown in Table 102. Coatings were prepared in the same manner as described for Coating Composition Examples 11A to 11E.

**TABLE 102**

| Component No. | Material | Example 27A | Example 27B | Example 27C | Example 27D | Example 27E |
|---|---|---|---|---|---|---|
| 1 | Isopropanol¹⁶ | 6.25 | 6.25 | 6.25 | 6.25 | 6.25 |
| 2 | NORMAL BUTYL ALCOHOL¹⁷ | 28.00 | 28.00 | 28.00 | 28.00 | 28.00 |
| 3 | Toluene¹⁸ | 45.18 | 45.18 | 45.18 | 45.18 | 45.18 |
| 4 | MPA 2000T/#202-T ANTI-SETTLING AGT¹⁹ | 1.13 | 1.13 | 1.13 | 1.13 | 1.13 |
| 5 | Ethanol²⁰ | 52.96 | 52.96 | 52.96 | 52.96 | 52.96 |
| . 6 | ANM-TERRA-U²¹ | 0.45 | 0.45 | 0.45 | 0.45 | 0.45 |
| 7 | PHENODUR PR 263²² | 3.02 | 3.02 | 3.02 | 3.02 | 3.02 |
| 8 | MOWITAL B30H²³ | 8.03 | 8.03 | 8.03 | 8.03 | 8.03 |
| 9 | RAVEN 410²⁴ | *0.15* | 0.15 | 0.15 | 0.15 | 0.15 |
| 10 | CAB-O-SIL M-5²⁵ | 0.46 | 0.46 | 0.46 | 0.46 | 0.46 |
| 11 | MICROTALC-MONTANA TALC MP 15-38²⁶ | 9.77 | 9.77 | 9.77 | 9.77 | 9.77 |
| 12 | NALZIN-2²⁷ | 10.35 | 6.25 | 6.25 | 6.25 | 6.25 |
| | Example 55 Particles | | 10.35 | | | |
| | Example 49 Particles | | | 10.35 | | |
| | Example 50 Particles | | | | 10.35 | |
| | Example 51 Particles | | | | | 10.35 |
| 13 | SOLSPERSE 32500²⁸ | 0.35 | 0.35 | 0.35 | 0.35 | 0.35 |
| 14 | MAPICO YELLOW 2150A²⁹ | 1.91 . | 1.91 | 1.91 | 1.91 | 1.91 |
| 15 | TRONOX CR-800³⁰ | 6.32 | 6.32 | 6.32 | 6.32 | 6.32 |
| 16 | EPON 834-X-80³¹ | 2.05 | 2.05 | 2.05 | 2.05 | 2.05 |
| 17 | NUXTRA ZINC 16%³² | 0.97 | 0.97 | 0.97 | 0.97 | 0.97 |
| 18 | 4-METHYL-2PENTANONE³³ | 20 | 20 | 20 | 20 | 20 |
| 19 | TANNIC ACID³⁴ | 0.62 | 0.62 | 0.62 | 0.62 | 0.62 |
| 20 | PHOSPHORIC ACID 85%³⁵ | 3.0 | 3.0 | 3.0 | 3.0 | 3.0 |

### Test Substrates

The compositions of Table 102, as well as Examples 27F and 27G (described below), were applied to the test substrates identified in Table 103 using the same procedure as was described above for Coating Composition Examples 11A to 11G. Results ate illustrated in Table 103, with lower value indicated better corrosion resistance results.

**TABLE 103**

| Substrate | Example 27A | Example 27B | Example 27C | Example 27D | Example 27E | Example 27F³⁸ | Example 27G³⁷ |
|---|---|---|---|---|---|---|---|
| Cold Rolled Steel (APR10288) | 23.7 | 13.8 | 18.2 | 19.3 | 10.7 | Delam. | 7.5 |
| G-60 Galvanized (APR18661) | 13.8 | 13.3 | 5 | 3.7 | 7.5 | 123 | 15.2 |
| Aluminum (APR21047) | 2.5 | 9.5 | 16.8 | 1 | 4.2 | 3.2 | 0.7 |

### COATING COMPOSITION EXAMPLES 28A TO 28G

Coating compositions were prepared using the components and weights (in grams) shown in Table 104. Coatings were prepared in the same manner as described for Coating Composition Examples 11A to 11E.

**TABLE 104**

| Component No. | Material | Ex. 28A | Ex. 28B | Ex. 28C | Ex. 28D | Ex. 28E | Ex. 28F | Ex. 28G |
|---|---|---|---|---|---|---|---|---|
| 1 | Isopropanol¹⁶ | 6.25 | 6.25 | 6.25 | 6.25 | 6.25 | 6.25 | 6.25 |
| 2 | NORMAL BUTYL ALCOHOL¹⁷ | 28 | 28 | 28 | 28 | 28 | 28 | 28 |
| 3 | Toluene¹⁸ | 45:18 | 45.18 | 45.18 | 45.18 | 45.18 | 45.18 | 45.18 |
| 4 | MPA 2000T/#202-T ANTI-SETTLING AGT¹⁹ | 1.13 | 1.13 | 1.13 | 1.13 | 1.13 | 1.13 | 1.13 |
| 5 | Ethanol²⁰ | 52.96 | 52.96 | 52.96 | 52.96 | 52.96 | 52.96 | 52.96 |
| 6 | ANTI- TERRA-U²¹ | 0.45 | 0.45 | 0.45 | 0.45 | 0.45 | 0.45 | 0.45 |
| 7 | PHENODUR PR 263²² | 3.02 | 3.02 | 3.02 | 3.02 | 3.02 | 3.02 | 3.02 |
| 8 | MOWITAL B30H²³ | 8.03 | 8.03 | 8.03 | 8.03 | 8.03 | 8.03 | 8.03 |
| 9 | RAVEN 410²⁴ | 0.15 | 0.15 | 0.15 | 0.15 | 0.15 | 0.15 | 0.15 |
| 10 | CAB-O-SIL M-5²⁵ | 0.46 | 0.46 | 0.46 | 0.46 | 0.46 | 0.46 | 0.46 |
| 11 | MICROTALC-MONTANA TALC MP 15-38²⁶ | 9.77 | 9.77 | 9.77 | 9.77 | 9.77 | 9.77 | 9.77 |
| 12 | NALZIN-2²⁷ | 10.35 | 6.25 | 6.25 | 6.25 | 6.25 | 6.25 | 6.25 |
| | Example 51 Particles | | 5.18 | | | | | |
| | Example 55 Particles | | | 5.18 | | | | |
| | Example 56 Particles | | | | 5.18 | | | |
| | Example 50 Particles | | | | | 5.18 | | |
| | Example 57 Particles | | | | | | 5.18 | |
| | Example 58 Particles | | | | | | | 5.18 |
| 13 | SOLSPERSE 32500²⁸ | 0.35 | 0.35 | 0.35 | 0.35 | 0.35 | 0.35 | 0.35 |
| 14 | MAPICO YELLOW 2150A²⁹ | 1.91 | 1.91 | 1.91 | 1.91 | 1.91 | 1.91 | 1.91 |
| 15 | TRONOX CR-800³⁰ | 632 | 6.32 | 6.32 | 6.32 | 6.32 | 6.32 | 6.32 |
| 16 | EPON 834-X-80³¹ | 2.05 | 2.05 | 2.05 | 2.05 | 2.05 | 2.05 | 2.05 |
| 17 | NUXTRA ZINC 16%³² | 0.97 | 0.97 | 0.97 | 0.97 | 0.97 | 0.97 | 0.97 |
| 18 | 4-METHYL-2PENTANONE³³ | 20 | 20 | 20 | 20 | 20 | 20 | 20 |
| 19 | TANNIC ACID³⁴ | 0.62 | 0.62 | 0.62 | 0.62 | 0.62 | 0.62 | 0.62 |
| 20 | PHOSPHORIC ACID 85%³⁵ | 3.00 | 3.00 | 3.00 | 3.00 | 3.00 | 3.00 | 3.00 |

### Test Substrates

The compositions of Table 104, as well as Examples 28H and 281 (described bellow), were applied to the test substrates identified in Table 105 using the same procedure as was described above for Coating Composition Examples 11A to 11 G. Results are illustrated in Table 105, with lower value indicated better corrosion resistance results.

**TABLE 105**

| Substrate | Ex. 28A | Ex. 28B | Ex. 28C | Ex. 28D | Ex. 28E | Ex. 28F | Ex. 28G | Ex. 28H³⁸ | Ex. 28I³⁷ |
|---|---|---|---|---|---|---|---|---|---|
| Cold Rolled Steel (APR10288) | 13.8 | Delam. | Delam. | 31.3 | Delam. | 32 | 32.5 | 38.3 | 3 |
| G-60 Galvanized (APR18661) | 8.5 | 7.2 | 14.8 | 11.7 | 12.2 | 10 | 17.2 | 9.7 | 1.2 |
| Aluminum (APR21047) | 3.3 | Delam. | Delam. | Delam. | 8.7 | 8.3 | 3.8 | 6.7 | 0.3 |

### COATING COMPOSITION EXAMPLES 29A TO 29E and 30A TO 30C

Coating compositions were prepared using the components and weights (in grams) shown in Tables 106 and 107. Coatings were prepared by adding components 1 to 7 to a suitable vessel under agitation with a blade and mix with zircoa beads for approximately 30 minutes to achieve a 7 Hegman. Next, components 8 to 12 were added while under agitation and left to mix for 10 minutes. After mixing the coating the milling beads were filtered out with a standard paint filter and the finished material was ready for application.

**TABLE 106**

| Component No. | Material | Example 29A | Example 29B | Example 29C | Example 29D | Example 29E |
|---|---|---|---|---|---|---|
| 1 | PPG Polyester Resin⁵⁰ | 7.25 | 6.33 | 6.29 | 5.92 | 6.00 |
| 2 | Phosphatized Epoxy⁵¹ | 255 | 2.23 | 2.22 | 2.09 | 2.11 |
| 3 | Solvesso 100⁵² | 9.43 | 8.23 | 8.18 | 7.70 | 7.80 |
| 4 | Butyl Cellosolve⁵³ | 9.43 | 8.23 | 8.18 | 7.70 | 7.80 |
| 5 | Ti-Pure R960⁵⁴ | 6.97 | 6.08 | 6.05 | 5.68 | 5.76 |
| 6 | ASP-200 Clay⁵⁵ | 10.40 | 9.08 | 9.03 | 8.48 | 8.59 |
| 8 | Shieldex C303⁵⁶ | 7.25 | | | | |
| 9 | Hecuophos ZP-10⁵⁷ | 4.32 | | | | |
| 7 | Example 53 Particles | - | 11.80 | - | | |
| | Example 54 Particles | - | - | 12.32 | | |
| | PPL022405 Ca Silicate | - | - | - | 10.98 | |
| | PPL051005 Y/Zn Silicate | - | - | - | - | 11.12 |
| 8 | PPG Polyester Resin⁵⁰ | 30.84 | 26.93 | 26.77 | 25.18 | 25.51 |
| 9 | Cymel 1123⁵⁸ | 5.13 | 4.48 | 4.45 | 4.19 | 4.24 |
| 10 | Solvesso 100⁵² | 5.34 | 15.64 | 15.55 | 21.19 | 20.17 |
| 11 | N-Butanol⁵⁹ | 0.94 | 0.82 | 0.82 | 0.77 | 0.78 |
| 12 | CYCAT 4040⁶⁰ | 0.16 | 0.14 | 0.14 | 0.13 | 0.13 |

| | | | | | | |
|---|---|---|---|---|---|---|
| ⁵⁰ Polyester resin prepared by adding Charge #1 (827.6 grams 2-methyl 1,3-propanediol, 47.3 grams trimethylol propane, 201.5 grams adipic acid, 663.0 grams isophthalic acid, and 591.0 grams phthalic anhydride) to a round-bottomed, 4-necked flask equipped with a motor driven stainless steel stir blade, a packed column connected to a water cooled condenser and a heating mantle with a thermometer connected through a temperature feed-back control device. The reaction mixture was heated to 120°C in a nitrogen atmosphere. All components were melted when the reaction mixture reached 120°C and the reaction was then heated to 170°C at which temperature the water generated by the esterification reaction began to be collected. The reaction temperature was maintained at 170°C until the distillation of water began to significantly slow, at which point the reaction temperature was increased by 10°C. This stepwise temperature increase was repeated until the reaction temperature reached 240°C. When the distillation of water at 240°C stopped, the reaction mixture was cooled to 190°C, the packed column replaced with a Dean-Stark and a nitrogen sparge was started. Charge #2 (100.0 grams Solvesso 100 and 2.5 grams titanium (IV) tetrabutoxide) was added and the reaction was heated to reflux (∼220°C) with continuous removal of the water collected in the Dean-Stark trap. The reaction mixture was held at reflux until the measured acid value was less than 8.0 mg KOH/gram. The resin was cooled, thinned with Charge #3 (1000.0 grams Solvesso 110), discharged and analyzed. The determined acid value was 5.9 mg KOH/gram, and the determined hydroxy value of 13.8 mg KOH/gram. The determined non-volatile content of the resin was 64.1% as measured by weight loss of a sample heated to 110°C for 1 hour. Analysis of the polymer by GPC (using linear polystyrene standards) showed the polymer to have an M_{w} value of 17,788, Mₙ value of 3,958, and an M_{w}/Mₙ value of 4.5. ⁵¹ Phosphatized epoxy resin prepared by dissolving 83 parts by weight of EPON 828 epoxy resin (a polyglycidyl ether of bisphenol A, commercially available from Resolution Performance Products) in 20 parts by weight 2-butoxyethanol. The epoxy resin solution was subsequently added to a mixture of 17 parts by weight of phosphoric acid and 25 parts by weight 2-butoxyethanol under nitrogen atmosphere. The blend was agitated for about 1.5 hours at a temperature of about 115 °C to form a phosphatized epoxy resin. The resulting resin was further diluted with 2-butoxyethanol to produce a composition which was about 55 percent by weight solids. ⁵² Commercially available from Exxon. ⁵³ Commercially available from Dow Chemical. ⁵⁴ Commercially available from DuPont. ⁵⁵ Commercially available from Engelhard Corp. ⁵⁶ Commercially available from Grace. ⁵⁷ Commercially available from Heubach. ⁵⁸ Commercially available from Cytec. ⁵⁹ Commercially available from Exxon. ⁶⁰ Commercially available from King Industries. | | | | | | |

**TABLE 107**

| Component No. | Material | Example 30A | Example 30B | Example 30C |
|---|---|---|---|---|
| 1 | PPG Polyester Resin⁵⁰ | 6.87 | 6.23 | 6.65 |
| 2 | Phosphatized Epoxy⁵¹ | 2.23 | 2.19 | 2.34 |
| 3 | Solvesso 100⁵² | 8.93 | 8..09 | 8.64 |
| 4 | Butyl Cellosolve⁵³ | 8.58 | 8.09 | 8.64 |
| 5 | Ti-Pure R960⁵⁴ | 6.39 | 5.98 | 6.38 |
| 6 | ASP-200 Clay⁵⁵ | 9.46 | 8.98 | 9.52 |
| 8 | Shieldex C303⁵⁶ | - | - | - |
| 9 | Hecuophos ZP-10⁵⁷ | - | - | - |
| 7 | PPL031405 Mg silicate | 12.24 | - | - |
| | PPL032905 Tin Silicate | - | 11.54 | |
| | PPL032805 Tin/Tin oxide | - | - | 12.33 |
| 8 | PPG Polyester Resin⁵⁰ | 29.08 | 26.48 | 28.27 |
| 9 | Cymel 1123⁵⁸ | 4.67. | 4.41 | 4.70 |
| 10 | Solvesso 100⁵² | 11.44 | 17.12 | 11.50 |
| 11 | N-Butanol⁵⁹ | 0.86 | 0.81 | 0.86 |
| 12 | CYCAT 4040⁶⁰ | 0.14 | 0.13 | 0.14 |

### Test Substrate Preparation

The primer compositions of Tables 106 and 107 were applied over G90 HDG steel pretreated with Bonderite® 1455 (commercially available from Henkel Surface Technologies) using a wire wound drawdown bar. Each primer composition was applied at approximately 0.2 mils dry film thickness and cured in a gas-fired oven for 30 seconds at 450°F peak metal temperature. Subsequently, a coil topcoat (Durastar™ HP 9000 commercially available from PPG Industries) was applied over the primer with a wire wound drawdown bar at approximately 0.75 mils dry film thickness and cured in a gas fired oven for 30 seconds at 450°F peak metal temperature.

### Salt Spray Results

Salt spray panels were prepared by cutting a panel to approximately 4 inches wide and 5 inches long. The left and right edges were cut down with a metal shear. The face of the panels were scribed in the middle with a vertical and horizontal scribe approximately 1.5 inches long and separated by approximately 0.5 inches. This is achieved with a tungsten tip tool and extends down just through the organic coating.

Salt spray resistance was tested as described in ASTM B117. Panels were removed from salt spray testing after 500 hours. Immediately after salt spray the panels were washed with warm water, scribes and cut edges were scraped with a wooden spatula to remove salt build-up and then dried with a towel. After which panels were taped with Scotch 610 tape to remove blistered coating.

Panels were evaluated for face blistering, cut edge creep, and scribe creep. The cut edge values were reported as an average of the maximum creep on the left and right cut edges in millimeters. The scribe creep values were reported as an average of the maximum creep (from scribe to creep) on the vertical and horizontal scribes in millimeters. Results are illustrated in Table 108 and 109, with lower value indicated better corrosion resistance results.

**TABLE 108**

| G90 HDG Steel Substrate | Example 29A | Example 29B | Example 29C | Example 29D | Example 29E |
|---|---|---|---|---|---|
| Face Blistering | None | None | None | None | None |
| Cut Edge | 5.5 | 3.5 | 5 | 5 | 3.5 |
| Scribe | 0 | 0.5 | 0.5 | 1.0 | 0 |

**TABLE 109**

| G90 HDG Steel Substrate | Example 30A | Example 30B | Example 30C |
|---|---|---|---|
| Face Blistering | None | None | None |
| Cut Edge | 3.5 | 6 | 5 |
| Scribe | 0 | 1.25 | 1.5 |

It will be readily appreciated by those skilled in the art that modifications may be made to the invention without departing from the concepts disclosed in the foregoing description. Such modifications are to be considered as included within the following claims unless the claims, by their language, expressly state otherwise. Accordingly, the particular embodiments described in detail herein are illustrative only and are not limiting to the scope of the invention which is to be given the full breadth of the appended claims.

## Claims

1. A coating composition comprising:
(1) a film-forming resin for use in automotive OEM coating compositions, automotive refinish coating compositions, industrial coating compositions, architectural coating compositions, coil coating compositions, and aerospace coating compositions;
(2) an adhesion promoting component, wherein the adhesion promoting component comprises:
(a) phosphatized epoxy resin or
(b) metal phosphates selected from zinc phosphate, iron phosphate, manganese phosphate, calcium phosphate, magnesium phosphate, cobalt phosphate, zinc-iron phosphate, zinc-manganese phosphate and zinc-calcium phosphate or
(c) organophosphates or
(d) organophosphonates or
(e) a free acid selected from tannic acid, gallic acid, phosphoric acid, phosphorous acid, malonic acid, citric acid, an ester or amide derivative thereof, a metal complex thereof, or a mixture thereof; or
mixtures of (b), (c), or (d) with (e); and
(3) corrosion resisting particles in an amount of 3 to 50 % by volume based on the total volume of the coating composition comprising a plurality of inorganic oxides and having a calculated equivalent spherical diameter of no more than 200 nanometers determined from the B.E.T. specific surface area measured by nitrogen adsorption according to the ASTMD 3663-78 standard according to the following equation: $diameter \left(nanometers\right) = 6000 / \left[BET\left({m}^{2}/g\right)*ρ\left(grams/{cm}^{3}\right)\right]$
wherein the corrosion resisting particles are selected from particles comprising:
(i) 10 to 25 percent by weight zinc oxide, 0.5 to 25 percent by weight cerium oxide, and 50 to 89.5 percent by weight silica;
(ii) 10 to 25 percent by weight zinc oxide, 0.5 to 25 percent by weight calcium oxide, and 50 to 89.5 percent by weight silica;
(iii) 10 to 25 percent by weight zinc oxide, 0.5 to 25 percent by weight yttrium oxide, and 50 to 89.5 percent by weight silica;
(iv) 10 to 25 percent by weight zinc oxide, 0.5 to 50 percent by weight phosphorous oxide, and 25 to 89.5 percent by weight silica;
(v) 10 to 25 percent by weight zinc oxide, 0.5 to 50 percent by weight boron oxide, and 25 to 89.5 percent by weight silica;
(vi) 10 to 25 percent by weight zinc oxide, 0.5 to 50 percent by weight molybdenum oxide, and 25 to 89.5 percent by weight silica;
(vii) 0.5 to 25 percent by weight cerium oxide, 0.5 to 50'percent by weight boron oxide, and 25 to 99 percent by weight silica;
(viii) 0.5 to 25 percent by weight cerium oxide, 0.5 to 50 percent by weight aluminum oxide, and 25 to 99 percent by weight silica;
(ix) 0.5 to 25 percent by weight cerium oxide, 0.5 to 25 percent by weight zinc oxide, 0.5 to 25 percent by weight boron oxide, and 25 to 98.5 percent by weight silica;
(x) 0.5 to 25 percent by weight yttrium oxide, 0.5 to 25 percent by weight phosphorous oxide, 0.5 to 25 percent by weight zinc oxide, and 25 to 98.5 percent by weight silica;
(xi) 0.5 to 5 percent by weight yttrium oxide, 0.5 to 5 percent by weight molybdenum oxide, 0.5 to 25 percent by weight zinc oxide, 0.5 to 5 percent by weight cerium oxide and 60 to 98 percent by weight silica; and mixtures thereof,
wherein the percent by weights are based on the total weight of the particles.

2. The coating composition of claim 1, wherein the corrosion resisting particles comprise oxides of cerium, zinc, and silicon.

3. The coating composition of claim 1, wherein the composition is completely free of or comprises less than 2 percent by weight, such as less than 0.05 percent by weight of chromium containing material, based on the total weight of the composition.

4. The coating composition of claim 1, wherein the corrosion resisting particles are completely free of or comprise less than 1 percent by weight, such as less than 0.05 percent by weight of zirconium oxide, based on the total weight of the particle.

5. The coating composition of claim 1, wherein the film-forming resin comprises a polyvinyl polymer.

6. The coating composition of claim 5, wherein the polyvinyl polymer comprises a polyvinyl butyral resin.

7. The coating composition of claim 1, further comprising conventional non-chrome corrosion resisting pigment particles selected from iron phosphate, zinc phosphate, calcium ion-exchanged silica, colloidal silica, synthetic amorphous silica, and molybdates, such as calcium molybdate, zinc molybdate, barium molybdate, strontium molybdate, or a mixture thereof.

8. The coating composition of claim 1, further comprising an alkoxysilane and a phenolic resin.

9. A multi-component composite coating comprising at least one coating layer deposited from the coating composition of claim 1.

10. A metal substrate at least partially coated with the coating composition of claim 1.

11. A method for enhancing the corrosion resistance of a metal substrate, comprising coating at least a portion of the substrate with the coating composition of claim 1.

12. A method of replacing a conventional chrome-containing corrosion-resistant composition, comprising providing the composition of claim 1.

## Patentansprüche

1. Beschichtungszusammensetzung enthaltend:
(1) ein filmbildendes Harz zur Verwendung in Automobilserienlacken, Automobilreparaturlacken, industriellen Beschichtungszusammensetzungen, Beschichtungszusammensetzungen für Gebäude, Coil-Coating-Beschichtungszusammensetzungen und Beschichtungen für die Luft- und Raumfahrt;
(2) eine Haftvermittlerkomponente, wobei die Haftvermittlerkomponente enthält:
(a) phosphatiertes Epoxyharz oder
(b) Metallphosphate ausgewählt aus Zinkphosphat, Eisenphosphat, Manganphosphat, Calciumphosphat, Magnesiumphosphat, Cobaltphosphat, Zinkeisenphosphat, Zinkmanganphosphat und Zinkcalciumphosphat oder
(c) Organophosphate oder
(d) Organophosphonate oder
(e) eine freie Säure ausgewählt aus Gerbsäure, Gallussäure, Phosphorsäure, Phosphorigsäure, Malonsäure, Zitronensäure, ein Ester- oder Amidderivat davon, einen Metallkomplex davon oder eine Mischung davon oder
Mischungen von (b), (c) oder (d) mit (e); und
(3) korrosionsbeständige Teilchen in einer Menge von 3 bis 50 Vol.-%, bezogen auf das Gesamtvolumen der Beschichtungszusammensetzung, die eine Vielzahl von anorganischen Oxiden enthalten und einen berechneten äquivalenten Kugeldurchmesser von nicht mehr als 200 nm aufweisen, bestimmt aus der spezifischen B.E.T.-Oberfläche, gemessen durch Stickstoffadsorption gemäß ASTMD 3663-78 Standard gemäß der folgenden Gleichung: $Durchnesser \left(nm\right) = 6000 / \left[BET\left({m}^{2}/g\right)*ρ\left(grams/{cm}^{3}\right)\right]$
wobei die korrosionsbeständigen Teilchen ausgewählt sind aus Teilchen enthaltend:
(i) 10 bis 25 Gew.-% Zinkoxid, 0,5 bis 25 Gew.-% Ceroxid und 50 bis 89,5 Gew.-% Siliciumdioxid;
(ii) 10 bis 25 Gew.-% Zinkoxid, 0,5 bis 25 Gew.-% Calciumoxid und 50 bis 89,5 Gew.-% Siliciumdioxid;
(iii) 10 bis 25 Gew.-% Zinkoxid, 0,5 bis 25 Gew.-% Yttriumoxid und 50 bis 89,5 Gew.-% Siliciumdioxid;
(iv) 10 bis 25 Gew.-% Zinkoxid, 0,5 bis 50 Gew.-% Phosphoroxid und 25 bis 89,5 Gew.-% Siliciumdioxid;
(v) 10 bis 25 Gew.-% Zinkoxid, 0,5 bis 50 Gew.-% Boroxid und 25 bis 89,5 Gew.-% Siliciumdioxid;
(vi) 10 bis 25 Gew.-% Zinkoxid, 0,5 bis 50 Gew.-% Molybdänoxid und 25 bis 89,5 Gew.-% Siliciumdioxid;
(vii) 0,5 bis 25 Gew.-% Ceroxid, 0,5 bis 50 Gew.-% Boroxid und 25 bis 99 Gew.-% Siliciumdioxid;
(viii) 0,5 bis 25 Gew.-% Ceroxid, 0,5 bis 50 Gew.-% Aluminiumoxid 25 bis 99 Gew.-% Siliciumdioxid;
(ix) 0,5 bis 25 Gew.-% Ceroxid, 0,5 bis 25 Gew.-% Zinkoxid, 0,5 bis 25 Gew.-% Boroxid und 25 bis 98,5 Gew.-% Siliciumdioxid;
(x) 0,5 bis 25 Gew.-% Yttriumoxid, 0,5 bis 25 Gew.-% Phosphoroxid, 0,5 bis 25 Gew.-% Zinkoxid und 25 bis 98,5 Gew.-% Siliciumdioxid;
(xi) 0,5 bis 5 Gew.-% Yttriumoxid, 0,5 bis 5 Gew.-% Molybdänoxid, 0,5 bis 25 Gew.-% Zinkoxid, 0,5 bis 5 Gew.-% Ceroxid und 60 bis 98 Gew.-% Siliciumdioxid;
und Mischungen davon,
wobei die Gewichtsprozentangaben auf das Gesamtgewicht der Teilchen bezogen sind.

2. Beschichtungszusammensetzung nach Anspruch 1, wobei die korrosionsbeständigen Teilchen Oxide von Cer, Zink und Silicium enthalten.

3. Beschichtungszusammensetzung nach Anspruch 1, wobei die Zusammensetzung vollständig frei von chromhaltigem Material ist oder weniger als 2 Gew.-%, wie etwa weniger als 0,05 Gew.-%, bezogen auf das Gesamtgewicht der Zusammensetzung, enthält.

4. Beschichtungszusammensetzung nach Anspruch 1, wobei die korrosionsbeständigen Teilchen vollständig frei von Zirconiumoxid sind oder weniger als 1 Gew.-%, wie etwa weniger als 0,05 Gew.-%, bezogen auf das Gesamtgewicht des Teilchens, enthalten.

5. Beschichtungszusammensetzung nach Anspruch 1, wobei das filmbildende Harz ein Polyvinylpolymer enthält.

6. Beschichtungszusammensetzung nach Anspruch 5, wobei das Polyvinylpolymer ein Polyvinylbutyralharz enthält.

7. Beschichtungszusammensetzung nach Anspruch 1, die ferner herkömmliche chromfreie korrosionsbeständige Pigmentteilchen enthält, ausgewählt aus Eisenphosphat, Zinkphosphat, calciumionenausgetauschtem Siliciumdioxid, kolloidaler Kieselsäure, synthetischem amorphen Siliciumdioxid und Molybdaten, wie etwa Calciummolybdat, Zinkmolybdat, Bariummolybdat, Strontiummolybdat, oder einer Mischung davon.

8. Beschichtungszusammensetzung nach Anspruch 1, die ferner ein Alkoxysilan und ein Phenolharz enthält.

9. Mehrkomponentenverbundbeschichtung, die mindestens eine Beschichtungslage enthält, die aus der Beschichtungszusammensetzung nach Anspruch 1 abgeschieden ist.

10. Metallsubstrat, das zumindest teilweise mit der Beschichtungszusammensetzung nach Anspruch 1 beschichtet ist.

11. Verfahren zur Steigerung der Korrosionsbeständigkeit eines Metallsubstrats, umfassend Beschichten mindestens eines Teils des Substrats mit der Beschichtungszusammensetzung nach Anspruch 1.

12. Verfahren zum Ersetzen einer herkömmlichen chromhaltigen korrosionsbeständigen Beschichtung, umfassend Bereitstellen der Zusammensetzung nach Anspruch 1.

## Revendications

1. Composition de revêtement, comprenant :
(1) une résine filmogène destinée à être utilisée dans des compositions de revêtement automobile OEM, des compositions de revêtement automobile de retouche, des compositions de revêtement industriel, des compositions de revêtement architectural, des compositions de revêtement en continu et des compositions de revêtement aérospatial ;
(2) un composant favorisant l'adhérence, dans lequel le composant favorisant l'adhérence comprend :
(a) une résine époxy phosphatée ou
(b) des phosphates métalliques choisis parmi le phosphate de zinc, le phosphate de fer, le phosphate de manganèse, le phosphate de calcium, le phosphate de magnésium, le phosphate de cobalt, le phosphate de zinc et de fer, le phosphate de zinc et de manganèse et le phosphate de zinc et de calcium, ou
(c) des organophosphates, ou
(d) des organophosphonates, ou
(e) un acide libre choisi parmi l'acide tannique, l'acide gallique, l'acide phosphorique, l'acide phosphoreux, l'acide malonique, l'acide citrique, un dérivé ester ou amide de ceux-ci, un complexe métallique de ceux-ci, ou un mélange de ceux-ci ; ou
des mélanges de (b), (c) ou (d) avec (e) ; et
(3) des particules résistant à la corrosion, en une quantité de 3 % à 50 % en volume sur la base du volume total de la composition de revêtement, comprenant une pluralité d'oxydes inorganiques et ayant un diamètre sphérique équivalent calculé d' au plus 200 nanomètres, déterminé à partir de la surface spécifique BET mesurée par adsorption d'azote selon la norme ASTMD 3663-78 conformément à l'équation suivante : $diamètrer \left(nanomètre\right) = 6000 / \left[BET\left({m}^{2}/g\right)*ρ\left(gramme/{cm}^{3}\right)\right]$
dans laquelle les particules résistant à la corrosion sont choisies parmi les particules comprenant :
(i) 10 à 25 pour cent en poids d'oxyde de zinc, 0,5 à 25 pour cent en poids d'oxyde de cérium et 50 à 89,5 pour cent en poids de silice ;
(ii) 10 à 25 pour cent en poids d'oxyde de zinc, 0,5 à 25 pour cent en poids d'oxyde de calcium et 50 à 89,5 pour cent en poids de silice ;
(iii) 10 à 25 pour cent en poids d'oxyde de zinc, 0,5 à 25 pour cent en poids d'oxyde d'yttrium et 50 à 89,5 pour cent en poids de silice ;
(iv) 10 à 25 pour cent en poids d'oxyde de zinc, 0,5 à 50 pour cent en poids d'oxyde phosphoreux et 25 à 89,5 pour cent en poids de silice ;
(v) 10 à 25 pour cent en poids d'oxyde de zinc, 0,5 à 50 pour cent en poids d'oxyde de bore et 25 à 89,5 pour cent en poids de silice ;
(vi) 10 à 25 pour cent en poids d'oxyde de zinc, 0,5 à 50 pour cent en poids d'oxyde de molybdène et 25 à 89,5 pour cent en poids de silice ;
(vii) 0,5 à 25 pour cent en poids d'oxyde de cérium, 0,5 à 50 pour cent en poids d'oxyde de bore et 25 à 99 pour cent en poids de silice ;
(viii) 0,5 à 25 pour cent en poids d'oxyde de cérium, 0,5 à 50 pour cent en poids d'oxyde d'aluminium et 25 à 99 pour cent en poids de silice ;
(ix) 0,5 à 25 pour cent en poids d'oxyde de cérium, 0,5 à 25 pour cent en poids d'oxyde de zinc, 0,5 à 25 pour cent en poids d'oxyde de bore et 25 à 98,5 pour cent en poids de silice ;
(x) 0,5 à 25 pour cent en poids d'oxyde d'yttrium, 0,5 à 25 pour cent en poids d'oxyde phosphoreux, 0,5 à 25 pour cent en poids d'oxyde de zinc et 25 à 98,5 pour cent en poids de silice ;
(xi) 0,5 à 5 pour cent en poids d'oxyde d'yttrium, 0,5 à 5 pour cent en poids d'oxyde de molybdène, 0,5 à 25 pour cent en poids d'oxyde de zinc, 0,5 à 5 pour cent en poids d'oxyde de cérium et 60 à 98 pour cent en poids de silice ;
et des mélanges de celles-ci,
dans laquelle les pourcentages en poids sont basés sur le poids total des particules.

2. Composition de revêtement selon la revendication 1, dans laquelle les particules résistant à la corrosion comprennent des oxydes de cérium, de zinc et de silicium.

3. Composition de revêtement selon la revendication 1, dans laquelle la composition est complètement exempte de substance contenant du chrome ou comprend moins de 2 pour cent en poids, comme moins de 0,05 pour cent en poids de substance contenant du chrome, sur la base du poids total de la composition.

4. Composition de revêtement selon la revendication 1, dans laquelle les particules résistant à la corrosion sont complètement exemptes d'oxyde de zirconium ou comprennent moins de 1 pour cent en poids, comme moins de 0,05 pour cent en poids d'oxyde de zirconium, sur la base du poids total de la particule.

5. Composition de revêtement selon la revendication 1, dans laquelle la résine filmogène comprend un polymère de polyvinyle.

6. Composition de revêtement selon la revendication 5, dans laquelle le polymère de polyvinyle comprend une résine de polyvinylbutyral.

7. Composition de revêtement selon la revendication 1, comprenant en outre des particules classiques de pigment résistant à la corrosion et ne contenant pas de chrome, choisies parmi le phosphate de fer, le phosphate de zinc, la silice à échange d'ion calcium, la silice colloïdale, la silice amorphe synthétique et les molybdates, comme le molybdate de calcium, le molybdate de zinc, le molybdate de baryum, le molybdate de strontium, ou un mélange de ceux-ci.

8. Composition de revêtement selon la revendication 1, comprenant en outre un alcoxysilane et une résine phénolique.

9. Revêtement composite à multicomposant, comprenant au moins une couche de revêtement déposée à partir de la composition de revêtement selon la revendication 1.

10. Substrat métallique, revêtu au moins partiellement avec la composition de revêtement selon la revendication 1.

11. Procédé d'amélioration de la résistance à la corrosion d'un substrat métallique, comprenant le revêtement d'au moins une partie du substrat avec la composition de revêtement selon la revendication 1.

12. Procédé de remplacement d'une composition classique résistant à la corrosion et contenant du chrome, comprenant la fourniture de la composition selon la revendication 1.
